# EUROPÄISCHE PATENTSCHRIFT

(11) **EP 3 281 071 B1**
(45) Veröffentlichungstag und Bekanntmachung des Hinweises auf die Patenterteilung: **03.07.2019**
(21) Anmeldenummer: 16716024.1
(22) Anmeldetag: 08.04.2016
(51) Int. Cl.: G05B 19/408

(54) **ÜBERSETZUNGSMODUL, VERARBEITUNGSMODUL UND STEUERUNGSSYSTEM**
TRANSLATION MODULE, PROCESSING MODULE AND CONTROL SYSTEM
MODULE DE TRADUCTION, MODULE DE TRAITEMENT ET SYSTÈME DE COMMANDE

(30) Priorität: 09.04.2015 DE 102015105436
(43) Veröffentlichungstag der Anmeldung: 14.02.2018
(73) Patentinhaber: Beckhoff Automation GmbH, 33415 Verl (DE)
(72) Erfinder: JANSSEN, Dirk, 33415 Verl (DE); BERNZEN, Klaus, 33332 Gütersloh (DE); DREESEN, Ralf, 33334 Gütersloh (DE)
(74) Vertreter: Patentanwaltskanzlei WILHELM & BECK
(86) Internationale Anmeldenummer: PCT/EP2016/057747
(87) Internationale Veröffentlichungsnummer: WO 2016/162477

(56) Entgegenhaltungen:
- FR-A1- 2 826 746
- US-A- 4 797 811
- US-A1- 2007 005 178

## Beschreibung

Die vorliegende Erfindung betrifft ein Übersetzungsmodul für eine Maschinensteuerung, ein Verarbeitungsmodul für eine Maschinensteuerung, sowie ein Steuerungssystem zur Steuerung einer Maschine.

Steuerungssysteme mit Maschinensteuerungen werden unter anderem in der Automatisierungstechnik eingesetzt. Für die Bewegungssteuerung (engl. *motion control*) werden dabei vor allem Maschinensteuerungen implementiert, welche als numerische Steuerungen (engl. *numerical control*, NC) oder computergestützte numerische Steuerungen (engl. *computerized numerical control*, CNC) ausgebildet sind. Eine als NC- oder CNC-Steuerung ausgebildete Maschinensteuerung liest typischerweise Informationen über die auszuführenden Bewegungen der Maschine aus einem Steuerprogramm ein und erzeugt aus diesen Informationen Sollwerte für Lageregler der Maschine, wobei die Lageregler Position und Bewegungen der Maschinenkomponenten steuern. Typischerweise erfolgt die Erzeugung und Ausgabe der Sollwerte zyklisch mit einer festen Zykluszeit.

Eine Programmierung von NC-Steuerungen erfolgt typischerweise mittels einer imperativen Programmiersprache, wobei ein geladenes Steuerprogramm nach dem Start zur Laufzeit einmalig ausgeführt wird. Eine verbreitete Programmiersprache zur Programmierung von als NC-Steuerungen ausgebildeten Maschinensteuerungen ist die Sprache *G-Code,* wie sie in der Industrie-Norm ISO 6983 beschrieben wird. *G-Code* ermöglicht es, eine von der Maschine auszuführende Bewegung mittels Geometrieelementen wie Linienzügen oder Kreissegmenten zu definieren. Ein Nachteil an standardkonformem *G-Code* ist allerdings dessen beschränkter Sprachumfang bezüglich verfügbarer Geometrieelemente und das weitgehende Fehlen von Hochsprachelementen. So können benannte Variablen, fortschrittliche Kontrollflussanweisungen wie mehrfache Fallunterscheidungen, sowie benannte und/oder parametrierte Funktionen nicht oder nur eingeschränkt verwendet werden. Native und benutzerdefinierte Datentypen, wie mehrdimensionale Arrays, Zeiger, Strukturen, Aufzählungen und Zeichenketten sind nicht verfügbar. Das Programmierparadigma der objektorientierten Programmierung kann nicht angewendet werden.

Neben NC-Steuerungen für die Lageregelung werden in der Automatisierungstechnik auch speicherprogrammierbare Steuerungen (SPS) eingesetzt. Speicherprogrammierbare Steuerungen kommen unter anderem in der Prozessleittechnik zum Einsatz, etwa zur Steuerung von Fertigungsstraßen oder chemischen Anlagen. Als speicherprogrammierbare Steuerungen ausgebildete Maschinensteuerungen steuern oder regeln Maschinen und Anlagen, indem Aktoren wie Relais, Antriebe oder Ventile in Abhängigkeit von Messwerten, die von an der Maschine oder der Anlage angeordneten Sensoren erfasst wurden, gesteuert werden.

Speicherprogrammierbare Steuerungen arbeiten in der Regel ereignisgesteuert und führen ein Steuerprogramm periodisch aus. Innerhalb eines Ausführungszyklus werden dabei die Signale der Sensoren eingelesen und auf Grundlage der Signale Ausgabewerte für die Aktoren berechnet und ausgegeben. Programmiersprachen für als speicherprogrammierbare Steuerungen ausgebildete Maschinensteuerungen sind unter anderem in der Industrie-Norm IEC 61131-3 normiert. Eine dieser Programmiersprachen ist *Strukturierter Text. Strukturierter Text* ist textbasiert und umfasst unter anderem an Hochsprachen angelehnte Strukturierungsmöglichkeiten, wie etwa Kontrollflussanweisungen.

Die Druckschrift US 4 797 811 A offenbart eine Maschinensteuerung, wobei ein Steuerprogramm zwei Programmiersprachen umfasst.

Die SPS-Sprachen der IEC 61131-3 eignen sich nur bedingt für die Bewegungssteuerung mit NC-Steuerungen. Werden etwa NC-Befehle in der SPS-Sprache mittels Funktionsbausteinen programmiert, hat dies den Nachteil, dass das zyklische Durchlaufen des Steuerprogramms und die wiederholte Auswertung der Funktionsbausteine ressourcenaufwendig sind und die Programmausführung verlangsamen. Ein nebenläufiges Ausführen von NC-Steuerung und speicherprogrammierbarer Steuerung, bei dem Berechnungen von der NC-Steuerung in die speicherprogrammierbare Steuerung ausgelagert werden, hat den Nachteil, dass die hierfür benötigte Kommunikation zwischen NC-Steuerung und speicherprogrammierbarer Steuerung insgesamt die Programmausführung verlangsamt und den Programmieraufwand erhöht.

Aufgabe der vorliegenden Erfindung ist es, eine verbesserte Steuerung von Maschinen zu ermöglichen. Insbesondere soll die Erfindung eine Maschinensteuerung ermöglichen, welche flexibel, einfach und effizient programmiert werden kann und zugleich eine schnelle und ressourcenschonende Ausführung von Steuerprogrammen erlaubt.

Diese Aufgabe wird durch ein Übersetzungsmodul für eine Maschinensteuerung gemäß Anspruch 1, sowie ein Steuerungssystem zur Steuerung einer Maschine gemäß Anspruch 11 gelöst. Weitere vorteilhafte Ausführungen sind jeweils in den abhängigen Ansprüchen angegeben.

Ein Übersetzungsmodul für eine Maschinensteuerung ist dazu ausgebildet, einen Eingangsprogrammcode eines Steuerprogramms zu verarbeiten und aus diesem einen einheitlichen Zwischencode mit Arbeitsanweisungen zur Ausführung durch die Maschinensteuerung zu erzeugen. Der Eingangsprogrammcode umfasst dabei eine erste Programmcodekomponente und eine zweite Programmcodekomponente, wobei die erste Programmcodekomponente in einer ersten Programmiersprache und die zweite Programmcodekomponente in einer zweiten Programmiersprache abgefasst ist. Die Arbeitsanweisungen des Zwischencodes umfassen eine erste Arbeitsanweisung und eine zweite Arbeitsanweisung, wobei die erste Arbeitsanweisung auf Grundlage der ersten Programmcodekomponente und die zweite Arbeitsanweisung auf Grundlage der zweiten Programmcodekomponente erzeugt wird.

Ein derartiges Übersetzermodul erlaubt es vorteilhafterweise, Sprachelemente der ersten Programmiersprache und der zweiten Programmiersprache bei der Erstellung des Steuerprogramms zu kombinieren. Ein Programmierer, der beide Programmiersprachen beherrscht, kann dadurch auf einfache Weise Sprachelemente oder -strukturen, welche in einer der Programmiersprachen nicht vorhanden sind, durch solche der anderen Programmiersprache ausdrücken. Sprachelemente einer Programmiersprache sind alle sinngebenden Einheiten eines in der Programmiersprache abgefassten Programmcodes, beispielsweise Anweisungen, Deklarationen, Zuweisungen, Kontrollflussanweisungen, Ausdrücke, Variablen, Schlüsselworte, Zahlen oder Strings. Den Sprachelementen können Symbole der Grammatik der betreffenden Programmiersprache zugeordnet werden.

Die in der ersten Programmiersprache verfasste erste Programmcodekomponente umfasst Zeichensequenzen, welche jeweils Symbole der ersten Programmiersprache repräsentieren, und die in der zweiten Programmiersprache verfasste zweite Programmcodekomponente umfasst Zeichensequenzen, welche jeweils Symbole der zweiten Programmiersprache repräsentieren. Diese Symbole können Nichtterminalsymbole wie Anweisungen, Ausdrücke, Zuweisungen, Deklarationen oder Kontrollflussanweisungen sein. Die Symbole können auch Terminalsymbole sein, etwa Literale, wie Zahlen oder Strings, Bezeichner, Schlüsselwörter oder Sonderzeichen. Terminalsymbole können auch als Grundsymbole der jeweiligen Programmiersprache bezeichnet werden.

Eine Zeichensequenz des Eingangsprogrammcodes repräsentiert ein Nichtterminalsymbol der ersten bzw. der zweiten Programmiersprache, wenn sich die Zeichensequenz bzw. eine durch die Zeichensequenz repräsentierte Folge von Grundsymbolen gemäß den Regeln der ersten bzw. der zweiten Programmiersprache aus dem Nichtterminalsymbol ableiten lässt. Lässt sich die Zeichensequenz aus dem Nichtterminalsymbol ableiten, so kann auch gesagt werden, dass die Zeichensequenz das Nichtterminalsymbol umfasst.

Die erste Programmcodekomponente und die zweite Programmcodekomponente können ineinander verschachtelt sein. Dies bedeutet, dass in dem Eingangsprogrammcode auf eine Zeichensequenz der ersten Programmcodekomponente eine Zeichensequenz der zweiten Programmcodekomponente und auf die Zeichensequenz der zweiten Programmcodekomponente wiederum eine Zeichensequenz der ersten Programmcodekomponente folgen kann. Ebenso kann der Eingangsprogrammcode weitere Programmcodekomponenten umfassen, welche in der ersten Programmiersprache oder in der zweiten Programmiersprache abgefasst sind.

Die erste Programmiersprache kann beispielsweise eine imperative Programmierung der Maschinensteuerung ermöglichen und dazu ausgelegt sein, dass ein Steuerungsprogramm zur Ausführungszeit einmalig ausgeführt wird. Bei der ersten Programmiersprache kann es sich beispielsweise um eine Programmiersprache handeln, welche für die Bewegungssteuerung optimiert ist, jedoch nur über einen begrenzten Sprachumfang bezüglich Kontrollflussanweisungen oder der Verwendung von Variablen oder Funktionen verfügt. Insbesondere kann es sich bei der ersten Programmiersprache um die Sprache *G-Code* handeln.

Bei der zweiten Programmiersprache kann es sich beispielsweise um eine Programmiersprache handeln, welche für die Verwendung in speicherprogrammierbaren Steuerungen optimiert ist. Die zweite Programmiersprache kann dabei Hochsprachelemente umfassen, welche beispielsweise die Verwendung von benannten Variablen, von benannten Funktionen mit formalen Parametern oder von Kontrollflussanweisungen ermöglichen. Insbesondere kann es sich bei der zweiten Programmiersprache um eine der SPS-Sprachen der Industrie-Norm IEC61131-3, etwa um die Sprache *Strukturierter Text,* handeln.

Der einheitliche Zwischencode basiert auf allen durch die erste Programmcodekomponente und die zweite Programmcodekomponente des Eingangsprogrammcodes ausgedrückten Steueranweisungen. Es werden also die beiden durch die erste Programmcodekomponente und die zweite Programmcodekomponente gebildeten Teile des Steuerprogramms in dem Zwischencode zusammengefasst. Der Zwischencode kann beispielsweise in einer für eine schnelle und effiziente Ausführung durch die Maschinensteuerung geeigneten, beispielsweise objektorientierten, Form vorliegen.

Die in der ersten Programmiersprache und die in der zweiten Programmiersprache verfassten ersten bzw. zweiten Programmcodekomponenten können als sequentiell auszuführende Arbeitsanweisungen in dem einheitlichen Zwischencode zusammengefasst werden. Dadurch wird vorteilhafterweise erreicht, dass in der ersten und der zweiten Programmcodekomponente codierte Steueranweisungen von der Maschinensteuerung in der korrekten Abarbeitungsreihenfolge abgearbeitet werden können. Ebenso wird ein vorteilhaft einfacher Datenaustausch zwischen Teilen des Steuerprogramms, welche durch die erste Programmcodekomponente gebildet werden, und Teilen des Steuerprogramms, welche durch die zweite Programmcodekomponente gebildet werden, ermöglicht.

Bei einer Ausführungsform des Übersetzungsmoduls umfasst das Übersetzungsmodul ein Zerlegungsmodul, welches dazu ausgebildet ist, die erste Programmcodekomponente und die zweite Programmcodekomponente aus dem Eingangsprogrammcode einzulesen und in Grundsymbole umzusetzen. Das Zerlegungsmodul ist dazu ausgebildet, einen ersten Zustand und einen zweiten Zustand einzunehmen. Dabei setzt das Zerlegungsmodul in dem ersten Zustand die erste Programmcodekomponente in Grundsymbole der ersten Programmiersprache um. Das Zerlegungsmodul setzt in dem zweiten Zustand die zweite Programmcodekomponente in Grundsymbole der zweiten Programmiersprache um.

Ein derartiges Zerlegungsmodul für das Einlesen des Eingangsprogrammcodes ermöglicht es auf vorteilhaft einfache Weise, ein Übersetzungsmodul zu realisieren, welches einen Eingangsprogrammcode mit Programmcodekomponenten der ersten Programmiersprache und mit Programmcodekomponenten der zweiten Programmiersprache in einen einheitlichen Zwischencode umsetzt. Beispielsweise können mehrdeutige Zeichensequenzen existieren, welche sowohl in der ersten Programmiersprache, als auch in der zweiten Programmiersprache ein Grundsymbol repräsentieren bzw. darstellen, jedoch in den beiden Programmiersprachen jeweils unterschiedliche Bedeutungen haben, also in unterschiedliche Grundsymbole umzusetzen sind. Indem das Zerlegungsmodul bei der Umsetzung von Zeichensequenzen der ersten Programmcodekomponente und von Zeichensequenzen der zweiten Programmcodekomponente jeweils einen der beiden Zustände einnimmt und bei der Umsetzung je nach Zustand entweder Grundsymbole der ersten Programmiersprache oder Grundsymbole der zweiten Programmiersprache verwendet, kann vorteilhafterweise sichergestellt werden, dass solche mehrdeutigen Zeichensequenzen immer in Grundsymbole der jeweils verwendeten Programmiersprache umgesetzt werden.

Ein Zerlegungsmodul, welches dazu ausgebildet ist, bei der Umsetzung von Programmcodekomponenten eines Eingangsprogrammcodes in Grundsymbole den ersten und den zweiten Zustand einzunehmen kann beispielsweise als ein endlicher Automat ausgebildet sein. Neben dem ersten und dem zweiten Zustand kann noch eine endliche Anzahl von weiteren Zuständen des Zerlegungsmoduls existieren.

Bei einer Ausführungsform des Übersetzungsmoduls ist das Zerlegungsmodul dazu ausgebildet, bei einem Einlesen einer ersten Steuersequenz aus dem Eingangsprogrammcode einen Zustandsübergang aus dem ersten Zustand in den zweiten Zustand und bei einem Einlesen einer zweiten Steuersequenz aus dem Eingangsprogrammcode einen Zustandsübergang aus dem zweiten Zustand in den ersten Zustand auszuführen.

Die erste oder die zweite Steuersequenz können beispielsweise aus einem einzelnen Zeichen, beispielsweise einem Sonderzeichen, oder aus einer Zeichensequenz mit mehreren Zeichen bestehen. Die erste und die zweite Steuersequenz können aus unterschiedlichen oder den gleichen Zeichen oder Zeichensequenzen bestehen.

Die erste Steuersequenz kann aus einem Zeichen oder einer Zeichensequenz bestehen, die kein Grundsymbol der ersten Programmiersprache repräsentiert. Ebenso kann die zweite Steuersequenz aus einem Zeichen oder einer Zeichensequenz bestehen, die kein Grundsymbol der zweiten Programmiersprache repräsentiert. In diesen Fällen löst ein Einlesen der ersten oder der zweiten Steuersequenz durch das Zerlegungsmodul lediglich einen Zustandsübergang des Zerlegungsmoduls aus. Alternativ kann die erste Steuersequenz oder die zweite Steuersequenz auch ein Grundsymbol der ersten bzw. der zweiten Programmiersprache repräsentieren. Das Zerlegungsmodul erzeugt in diesen Fällen bei einem Einlesen der ersten oder zweiten Steuersequenz das repräsentierte Grundsymbol und führt einen Zustandsübergang aus.

Durch die Verwendung der ersten und der zweiten Steuersequenz können die erste Programmcodekomponente und die zweite Programmcodekomponente in dem Eingangsprogrammcode auf einfache Art und Weise voneinander abgegrenzt werden. Dies ermöglicht es, den Eingangsprogrammcode eindeutig in Grundsymbole der ersten und der zweiten Programmiersprache zu zerlegen und Konflikte aufgrund von mehrdeutigen Zeichensequenzen in dem Eingangsprogrammcode auszuschließen.

Bei einer Ausführungsform umfasst das Übersetzungsmodul ein Parsermodul, welches dazu ausgebildet ist, aus den Grundsymbolen einen einheitlichen Strukturbaum des Steuerprogramms zu erstellen, wobei das Parsermodul dazu ausgebildet ist, eine syntaktische Überprüfung des Eingangsprogrammcodes anhand einer Kombinierten Grammatik auszuführen. Dabei umfasst die Kombinierte Grammatik Regeln einer ersten Grammatik der ersten Programmiersprache und Regeln einer zweiten Grammatik der zweiten Programmiersprache.

Die von der Kombinierten Grammatik umfassten Regeln der ersten und zweiten Grammatik können beispielsweise vorgeben, auf welche Weise jeweils in der ersten bzw. in der zweiten Programmiersprache gültige Zeichensequenzen, die etwa Anweisungen, Ausdrücke, Zuweisungen, Schlüsselworte, beispielsweise von Kontrollflussanweisungen, oder Zahlen und Bezeichner repräsentieren, gebildet werden. Damit bilden diese in der ersten oder der zweiten Programmiersprache gültigen Zeichensequenzen auch wieder gültige Zeichensequenzen der Kombinierten Grammatik. Insofern definiert die Kombinierte Grammatik eine Programmiersprache, die eine Kombination aus der ersten und der zweiten Programmiersprache darstellt und daher auch als eine Kombinationssprache bezeichnet werden kann. Zusätzlich zu den Regeln der ersten Grammatik und den Regeln der zweiten Grammatik kann die Kombinierte Grammatik Regeln umfassen, nach welchen Symbole der ersten Programmiersprache mit Symbolen der zweiten Programmiersprache kombiniert werden können.

Durch die syntaktische Überprüfung des Eingangsprogrammcodes durch das Parsermodul kann der Eingangsprogrammcode vorteilhafterweise bereits beim Einlesen vollständig auf syntaktische Korrektheit überprüft werden. Vollständig bedeutet dabei insbesondere, dass sowohl Fehler bezüglich der ersten Grammatik, als auch Fehler bezüglich der zweiten Grammatik und gegebenenfalls auch Fehler, welche auf Abweichungen von Regeln zur Kombination der ersten und der zweiten Grammatik basieren, erkannt werden können. Die syntaktische Überprüfung durch das Parsermodul des Übersetzungsmoduls kann beispielsweise zur Ladezeit des Steuerprogramms ausgeführt werden. Hierdurch sind vorteilhafterweise Unterbrechungen des Steuerprogramms zur Ausführungszeit aufgrund syntaktisch fehlerhaften Eingangsprogrammcodes sicher ausgeschlossen.

Der einheitliche Strukturbaum umfasst dabei alle von dem Zerlegungsmodul aus dem Eingangsprogrammcode erzeugten Grundsymbole, sowie Nichtterminalsymbole der Kombinierten Grammatik. Die Nichtterminalsymbole werden dabei durch das Parsermodul aus der Folge von Grundsymbolen erzeugt. Umfassen die Regeln der Kombinierten Grammatik Regeln, nach welchen Symbole der ersten Programmiersprache mit Symbolen der zweiten Programmiersprache kombiniert werden können, so kann ein erster Knoten des Strukturbaumes, welcher einem Symbol der ersten Programmiersprache zugeordnet ist, als Kindknoten einen zweiten Knoten aufweisen, welcher einem Symbol der zweiten Programmiersprache zugeordnet ist. Ebenso kann ein einem Symbol der zweiten Programmiersprache zugeordneter Knoten des Strukturbaumes als Kindknoten einen einem Symbol der ersten Programmiersprache zugeordneten Knoten aufweisen. Der Strukturbaum kann also insbesondere einen Teilbaum umfassen, der einerseits Symbole der ersten Programmiersprache umfasst und der andererseits einen Teilbaum aus Symbolen der zweiten Programmiersprache enthält.

Bei einer Ausführungsform des Übersetzungsmoduls ist die erste Programmiersprache *G-Code* und/oder die zweite Programmiersprache ist *Strukturierter Text.* Die Sprache *G-Code* ist vorteilhafterweise besonders geeignet, Steuerprogramme für eine Maschinensteuerung zur Bewegungssteuerung zu verfassen. Der eingeschränkte Sprachumfang von *G-Code,* beispielsweise hinsichtlich Variablen, Datentypen, Funktionen und Kontrollflussanweisungen, kann bei der Abfassung des Eingangsprogrammcodes vorteilhafterweise dadurch ausgeglichen werden, dass für diese Elemente die entsprechenden Sprachelemente der Sprache *Strukturierter Text* verwendet werden. Da es sich bei beiden Sprachen um Programmiersprachen handelt, welche für die Programmierung von Maschinensteuerungen weit verbreitet sind, kann ein mit der Programmierung von Maschinensteuerungen vertrauter Programmierer vorteilhafterweise ohne großen Lern- und Einarbeitungsaufwand Steuerprogramme erstellen, welche Programmcodekomponenten bzw. Sprachelemente der Sprache *G-Code* und der Sprache *Strukturierter Text* kombinieren.

Bei einer Ausführungsform des Übersetzungsmoduls umfasst der Eingangsprogrammcode eine Folge von Anweisungen mit einer ersten Anweisung und einer zweiten Anweisung, wobei die erste Programmcodekomponente die erste Anweisung und die zweite Programmcodekomponente die zweite Anweisung umfasst und wobei die erste Anweisung aus einem G-Code-Satz und die zweite Anweisung aus einer ST-Anweisung besteht.

Die ST-Anweisung ist dabei in der Programmiersprache *Strukturierter Text*, der G-Code-Satz in der Programmiersprache G-*Code* abgefasst. Die ST-Anweisung kann nach den Regeln der Grammatik von *Strukturierter Text* beispielsweise ein Sprachelement wie eine Zuweisung, eine Kontrollflussanweisung oder ein Funktionsaufruf sein. Eine Zuweisung kann beispielsweise wiederum einen Ausdruck umfassen. Ein G-Code-Satz besteht aus einer Folge von G-Code-Worten, wobei die G-Code-Worte allgemein einen Adressbuchstaben und einen Wert umfassen. Der Wert kann aus einer Zahl bestehen oder durch einen Ausdruck, welcher zu einer Zahl ausgewertet werden kann, gegeben sein. Der Ausdruck kann beispielsweise eine oder mehrere Rechenoperationen wie Multiplikation oder Addition enthalten.

Indem das Übersetzungsmodul einer Maschinensteuerung dazu ausgebildet ist, einen Eingangsprogrammcode mit einer Folge von Anweisungen zu verarbeiten, die aus ST-Anweisungen und G-Code-Sätzen bestehen, kann die Maschinensteuerung vorteilhafterweise durch einen Eingangsprogrammcode gesteuert werden, welcher eine Mischung aus Anweisungen der beiden Programmiersprachen enthält. Beispielsweise kann die Maschinensteuerung dazu ausgebildet sein, ST-Anweisungen und G-Code-Sätze jeweils in der Reihenfolge auszuführen, in der die jeweiligen Anweisungen in dem Eingangsprogrammcode enthalten sind.

Bei einer Ausführungsform des Übersetzungsmoduls umfasst der Eingangsprogrammcode ein G-Code-Wort mit einem Adressbuchstaben und einem Wert, wobei die erste Programmcodekomponente den Adressbuchstaben und die zweite Programmcodekomponente den Wert umfasst und wobei der Wert einen ST-Ausdruck umfasst. In dem ST-Ausdruck können vorteilhafterweise für die Berechnung des Wertes des G-Code-Wortes ST-Variablen oder ST-Funktionen verwendet werden. Hierdurch wird es unter anderem ermöglicht, den in dem G-Code-Wort verwendeten Wert zur Laufzeit des Steuerungsprogramms dynamisch mittels des ST-Ausdrucks zu berechnen und beispielsweise aktuelle Prozessgröße in die Berechnung des Wertes einzubeziehen. Dies erweitert den Sprachumfang der Sprache *G-Code,* bei der üblicherweise lediglich konstante, d.h. zur Ladezeit des Steuerungsprogramms vorliegende, Werte verwendet werden können.

Bei einer Ausführungsform des Übersetzungsmoduls umfasst der Eingangsprogrammcode ein G-Code-Wort mit einem Adressbuchstaben und einem Wert, wobei die erste Programmcodekomponente dem Adressbuchstaben und den Wert umfasst und der Wert eine ST-Variable umfasst. Indem das Übersetzungsmodul dazu ausgebildet ist, einen Eingangsprogrammcode mit einem G-Code-Wort zu verarbeiten, dessen Wert eine ST-Variable umfasst, kann bei der Ausführung einer das G-Code-Wort umfassenden Steueranweisung des Steuerprogramms vorteilhafterweise der zur Ausführungszeit aktuelle Zahlenwert der ST-Variablen verwendet werden. Dies erlaubt es beispielsweise, den Zahlenwert der Variable dynamisch auf Grundlage von zur Laufzeit vorliegenden Prozessparametern zu berechnen.

Bei einer Ausführungsform des Übersetzungsmoduls umfasst das Übersetzungsmodul ein Analysemodul, wobei das Analysemodul dazu ausgebildet ist, eine semantische Überprüfung des Eingangsprogrammcodes anhand einer Kombinierten Semantik auszuführen. Die Kombinierte Semantik umfasst dabei Vorgaben einer ersten Semantik der ersten Programmiersprache und Vorgaben einer zweiten Semantik der zweiten Programmiersprache.

Bei der semantischen Analyse können beispielswiese eine Überprüfung des Eingangsprogrammcode hinsichtlich Typenreinheit der enthaltenen Ausdrücke, hinsichtlich der Namensbindung verwendeter Variablen und Funktionen oder hinsichtlich der korrekten Verwendung von Funktionsparametern ausgeführt werden. Die Kombinierte Semantik kann dabei neben den Vorgaben der Semantik der ersten Programmiersprache und den Vorgaben der Semantik der zweiten Programmiersprache weitere Vorgaben umfassen, welche die Kombination von Grundsymbolen der ersten Programmiersprache mit denen der zweiten Programmiersprache regeln. Das Analysemodul kann die semantische Analyse des Eingangsprogrammcodes zur Ladezeit des Steuerprogramms und vor einer Ausführung des Steuerprogramms ausführen. Hierdurch können vorteilhafterweise statisch-semantische Fehler zur Ladezeit erkannt werden und insbesondere ausgeschlossen werden, dass eine Ausführung des Zwischencodes des Steuerprogramms zur Ausführungszeit wegen semantischer Fehler unterbrochen oder abgebrochen werden muss.

Bei einer Ausführungsform des Übersetzungsmoduls umfasst das Übersetzungsmodul ein Speicherzuweisungsmodul, wobei das Speicherzuweisungsmodul dazu ausgebildet ist, einer in dem Eingangsprogrammcode enthaltenen Variablen eine Speicheradresse eines Speichers eines die Maschinensteuerung umfassenden Steuerungssystems zuzuweisen. Indem die in dem Eingangsprogrammcode verwendeten Variablen vor Erstellung des Zwischencodes den Speicheradressen zugewiesen werden, kann ein Zwischencode erzeugt werden, der vorteilhaft effizient ausgeführt werden kann. Insbesondere wird der Aufwand für eine Speicherverwaltung zur Ausführungszeit des Steuerprogramms reduziert.

Ein Verarbeitungsmodul für eine Maschinensteuerung ist dazu ausgebildet, einen Zwischencode mit Arbeitsanweisungen zu verarbeiten und auf Grundlage der Arbeitsanweisungen Steuerbefehle zur Steuerung einer an die Maschinensteuerung angeschlossenen Maschine zu erzeugen. Das Verarbeitungsmodul umfasst dabei ein Ausführungsmodul und einen NC-Prozessor, wobei das Ausführungsmodul dazu ausgebildet ist, auf Grundlage der Arbeitsanweisungen des Zwischencodes eine NC-Anweisung zu erzeugen und an den NC-Prozessor zu übertragen, und wobei der NC-Prozessor dazu ausgebildet ist, auf Grundlage der NC-Anweisung den Steuerbefehl zu erzeugen.

Die NC-Anweisung kann von dem Ausführungsmodul derart erzeugt werden, dass sie sich vollständig in einer Programmiersprache ausdrücken lässt. Bei dieser Programmiersprache kann es sich beispielsweise um eine Programmiersprache handeln, welche bei der Abfassung eines dem Zwischencode zugrundeliegenden Eingangsprogrammcodes verwendet wurde. Wurden bei der Abfassung des Eingangsprogrammcodes eine Kombinationssprache aus einer ersten und einer zweiten Programmiersprache verwendet, kann es sich bei der der NC-Anweisung zugrundeliegenden Programmiersprache beispielsweise um die erste Programmiersprache handeln.

Die bei der Abfassung des den Arbeitsanweisungen zugrundeliegenden Eingangsprogrammcodes verwendete zweite Programmiersprache kann beispielsweise Sprachelemente enthalten, welche von der ersten Programmiersprache nicht umfasst werden. Bei diesen Sprachelementen kann es sich beispielsweise um Hochsprachelemente, wie benannte Variablen, benannte Funktionen mit formalen Parametern oder Kontrollflussanweisungen, handeln. Bei der Verarbeitung der Arbeitsanweisungen kann das Ausführungsmodul diese Hochsprachelemente vollständig auswerten. Die NC-Anweisung kann dann durch den NC-Prozessor ohne Speicherzugriffe, Variablenauswertungen oder Auswertungen von Kontrollflussanweisungen in den Steuerbefehl umgesetzt werden.

Das Ausführungsmodul kann dazu ausgebildet sein, von dem Zwischencode umfasste Variablen oder Funktionsaufrufe auszuwerten und zur Erzeugung der NC-Anweisung anstelle der Variablen oder Funktionsaufrufe explizite Zahlenwerte zu verwenden, die sich bei der Auswertung der Funktion oder Variablen zum Zeitpunkt der Abarbeitung des Zwischencodes ergeben. Dadurch kann die NC-Anweisung vorteilhafterweise auch in einem Fall, in dem die der NC-Anweisung zugrundeliegende Programmiersprache keine Variablen oder Funktionen unterstützt, bei der Erzeugung der Steuerbefehle zur Laufzeit des Steuerprogramms gewonnene oder erzeugte Daten umfassen.

Die NC-Anweisung kann insbesondere auf einer Programmiersprache basieren, die keine Hochsprachelemente umfasst, sich jedoch besonders für die Vorgabe von Bewegungsanweisungen eignet. Bei dieser Programmiersprache kann es sich beispielsweise um die Sprache *G-Code* handeln und das Ausführungsmodul kann dazu ausgebildet sein, NC-Anweisungen zu erzeugen, die durch *G-Code* ausgedrückt werden können. Der NC-Prozessor kann dann beispielsweise im Wesentlichen als ein G-Code-Interpreter oder -Übersetzer ausgebildet sein. Die Verarbeitung des Zwischencodes durch das Ausführungsmodul zu auf *G-Code* basierenden Arbeitsanweisungen ermöglicht es dann vorteilhafterweise, die Sprache *G-Code* um Hochsprachelemente einer anderen Programmiersprache, beispielsweise der Sprache *Strukturierter Text,* zu erweitern.

Bei einer Ausführungsform des Verarbeitungsmoduls ist das Ausführungsmodul dazu ausgebildet, einen weiteren Steuerbefehl zur Steuerung der Maschine zu erzeugen. Das Ausführungsmodul ist also dazu ausgebildet, einen Steuerbefehl zu erzeugen, ohne dass dieser auf Basis einer NC-Anweisung durch den NC-Prozessor erstellt wird. Dies ermöglicht es vorteilhafterweise, für die Steuerung der Maschine auch Steuerbefehle zu verwenden, welche nicht in der für die Darstellung der NC-Anweisungen verwendeten Programmiersprache ausgedrückt werden können.

Bei einer Ausführungsform des Verarbeitungsmoduls umfasst das Verarbeitungsmodul ein Sortiermodul, welches dazu ausgebildet ist, den Steuerbefehl und den weiteren Steuerbefehl zu empfangen und den Steuerbefehl und den weiteren Steuerbefehl in einer Ansteuerreihenfolge auszugeben. Das Verarbeitungsmodul kann beispielsweise dazu ausgebildet sein, dass das Ausführungsmodul und der NC-Prozessor parallel ausgeführt werden, so dass der Steuerbefehl durch den NC-Prozessor und der weitere Steuerbefehl durch das Abarbeitungsmodul nebenläufig erzeugt werden können.

Beispielsweise kann das Ausführungsmodul, nachdem es eine NC-Anweisung zur Erzeugung des Steuerbefehls an den NC-Prozessor übermittelt hat, eine weitere Arbeitsanweisung des Zwischencodes verarbeiten, aufgrund der das Ausführungsmodul den weiteren Steuerbefehl erzeugt. Verzögerungen der Ausführung in NC-Prozessor oder Ausführungsmodul können dazu führen, dass der Steuerbefehl und der weitere Steuerbefehl nicht in der für die Bewegungssteuerung benötigten zeitlichen Reihenfolge ausgegeben werden. Durch das Sortiermodul wird in solch einem Fall vorteilhafterweise sichergestellt, dass der Steuerbefehl und der weitere Steuerbefehl gemäß der für die Bewegungssteuerung der Maschine notwendigen Ausführungsreihenfolge an die zu steuernde Maschine übermittelt wird.

Bei einer Ausführungsform des Verarbeitungsmoduls ist das Ausführungsmodul dazu ausgebildet, Daten aus einem Speicher eines die Maschinensteuerung umfassenden Steuerungssystems zu lesen und/oder Daten in den Speicher zu schreiben. Dies ermöglicht es vorteilhafterweise, dass die Maschinensteuerung einen Eingangsprogrammcode eines Steuerprogramms verarbeiten kann, welcher Hochsprachelemente wie benannte Funktionen mit formalen Parametern oder benannte Variablen umfasst. Der Inhalt der Variablen oder Parameter kann zur Ausführungszeit des Steuerprogramms durch das Ausführungsmodul in den Speicher geschrieben oder aus dem Speicher gelesen werden. Basieren die an den NC-Prozessor übermittelten NC-Anweisungen auf einer Programmiersprache, welche keine derartigen Hochsprachelemente umfasst, kann das Verarbeitungsmodul auch dazu ausgebildet sein, dass lediglich das Ausführungsmodul, nicht jedoch der NC-Prozessor auf den Speicher des Steuerungssystems zugreifen kann.

Bei einer Ausführungsform des Verarbeitungsmoduls ist das Ausführungsmodul dazu ausgebildet, eine Statusinformation über einen Status des NC-Prozessors von dem NC-Prozessor zu empfangen. Dies ermöglicht es vorteilhafterweise, bei der Verarbeitung der Arbeitsanweisungen des Zwischencodes den jeweils zur Ausführungszeit aktuellen Status des NC-Prozessors zu berücksichtigen. Beispielsweise können dadurch Bedingungen von Kontrollflussanweisungen auf dem aktuellen Status des NC-Prozessors basieren. Bei den Statusinformationen kann es sich beispielsweise um eine aktivierte Koordinatentransformation oder um Werkzeuginformationen handeln.

Bei einer Ausführungsform des Verarbeitungsmoduls umfasst der Zwischencode eine Folge von Objektzeigern auf Anweisungsobjekte, wobei die Anweisungsobjekte auf Methoden verweisen, die die Arbeitsanweisungen enthalten. Dies erlaubt vorteilhafterweise eine objektbasierte und besonders effiziente Abarbeitung des Zwischencodes durch das Ausführungsmodul. Die Anweisungsobjekte können auch statische Daten als Attribute enthalten, wobei die Daten von dem Übersetzungsmodul eingesetzt werden und bei der Abarbeitung der Arbeitsanweisungen von der Methode gelesen werden.

Bei einer Ausführungsform des Verarbeitungsmoduls liegen die Arbeitsanweisungen als Maschinencode vor. Bei einer Ausführungsform des Verarbeitungsmoduls ist das Ausführungsmodul dazu ausgebildet, die NC-Anweisung als Datenstruktur, insbesondere als binäre Datenstruktur, an den NC-Prozessor zu übertragen. Dies ermöglicht vorteilhafterweise eine besonders schnelle und effiziente Abarbeitung der Arbeitsanweisungen durch das Ausführungsmodul bzw. der NC-Anweisungen durch den NC-Prozessor zur Laufzeit des Steuerprogramms. Hierdurch wird vorteilhafterweise sichergestellt, dass auch bei einer schnellen Ausführung von Maschinenbewegungen stets Steuerbefehle für die Steuerung der Maschine zur Verfügung stehen.

Bei einer Ausführungsform des Verarbeitungsmoduls repräsentiert die NC-Anweisung einen G-Code-Satz. Dies erlaubt es vorteilhafterweise, eine durch die NC-Anweisung repräsentierte Bewegungsanweisung für die zu steuernde Maschine effizient durch wenige Parameter von Geometrieelementen zu repräsentieren. Hierdurch verringert sich die Datenmenge, welche für die Darstellung der NC-Anweisung benötigt wird, und es wird eine vorteilhaft schnelle Erzeugung der Steuerbefehle aus den Arbeitsanweisungen des Zwischencodes ermöglicht.

Bei einer Ausführungsform des Verarbeitungsmoduls ist das Ausführungsmodul als Stack-Maschine ausgebildet. In diesem Fall kann es sich bei den Arbeitsanweisungen des Zwischencodes jeweils um Stack-Befehle handeln, welche einen Laufzeitkeller der Stack-Maschine manipulieren. Ein als Stack-Maschine ausgebildetes Ausführungsmodul ermöglicht eine besonders einfache und effiziente Ausführung des Zwischencodes.

Ein Steuerungssystem zur Steuerung einer Maschine weist eine Maschinensteuerung auf, wobei die Maschinensteuerung ein Übersetzungsmodul und ein Verarbeitungsmodul umfasst. Das Übersetzungsmodul der Maschinensteuerung kann beispielsweise dazu ausgebildet sein, aus dem Eingangsprogrammcode den einheitlichen Zwischencode mit Arbeitsanweisungen zur Verarbeitung durch das Verarbeitungsmodul zu erzeugen. Das Verarbeitungsmodul kann dazu ausgebildet sein, auf Grundlage der Arbeitsanweisungen Steuerbefehle zur Steuerung der Maschine zu erzeugen. Indem das Steuerungssystem die Maschinensteuerung mit dem Übersetzungsmodul und dem Verarbeitungsmodul umfasst, wird eine vorteilhaft einfache und schnelle Verarbeitung und Ausführung des Eingangsprogrammcodes mit Steuersequenzen der ersten und der zweiten Programmiersprache ermöglicht.

Die Erzeugung des einheitlichen Zwischencodes ermöglicht es vorteilhafterweise, den Eingangsprogrammcode derart aufzubereiten, dass er zur Laufzeit des Steuerprogramms auf effiziente und ressourcenschonende Weise kontinuierlich und im Wesentlichen sequentiell ausgeführt werden kann. Zusätzlich können bei der Verarbeitung des Zwischencodes durch das Ausführungsmodul des Verarbeitungsmoduls beispielsweise NC-Anweisungen erzeugt werden, welche sich vollständig durch die erste Programmiersprache beschreiben lassen. Dies ermöglicht es vorteilhafterweise, dass der NC-Prozessor auf die Verarbeitung der ersten Programmiersprache optimiert werden kann. Insgesamt erlaubt es die Maschinensteuerung des Steuerungssystems damit auf vorteilhaft einfache, effiziente und ressourcenschonende Weise, einen Eingangsprogrammcode zu verarbeiten, bei welchem die erste Programmiersprache um Sprachelemente der zweiten Programmiersprache ergänzt wurde, wobei die Erzeugung der Steuerbefehle durch den NC-Prozessor jedoch wieder ausschließlich auf der ersten Programmiersprache basiert.

Bei einer Ausführungsform des Steuerungssystems umfasst das Steuerungssystem einen NC-Kern und einen Sollwertkanal. Der NC-Kern ist dazu ausgebildet, die Steuerbefehle des Verarbeitungsmoduls zu empfangen, auf Grundlage der Steuerbefehle Sollwerte für die Maschine zu erzeugen und die Sollwerte über den Sollwertkanal an die Maschine zu übertragen. Außerdem bildet die Maschinensteuerung einen Teil einer Benutzerprogrammumgebung des Steuerungssystems und der NC-Kern bildet einen Teil einer Echtzeitumgebung des Steuerungssystems.

Wie die NC-Anweisungen können die Steuerbefehle parametrisierte Geometrieelemente umfassen, welche die Bewegungsanweisungen für die zu steuernde Maschine beschreiben. Dadurch umfassen die Steuerbefehle eine vorteilhaft kleine Datenmenge, so dass sie besonders schnell an den NC-Kern übertragen werden können. Indem der NC-Kern die Steuerbefehle in Sollwerte umsetzt, können die Informationen über die auszuführenden Bewegungen vorteilhafterweise in einer Form übertragen werden, die durch einen oder mehrere Lageregler der Maschine besonders einfach verarbeitet werden kann. Zusätzlich kann der NC-Kern dazu ausgebildet sein, die durch Geometrieelemente parametrisierten Bewegungsanweisungen aufzubereiten. Dies kann beispielsweise eine Interpolation der auszuführenden Maschinenbewegung an Stützstellen umfassen, welche durch die Zeitpunkte, an denen die Sollwerte generiert werden sollen, vorgegeben werden.

Das Steuerungssystem kann dazu ausgebildet sein, die Module der Benutzerprogrammumgebung und die Module der Echtzeitumgebung auf einem Steuerungsrechner auszuführen und den Modulen der Echtzeitumgebung in festgelegten Zeitabständen jeweils Rechenzeit des Steuerungsrechners zuzuteilen. Die Rechenzeit kann jeweils eine festgelegte Dauer umfassen und jeweils einem Modul fest zugewiesen sein, so dass sichergestellt ist, dass dem betreffenden Modul der Echtzeitumgebung die Rechenzeit nicht entzogen wird. Dadurch kann vorteilhafterweise sichergestellt werden, dass Ausgabewerte der Module der Echtzeitumgebung, beispielsweise Sollwerte des NC-Kerns, kontinuierlich in festen Zeitabständen erzeugt werden.

Die Benutzerprogrammumgebung des Steuerungsprogramms kann alle Module umfassen, deren Ausführung nicht zeitkritisch ist, denen also nicht ein fester Anteil der Rechenzeit des Steuerungsrechners zugeteilt werden muss und denen ein Ausführungszeitfenster gegebenenfalls während der Ausführung auch wieder entzogen werden kann.

Indem das Steuerungssystem dazu ausgebildet ist, dass die Maschinensteuerung einen Teil der Benutzerprogrammumgebung und der NC-Kern einen Teil der Echtzeitumgebung bilden, kann die Anzahl der durch die Echtzeitumgebung auszuführenden Berechnungen vorteilhafterweise gering gehalten werden. Die Verarbeitung des Eingangsprogrammcodes und die Erzeugung des Zwischencodes durch das Übersetzungsmodul der Maschinensteuerung, welche verhältnismäßig rechenintensiv sein können, kann vorteilhafterweise bereits vor einer Ausführung des Steuerprogramms ausgeführt werden. Zur Ausführungszeit kann dann der Zwischencode durch das Verarbeitungsmodul der Maschinensteuerung auf vorteilhaft effiziente Weise in Steuerbefehle für den NC-Kern umgesetzt werden.

Bei einer Ausführungsform des Steuerungssystems umfasst das Steuerungssystem einen Speicher und die Maschinensteuerung ist dazu ausgebildet, Daten in den Speicher zu schreiben und/oder aus dem Speicher auszulesen. Dies ermöglicht es vorteilhafterweise, dass die Maschinensteuerung bei der Erzeugung der Steuerbefehle aus dem Eingangsprogrammcode des Steuerprogramms benannte Variablen oder benannte Funktionen mit Parametern verwenden kann, wobei die Werte der Variablen oder Parameter in dem Speicher abgelegt werden können. Dies erlaubt es vorteilhafterweise, bei der Abfassung des Eingangsprogrammcodes eine Programmiersprache zu verwenden, welche Variablen oder Funktionen umfasst. Der Speicherzugriff kann beispielsweise durch das Ausführungsmodul der Maschinensteuerung erfolgen.

Bei einer Ausführungsform des Steuerungssystems umfasst das Steuerungssystem ein SPS-Modul, wobei das SPS-Modul dazu ausgebildet ist, die Verarbeitung des Eingangsprogrammcodes des Steuerprogramms durch die Maschinensteuerung zu steuern. Außerdem ist das SPS-Modul dazu ausgebildet, Daten mit dem Speicher auszutauschen.

Das SPS-Modul stellt Funktionen einer speicherprogrammierbaren Steuerung zur Verfügung. Das SPS-Modul kann beispielsweise dazu ausgebildet sein, das Laden, Ausführen und Beenden eines Steuerungsprogramms durch die Maschinensteuerung zu veranlassen. Außerdem kann das SPS-Modul dazu ausgebildet sein, Funktionen der Maschine oder einer die Maschine umfassenden Anlage zu steuern, welche nicht die eigentliche Bewegungssteuerung umfassen. Beispielsweise kann das SPS-Modul dazu ausgebildet sein, einen gesamten Produktionsprozess einer die Maschine umfassenden Anlage zu steuern und zu überwachen.

Indem das SPS-Modul, wie die Maschinensteuerung auf den Speicher des Steuerungssystems zugreifen kann, können über den Speicher auf vorteilhaft einfache Weise Daten zwischen der Maschinensteuerung und dem SPS-Modul ausgetauscht werden. Dadurch kann das SPS-Modul beispielsweise bei der Prozesssteuerung Statusmeldungen oder aktuelle Werte von Variablen oder Parametern berücksichtigen. Auch kann das SPS-Modul Bewegungsparameter, welche bei der Abarbeitung des Steuerprogramms berücksichtigt werden sollen, an die Maschinensteuerung übergeben. Dies können beispielsweise Informationen über ein zu bearbeitendes Werkstück oder ein zu verwendendes Werkzeug sein.

Die Erfindung wird im Folgenden anhand von Figuren näher erläutert. Dabei zeigen:
- Fig. 1: eine schematische Darstellung eines Steuerungssystems mit einer Maschinensteuerung;
- Fig. 2: eine schematische Darstellung der Maschinensteuerung mit einem Übersetzungsmodul und einem Verarbeitungsmodul mit einem Ausführungsmodul;
- Fig. 3: ein Zustandsübergangsdiagramm des Übersetzungsmoduls der Maschinensteuerung;
- Fig. 4: eine schematische Darstellung des Ausführungsmoduls der Maschinensteuerung.

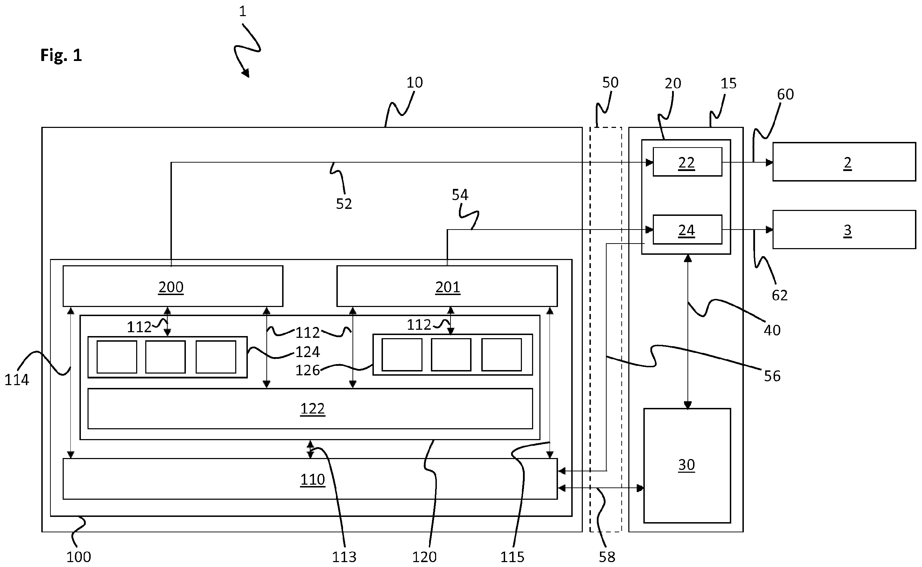

**Figur 1** zeigt ein Steuerungssystem 1 mit einer Maschinensteuerung 200, welche Bestandteil eines Servermoduls 100 ist. Die Maschinensteuerung 200 ist über einen Steuerbefehlkanal 52 mit einem NC-Kanal-Modul 22 eines NC-Kerns 20 verbunden. Das NC-Kanal-Modul 22 ist über einen Sollwertkanal 60 mit einer Maschine 2 verbunden, welche durch das Steuerungssystems 1 gesteuert wird.

Das Steuerungssystem 1 kann dazu ausgebildet sein, eine Bewegungssteuerung der Maschine 2 durchzuführen. Hierzu ist das Steuerungssystem 1 dazu ausgebildet, Sollwerte zu erzeugen und über den Sollwertkanal 60 an die Maschine 2 zu übertragen. Die Sollwerte können eine Position, Geschwindigkeit oder Beschleunigung eines bewegten Maschinenteils der Maschine 2 umfassen. Die Sollwerte können beispielsweise von einem Lageregler der Maschine 2 als Führungsgröße verwendet werden, auf welche ein die Bewegung des Maschinenteils bestimmender Ausgangswert einer Regelstrecke ausgeregelt wird. Dieser Ausgangswert kann beispielsweise eine Position des bewegten Maschinenteils sein.

Bei der Maschine 2 kann es sich beispielsweise um eine Werkzeugmaschine wie eine Fräse, eine Drehmaschine oder eine Schweißmaschine handeln und die Sollwerte können beispielsweise die Position, Geschwindigkeit oder Beschleunigung eines Werkzeugs oder eines Werkstückhalters der Maschine vorgeben. Bei der Maschine 2 kann es sich aber auch um eine Transporteinrichtung handeln, wobei die Sollwerte die Bewegung eines Transportschlittens der Transportvorrichtung vorgeben.

Bei anderen Ausführungsformen des Steuerungssystems 1 kann der Lageregler, welcher die Sollwerte verarbeitet, auch als Modul des Steuerungssystems 1 ausgebildet sein. In diesem Fall ist der Sollwertkanal 60 als eine Datenverbindung zwischen dem NC-Kern 20 und einem weiteren Modul des Steuerungssystems 1 ausgebildet. Dabei können lediglich Reglerausgangsgrößen für eine Stelleinrichtung der Maschine 2 an die Maschine 2 übertragen. Bei den Reglerausgangsgrößen kann es sich beispielsweise um Stromwerte für einen Elektromotor, welcher die Maschine antreibt und einen Teil der Stelleinrichtung bildet, handeln.

Neben den Sollwerten werden über den Sollwertkanal 60 auch Zusatzkommandos an die Maschine 2 übertragen. Die Zusatzkommandos können beispielsweise das von der Maschine 2 zu verwendende Werkzeug definieren, bzw. einen Werkzeugwechsel veranlassen oder Zusatzfunktionen der Maschine 2, wie einen Kühlmittelfluss oder eine Absaugvorrichtung, steuern.

Die über den Sollwertkanal 60 übertragenen Sollwerte werden von dem NC-Kanal-Modul 22 auf Grundlage von Steuerbefehlen erzeugt, welche durch die Maschinensteuerung 200 erzeugt werden und über den Steuerbefehlkanal 52 an den NC-Kern 20 übertragen werden. Die Steuerbefehle enthalten Bewegungsanweisungen, welche die von der Maschine auszuführenden Maschinenbewegungen parametrisieren.

Die Bewegungsanweisungen der Steuerbefehle können beispielsweise Geometrieelemente umfassen, welche eine von dem bewegten Maschinenteil abzufahrende Bahn beschreiben. Dabei können die Geometrieelemente durch einen Satz von Geometrieparametern vorgegeben sein. Ist das Geometrieelement beispielsweise eine Gerade, so können die Geometrieparameter Anfangs- und Endpunkt der Geraden in einem geeigneten Koordinatensystem darstellen. Handelt es sich bei dem Geometrieelement beispielsweise um ein Kreissegment, so können die Geometrieparameter den Kreismittelpunkt, den Radius des Kreises und Anfangs- und Endpunkt des Kreises umfassen. Die Bewegungsanweisungen können auch Bewegungsinformationen enthalten, welche die Ausführung der Maschinenbewegungen entlang der Geometrieelemente festlegen. Eine solche Bewegungsinformation kann beispielsweise eine Information über einen Vorschub oder eine Geschwindigkeit des Maschinenteils umfassen. Ist die Maschine 2 eine Werkzeugmaschine, können die Bewegungsinformationen auch Werkzeugparameter umfassen, beispielsweise Art des zu verwendenden Werkzeugs oder Drehzahl eines Fräs- oder Bohrwerkzeugs.

Der NC-Kern 20 kann dazu ausgebildet sein, die Sollwerte für die Maschine 2 kontinuierlich und in festen Zeitabständen einer Zykluszeit zu erzeugen und auszugeben. Zur Erzeugung der Sollwerte kann der NC-Kern 20 dazu ausgebildet sein, die Geometrieelemente der Bewegungsanweisungen zu interpolieren, so dass für jeden Ausführungszyklus mindestens ein Sollwert zur Verfügung steht. Bei der Interpolation kann der NC-Kern 20 beispielsweise Charakteristika der Maschine 2, wie etwa Kinematiken, Beschleunigungsvermögen und Trägheitsmomente berücksichtigen. Der NC-Kern 20 kann die über den Steuerbefehlkanal 52 empfangenen Steuerbefehle in einem FIFO-Speicher zwischenspeichern, ehe er aus ihnen die Sollwerte zur Übertragung über den Sollwertkanal 60 erzeugt. Der Sollwertkanal 60 zwischen dem NC-Kern 20 und der Maschine 2 kann beispielsweise mittels eines Feldbussystems realisiert sein.

Das Servermodul 100, welches die Maschinensteuerung 200 zur Erzeugung der Steuerbefehle umfasst, weist einen Speicher 120 und ein Serversteuerungsmodul 110 auf. Die Maschinensteuerung 200 ist mit dem Speicher 120 über Speicherzugriffskanäle 112 verbunden. Über die Speicherzugriffskanäle 112 kann die Maschinensteuerung 200 auf einen gemeinsamen Speicherbereich 122 und auf einen lokalen Speicherbereich 124 des Speichers 120 zugreifen und Daten aus den Speicherbereichen 122, 124 lesen bzw. Daten in die Speicherbereiche 122, 124 schreiben.

Das Serversteuerungsmodul 110 ist über einen Kontrollkanal 114 mit der Maschinensteuerung 200 verbunden. Über den Kontrollkanal 114 kann das Serversteuerungsmodul 110 die Maschinensteuerung 200 steuern. Beispielsweise kann das Serversteuerungsmodul 110 über den Kontrollkanal 114 das Laden, Ausführen oder Beenden eines Steuerprogramms durch die Maschinensteuerung 200 veranlassen. Ebenso kann das Serversteuerungsmodul 110 Informationen über einen Status der Maschinensteuerung 200 über den Kontrollkanal 114 abfragen. Ein derartiger Status kann beispielsweise angeben, dass die Maschinensteuerung 200 aktiv ist, also ein Steuerprogramm ausführt, inaktiv ist, also kein Steuerprogramm ausführt, oder während der Ausführung eines Steuerprogramms blockiert ist und beispielsweise auf eine externe Anweisung eines anderen Moduls des Steuerungssystems 1 wartet.

Das Serversteuerungsmodul 110 kann über einen Serverdatenkanal 113 ebenfalls auf den Speicher 120 des Steuerungssystems 1 zugreifen. Dabei kann ein Zugriff sowohl auf den gemeinsamen Speicherbereich 122, als auch auf die lokalen Speicherbereiche 124, 126 erfolgen.

Das Servermodul 100 umfasst neben der Maschinensteuerung 200 eine weitere Maschinensteuerung 201. Die weitere Maschinensteuerung 201 ist über einen weiteren Steuerbefehlkanal 54 mit einem weiteren NC-Kanal-Modul 24 des NC-Kern 20 verbunden. Soweit nicht explizit anders beschrieben, sind die weitere Maschinensteuerung 201, der weitere Steuerbefehlkanal 54 und das weitere NC-Kanal-Modul 24 ausgebildet wie die Maschinensteuerung 200, der Steuerbefehlkanal 52 bzw. das NC-Kanal-Modul 22. Wie das NC-Kanal-Modul 22 ist das weitere NC-Kanal-Modul 24 dazu ausgebildet, aus Steuerbefehlen, welches es über den weiteren Steuerbefehlkanal 54 empfängt, Sollwerte zu generieren. Die Sollwerte werden über einen weiteren Sollwertkanal 62 an eine weitere Maschine 3 übermittelt, um eine Bewegung der weiteren Maschine 3 zu steuern.

Alternativ kann das weitere NC-Kanal-Modul 24 auch mit der Maschine 2 verbunden sein und die durch das weitere NC-Kanal-Modul erzeugten Sollwerte können neben den durch das NC-Kanal-Modul 22 erzeugten Sollwerten für die Bewegungssteuerung einer weiteren Maschinenkomponente bzw. eines weiteren Freiheitsgrades der Maschine 2 verwendet werden.

Wie die Maschinensteuerung 200, kann die weitere Maschinensteuerung 201 über Speicherzugriffskanäle 112 auf den Speicher 120 des Servermoduls zugreifen. Dabei kann die weitere Maschinensteuerung 201 wie die Maschinensteuerung 200 auf den gemeinsamen Speicherbereich 122 zugreifen. Zusätzlich kann die weitere Maschinensteuerung 201 analog zum Zugriff der Maschinensteuerung 200 auf den lokalen Speicherbereich 124 auf einen weiteren lokalen Speicherbereich 126 zugreifen, wobei der weitere lokale Speicherbereich 126 separat von dem lokalen Speicherbereich 124 der Maschinensteuerung 200 ausgebildet ist. Über den gemeinsamen Speicherbereich 122 können die Maschinensteuerung 200 und die weitere Maschinensteuerung 201 Daten austauschen, beispielsweise während der Ausführung von Steuerprogrammen. Die weitere Maschinensteuerung 201 wird auf die gleiche Weise wie die Maschinensteuerung 200 über einen weiteren Kontrollkanal 115 durch das Serversteuerungsmodul 110 gesteuert.

Das Steuerungssystem 1 umfasst neben dem Servermodul 100 und dem NC-Kern 20 ein SPS-Modul 30. Das SPS-Modul 30 stellt Funktionalitäten einer speicherprogrammierbaren Steuerung zur Verfügung. Es kann den Betrieb einer die Maschinen 2, 3 als Komponenten umfassenden Anlage steuern. Das SPS-Modul 30 kann über Datenleitungen mit den Maschinen 2, 3 oder anderen Komponenten der Anlage verbunden sein. Das SPS-Modul 30 kann Sensoren der Anlagenkomponenten auslesen und basierend auf den Auslesewerten Ausgabewerte für an der Anlage angeordnete Aktoren erstellen. Dabei kann das SPS-Modul beispielsweise zur Regelung von Betriebsgrößen der Anlage verwendet werden.

Das SPS-Modul 30 ist dazu ausgebildet, eine Ausführung von Steuerprogrammen durch die Maschinensteuerungen 200, 201 in Abhängigkeit von dem Prozesszustand der die Maschinen 2, 3 umfassenden Anlage zu steuern und zu kontrollieren. Hierzu kommuniziert das SPS-Modul 30 über einen Serversteuerkanal 58 mit dem Serversteuerungsmodul 110 des Servermoduls 100. Über den Serversteuerkanal 58 kann das SPS-Modul 30 auch Daten mit dem Serversteuerungsmodul 110 austauschen, so dass das SPS-Modul 30 über das Serversteuerungsmodul 110 auf den gesamten Speicher 120 zugreifen kann.

Beispielsweise veranlasst das SPS-Modul 30 über das Serversteuerungsmodul 110 das Laden, Ausführen und Beenden eines Steuerungsprogramms durch die Maschinensteuerungen 200, 201.

Beim Laden und während der Ausführung eines Steuerprogramms durch die Maschinensteuerung 200 oder die weitere Maschinensteuerung 201 kann das SPS-Modul 30 über das Serversteuerungsmodul 110 auch aktuelle Prozessparameter in den Speicher 120 schreiben und die Prozessparameter können bei der Ausführung des Steuerprogramms durch die jeweilige Maschinensteuerung 200, 201 verwendet oder berücksichtigt werden. Zusätzlich können durch das Serversteuerungsmodul 110 Informationen an das SPS-Modul 30 übermittelt werden. Bei diesen Informationen kann es sich beispielsweise um Laufzeitfehlermeldungen oder den Ausführungsstatus der Maschinensteuerungen 200, 201 handeln.

Das SPS-Modul 30 ist dazu ausgebildet, mit dem NC-Kern 20 Daten und Informationen über einen Austauschkanal 40 auszutauschen. Der Austauschkanal 40 kann beispielsweise als ein gemeinsamer Speicher realisiert sein, auf welchen sowohl das SPS-Modul 30, als auch der NC-Kern 20 zugreifen können. Mittels des Austauschkanals 40 können das SPS-Modul 30 und der NC-Kern 20 beispielsweise Statusinformationen austauschen oder es kann die Ausführung des SPS-Moduls 30 und des NC-Kerns 20 synchronisiert werden.

Der NC-Kern 20 ist zum Zwecke des Informationsaustausches über einen Statusmeldungskanal 56 mit dem Serversteuerungsmodul 110 verbunden. Über den Statusmeldungskanal 56 kann der NC-Kern 20 beispielsweise melden, dass alle empfangenen Steuerbefehle abgearbeitet wurden. Ebenso können Meldungen über Fehler, die bei der Abarbeitung der Steuerbefehle auftreten, an das Serversteuerungsmodul 110 übertragen werden.

Neben der Maschinensteuerung 200 und der weiteren Maschinensteuerung 201 kann das Steuerungssystem 1 zusätzliche Maschinensteuerungen umfassen, welche ausgebildet sind wie die Maschinensteuerungen 200, 201 und zusätzliche Maschinen oder Maschinenachsen ansteuern.

Das Steuerungssystem 1 umfasst einen Steuerungsrechner, der dazu ausgebildet ist, die Module des Steuerungssystems 1 als Programmkomponenten auszuführen. Das Servermodul 100 mit den Maschinensteuerungen 200, 201 wird dabei als Teil einer Benutzerprogrammumgebung 10 des Steuerungssystems 1 ausgeführt, während der NC-Kern 20 und das SPS-Modul 30 als Teile einer Echtzeitumgebung 15 des Steuerungssystems 1 ausgeführt werden. Den Modulen der Echtzeitumgebung 15 wird durch den Steuerungsrechner zyklisch in festen Zeitabständen Rechenzeit einer festgelegten Dauer zugeteilt. Die Dauer ist dabei jeweils so bemessen, dass die Module alle innerhalb eines Zyklus auszuführenden Berechnungen abschließen und entsprechende Ausgabewerte für an das Steuerungssystem 1 angeschlossene Maschinen ausgeben können, darunter die Sollwerte für die Lageregler der Maschinen 2, 3.

Die Benutzerprogrammumgebung 10 umfasst alle auf dem Steuerungsrechner ausgeführten Module, welche nicht unter Echtzeitbedingungen ausgeführt werden. Darunter fallen beispielsweise das Servermodul 100 und die Maschinensteuerungen 200, 201. Den Modulen der Benutzerprogrammumgebung 10 wird abhängig von der Auslastung des Steuerungsrechners variabel Rechenzeit unterschiedlicher Dauer zugeteilt.

Ein Datenaustausch zwischen den Modulen der Benutzerprogrammumgebung 10 und den Modulen der Echtzeitumgebung 15 erfolgt über einen Datenübertragungskanal 50. Der Datenübertragungskanal umfasst dabei insbesondere den Steuerbefehlkanal 52, den weiteren Steuerbefehlkanal 54, den Statusmeldungskanal 56 und den Serversteuerkanal 58. Der Datenübertragungskanal 50 kann beispielsweise als Datenbus ausgebildet sein und der Datenaustausch über den Datenübertragungskanal 50 kann mittels eines Austauschs von Datenpaketen erfolgen. Ein Beispiel für ein Steuerungssystem mit einer Echtzeitumgebung, einer Benutzerumgebung und einem Datenübertragungskanal ist beispielsweise das TwinCAT-Steuerungssystem. In einem TwinCAT-Steuerungssystem wird die Benutzerprogrammumgebung 10 auch als "user-space" bezeichnet. Handelt es sich bei dem Steuerungssystem 1 um ein TwinCAT-Steuerungssystem, kann das Servermodul 100 als Dienst des Windows-Betriebssystems des Steuerungsrechners implementiert sein. Das Servermodul 100 wird dann jeweils beim Systemstart des Steuerungsrechners des Steuerungssystems 1 gestartet und initialisiert.

Damit für jedes NC-Kanal-Modul 22, 24 ein Datenstrom von Steuerbefehlen und damit für jeden Lageregler der Maschinen 2, 3 ein Datenstrom von Sollwerten zur Verfügung steht, wird beim Start des Steuerungssystems 1 durch das Serversteuerungsmodul 110 für jedes NC-Kanal-Modul 22, 24 des NC-Kerns 20 je eine Maschinensteuerung 200, 201 instanziiert. Die Maschinensteuerungen 200, 201, ebenso wie die NC-Kanal-Module 22, 24 werden nebenläufig ausgeführt. Dadurch können die Sollwerte für die Maschinen 200, 201 im Wesentlichen unabhängig voneinander durch das Steuerungssystem 1 generiert werden. Eine Synchronisation der Sollwertgenerierung ist über das SPS-Modul 30 und das Serversteuerungsmodul 110 möglich, ein Datenaustausch zwischen den Maschinensteuerungen 200, 201 über den gemeinsamen Speicherbereich 122.

Im Folgenden werden der Aufbau und die Funktion der Maschinensteuerung 200 und der weiteren Maschinensteuerung 201 dargestellt. Dabei wird ausschließlich auf die Maschinensteuerung 200 und die mit der Maschinensteuerung 200 interagierenden Module, etwa das NC-Kanal-Modul 22, Bezug genommen. Alle Ausführungen gelten jedoch ebenso für die weitere Maschinensteuerung 201 und die mit der weiteren Maschinensteuerung 201 interagierenden Module, etwa für das weitere NC-Kanal-Modul 24.

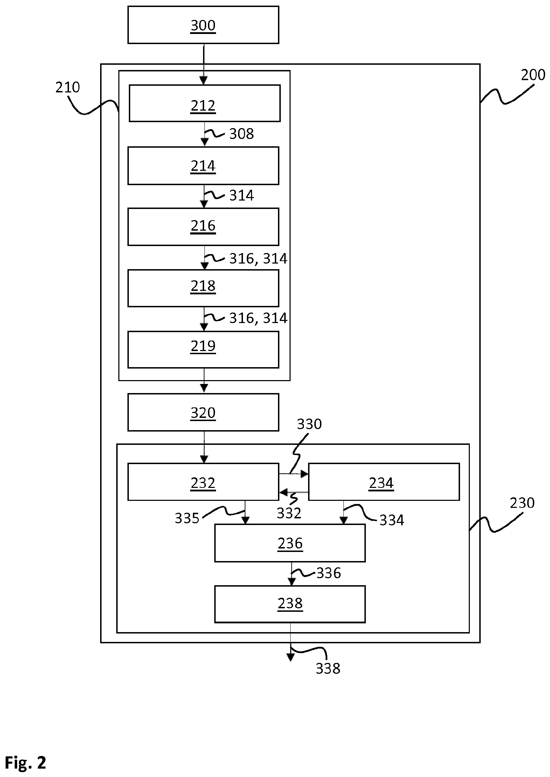

**Figur 2** zeigt eine schematische Darstellung der Maschinensteuerung 200. Die Maschinensteuerung 200 umfasst ein Übersetzungsmodul 210 und ein Verarbeitungsmodul 230. Das Übersetzungsmodul 210 ist dazu ausgebildet, einen Eingangsprogrammcode 300 eines Steuerprogramms zu verarbeiten und aus dem Eingangsprogrammcode 300 einen einheitlichen Zwischencode 320 mit Arbeitsanweisungen zur Ausführung durch das Verarbeitungsmodul 230 der Maschinensteuerung 200 zu erzeugen. Das Verarbeitungsmodul 230 ist dazu ausgebildet, die Arbeitsanweisungen des Zwischencodes 320 zu verarbeiten und auf Grundlage der Arbeitsanweisungen einen Strom von kernspezifischen Steuerbefehlen 338 zu erzeugen, welche über den Steuerbefehlkanal 52 an das NC-Kanal-Modul 22 des NC-Kerns 20 übertragen werden. Das NC-Kanal-Modul 22 erzeugt auf Grundlage der kernspezifischen Steuerbefehle 338 die über den Sollwertkanal 60 an die Maschine 2 übertragenen Sollwerte.

Die Verarbeitung des Eingangsprogrammcodes 300 und die Erstellung des Zwischencodes 320 können zur Ladezeit erfolgen, also nach dem Laden des Eingangsprogrammcodes 300 und vor einer Verarbeitung des Zwischencodes 320 durch das Verarbeitungsmodul 230. Insofern stellt das Übersetzungsmodul 210 einen Compiler bzw. einen Übersetzer für den Eingangsprogrammcode 300 dar.

Der Eingangsprogrammcode 300 stellt den Quelltext des Steuerprogramms dar und ist in einer Kombinationssprache abgefasst. Die Kombinationssprache ist eine Programmiersprache, welche eine Vereinigung von Regeln einer ersten Programmiersprache und Regeln einer zweiten Programmiersprache umfasst. Der in der Kombinationssprache verfasste Eingangsprogrammcode umfasst eine erste Programmcodekomponente, welche in der ersten Programmiersprache abgefasst ist, und eine zweite Programmcodekomponente, welche in der zweiten Programmiersprache abgefasst ist.

Die erste und die zweite Programmcodekomponente umfassen jeweils Zeichensequenzen des Eingangsprogrammcodes. Die Zeichensequenzen umfassen ein Zeichen, wie einen Buchstaben, eine Ziffer oder ein Sonderzeichen, oder eine Folge von Zeichen. Die Zeichensequenzen der ersten Programmcodekomponente repräsentieren Grundsymbole der ersten Programmiersprache, die Zeichensequenzen der zweiten Programmcodekomponente repräsentieren Grundsymbole der zweiten Programmiersprache. Die Grundsymbole repräsentieren selbst wiederum Sprachelemente wie Bezeichner, Schlüsselworte, Sonderzeichen oder Literale, wie Zahlen oder Strings.

Die Grundsymbole der in der ersten Programmiersprache abgefassten ersten Programmcodekomponente sind dabei in einer ersten Grundsymbolmenge der ersten Programmiersprache und die Grundsymbole der in der zweiten Programmiersprache abgefassten zweiten Programmcodekomponente sind in einer zweiten Grundsymbolmenge der zweiten Programmiersprache enthalten. Die erste Grundsymbolmenge umfasst alle nach der ersten Programmiersprache gültigen Grundsymbole. Analog umfasst die zweite Wortmenge alle nach der zweiten Programmiersprache gültigen Grundsymbole. Die gültigen Grundsymbole der ersten Programmiersprache können beispielsweise durch reguläre Ausdrücke einer ersten Grundsymbolspezifikation definiert sein und die gültigen Grundsymbole der zweiten Programmiersprache können beispielsweise durch reguläre Ausdrücke einer zweiten Grundsymbolspezifikation definiert sein. Die Grundsymbolspezifikationen können beispielsweise jeweils eine reguläre Grammatik darstellen.

Die Kombinationssprache wird durch eine Kombinierte Grammatik beschrieben, die Regeln umfasst zur Bildung von Codeabschnitten bzw. Zeichensequenzen, die gemäß der Kombinationssprache gültig sind. Die Regeln werden auch Produktionsregeln oder Produktionen genannt. Da die Kombinationssprache eine Kombination der ersten Programmiersprache und der zweiten Programmiersprache ist, enthält die Kombinierte Grammatik Regeln der ersten Programmiersprache und Regeln der zweiten Programmiersprache. Dabei kann die Kombinierte Grammatik jeweils einen Teil oder alle der Regeln der ersten Grammatik oder der zweiten Grammatik enthalten. Zusätzlich kann die Kombinierte Grammatik eine oder mehrere Einbettungsregeln umfassen. Die Einbettungsregeln beschreiben, auf welche Art Grundsymbole oder Nichtterminalsymbole der ersten Programmiersprache, also beispielsweise Literale, Variablen, Ausdrücke oder Anweisungen, und Grundsymbole oder Nichtterminalsymbole der zweiten Programmiersprache miteinander kombiniert werden können.

Insbesondere umfasst die Kombinierte Grammatik eine erste Regel der ersten Grammatik und eine zweite Regel der zweiten Grammatik. Die Kombinierte Grammatik kann zudem eine erste Einbettungsregel umfassen. Die erste Einbettungsregel definiert eine Einbettung der ersten Programmiersprache in die zweite Programmiersprache, beschreibt also eine kombinierte Zeichensequenz, bei der ein Teil einer Zeichensequenz, die ein Symbol der zweiten Programmiersprache repräsentiert und in der zweiten Programmcodekomponente enthalten ist, durch eine Zeichensequenz ersetzt wird, die ein Symbol der ersten Programmiersprache repräsentiert und in der ersten Programmcodekomponente enthalten ist. Entsprechend beschreibt die Einbettungsregel eine Ableitung eines Symbols der zweiten Programmiersprache, also beispielsweise einer Anweisung oder eines Ausdrucks, in der ein Symbol der ersten Programmiersprache verwendet wird.

Analog hierzu kann die Kombinierte Grammatik eine zweite Einbettungsregel umfassen, welche eine Einbettung der zweiten Programmiersprache in die erste Programmiersprache beschreibt. Die zweite Einbettungsregel beschreibt also eine kombinierte Zeichensequenz, bei der Teile einer Zeichensequenz, die ein Symbol der ersten Programmiersprache repräsentiert und in der ersten Programmcodekomponente enthalten ist, durch eine Zeichensequenz ersetzt werden, die ein Symbol der zweiten Programmiersprache repräsentiert und in der zweiten Programmcodekomponente enthalten ist. Entsprechend beschreibt die Einbettungsregel eine Ableitung eines Symbols der ersten Programmiersprache, in der ein Symbol der zweiten Programmiersprache verwendet wird. Außerdem kann die Kombinierte Grammatik eine Variableneinbettungsregel umfassen, welche eine Verwendung einer Variablen, beispielsweise der zweiten Programmiersprache, in einer Zeichensequenz der ersten Programmiersprache definiert.

Bei der ersten Programmiersprache kann es sich beispielsweise um die Sprache *G-Code* und bei der zweiten Programmiersprache um die Sprache *Strukturierter Text* handeln. Die Kombinierte Grammatik der Kombinationssprache aus *G-Code* und *Strukturierter Text* umfasst im Wesentlichen alle Regeln bzw. Produktionen der ersten Grammatik von *G-Code* und im Wesentlichen alle Regeln bzw. Produktionen der zweiten Grammatik von *Strukturierter Text.* Die Sprache *G-Code* im Sinne dieser Anmeldung umfasst und bezeichnet sowohl standardkonformen G-*Code* nach ISO 6983, als auch um zusätzliche Sprachelemente erweiterte Varianten von standardkonformem *G-Code,* wie er von verschiedenen Herstellern von Steuerungssystemen verwendet wird. Ebenso umfasst und bezeichnet die Sprache *Strukturierter Text* im Sinne dieser Anmeldung sowohl standardkonformen *Strukturierten Text* nach IEC 61131-3, als auch um zusätzliche Sprachelemente erweiterte Varianten von standardkonformem *Strukturiertem Text.*

Ein Startsymbol der Kombinierten Grammatik der Kombination aus *G-Code* und *Strukturierter Text* legt fest, dass der Eingangsprogrammcode 300 eine Zeichensequenz ist, die ein Nichtterminalsymbol "Anweisungen" repräsentiert. Eine Regel der Kombinierten Grammatik legt rekursiv fest, dass eine Ableitung von "Anweisungen" aus "Anweisungen" und einem Nichtterminalsymbol "Anweisung" besteht oder das leere Element ist. Dabei kann "Anweisung" gemäß einer ersten Regel der Kombinierten Grammatik ein der zweiten Programmiersprache zugeordnetes Nichtterminalsymbol "ST-Anweisung" sein. Das Nichtterminalsymbol "ST-Anweisung" beschreibt ein Sprachelement, das eine ST-Anweisung ist, also eine nach den Regeln der zweiten Grammatik der Sprache *Strukturierter Text* gebildete Anweisung.

Die erste Einbettungsregel der Kombinierten Grammatik legt fest, dass das Nichtterminalsymbol "Anweisung" auch durch ein der ersten Programmiersprache zugeordnetes Nichtterminalsymbol "G-Code-Satz" ersetzt werden kann, wobei das Nichtterminalsymbol "G-Code-Satz" nach den Regeln der ersten Grammatik der Sprache *G-Code* gebildet ist. Insofern stellt die erste Einbettungsregel eine Einbettung der Sprache G-*Code* in die Sprache *Strukturierter Text* dar.

Insbesondere kann der Eingangsprogrammcode 300 eine erste Anweisung und eine zweite Anweisung umfassen, wobei die erste Anweisung und die zweite Anweisung jeweils Zeichensequenzen sind, die das Nichtterminalsymbol "Anweisung" repräsentieren. Die erste Anweisung besteht dabei aus einer ST-Anweisung, also einer nach den Regeln für das Nichtterminalsymbol "ST-Anweisung" gebildeten Zeichensequenz, während die zweite Anweisung aus einem G-Code-Satz, also einer nach den Regeln für das Nichtterminalsymbol "G-Code-Satz" gebildeten Zeichensequenz, besteht.

Die ST-Anweisung kann nach den Regeln der zweiten Grammatik von *Strukturierter Text* beispielsweise eine Variablenzuweisung oder eine Kontrollflussanweisung, wie beispielsweise eine "while"-Schleife oder eine "if"-Anweisung sein. Die "while"-Schleife oder die "if"-Anweisung kann gemäß der zweiten Grammatik beispielsweise eine der zweiten Programmiersprache zugeordnete Zeichensequenz, die ein Nichtterminalsymbol "Bedingung" repräsentiert, und eine Zeichensequenz, die das Nichtterminalsymbol "Anweisungen" repräsentiert, umfassen. Da eine Ableitung des Nichtterminalsymbols "Anweisungen" auch das der ersten Programmiersprache zugeordnete Nichtterminalsymbol "G-Code-Satz" umfassen kann, ermöglicht es die erste Einbettungsregel, eine Kontrollflussanweisung der Sprache *Strukturierter Text* in Verbindung mit einer oder mehrerer der Anweisungen vom Typ G-Code-Satz zu verwenden. Insofern wird durch die erste Einbettungsregel unter anderem die Sprache *G-Code* um Kontrollanweisungen oder Kontrollstrukturen der Sprache *Strukturierter Text* erweitert.

Die erste Grammatik von *G-Code* enthält eine Regel, dass eine Ableitung des Nichtterminalsymbols "G-Code-Satz" aus einer Folge von Nichtterminalsymbolen "G-Code-Wort" und einem abschließenden Grundsymbol "G-Newline" besteht. Das Grundsymbol "G-Newline" wird durch ein Zeilenende einer Programmcodezeile des Eingangsprogrammcodes 300 repräsentiert.

Eine Zeichensequenz, welche das Nichtterminalsymbol "G-Code-Wort" repräsentiert, kann auch als ein G-Code-Wort bezeichnet werden. Das Sprachelement G-Code-Wort umfasst stets einen Adressbuchstaben und einen Wert. Der Wert kann eine Zahl sein, er kann aber auch ein Ausdruck sein, welcher zu einer Zahl ausgewertet werden kann. Zur Beschreibung eines G-Code-Wortes mit einer Zahl als Wert umfasst die erste Grammatik eine Regel, nach der das Nichtterminalsymbol "G-Code-Wort" zu einem Paar aus einem der ersten Programmiersprache zugeordneten Grundsymbol "Adressbuchstabe" und einem der ersten Programmiersprache zugeordneten Grundsymbol "G-Dezimalzahl" abgeleitet werden kann.

Das Grundsymbol "Adressbuchstabe" ist ein Grundsymbol der ersten Programmiersprache *G-Code* und wird durch eine Zeichensequenz mit dem Adressbuchstaben des G-Code-Wortes repräsentiert. Dieser Buchstabe kann auch als Inhalt des Grundsymbols bezeichnet werden. Der Buchstabe kann beispielsweise "G", sein, falls das G-Code-Wort eine Bewegungsanweisung bzw. eine Bearbeitungsanweisung darstellt, oder "M" sein, falls das G-Code-Wort eine Hilfsanweisung darstellt. Die Bewegungsanweisung kann eine Maschinenbewegung beispielsweise mittels eines Geometrieelements, etwa einer Linie oder eines Kreissegments, parametrisieren. Die Hilfsanweisung kann beispielsweise ein Befehl zum Ein- oder Ausschalten eines Bearbeitungswerkzeugs, beispielsweise einer Frässpindel, sein. Das Grundsymbol "G-Dezimalzahl" repräsentiert eine Dezimalzahl mit einem in *G-Code* gültigen Zahlentyp, beispielsweise "LReal".

Ein G-Code-Wort, bei dem der Wert durch einen Ausdruck gegeben ist, kann gemäß der ersten Grammatik als Wert eine Zeichensequenz umfassen, die einen in der ersten Programmiersprache verfassten G-Code-Ausdruck darstellt. Daher definiert eine Regel der ersten Grammatik, dass das Nichtterminalsymbol "G-Code-Wort" anstelle des Grundsymbols "G-Dezimalzahl" eine Folge aus einem der ersten Programmiersprache zugeordneten Grundsymbol "=" und einer Zeichensqeuenz, die ein der ersten Programmiersprache zugeordnetes Nichtterminalsymbol "G-Ausdruck" repräsentiert, umfassen kann. "G-Ausdruck" kann gemäß der ersten Grammatik wiederum abgeleitete werden zu einer Folge aus einem oder mehreren Grundsymbolen "G-Dezimalzahl" und einem oder mehreren Grundsymbolen "Rechenoperator", welche der ersten Programmiersprache zugeordnet sind und Rechenoperatoren darstellen, beispielsweise für Addition oder Multiplikation. Die Zeichensequenz des G-Code-Ausdrucks beschreibt einen Ausdruck, der zu einer Dezimalzahl ausgewertet werden kann und beispielsweise eine Folge von Additionen und Multiplikationen beschreibt. Ist der G-Code-Ausdruck G-Code-standardkonform, kann er keine Klammerausdrücke oder Funktionen umfassen. Umfasst das G-Code-Wort einen Adressbuchstaben und als Wert einen G-Code-Ausdruck, ist es in dem ersten Programmcodeteil des Eingangsprogrammcodes 300 enthalten.

Die Kombinierte Grammatik legt fest, dass ein G-Code-Wort, bei dem der Wert durch einen Ausdruck gegeben ist, als Wert auch einen in der zweiten Programmiersprache verfassten ST-Ausdruck enthalten kann. Dabei ist der ST-Ausdruck ein Ausdruck, der gemäß den Regeln der zweiten Grammatik von *Strukturierter Text* gültig ist, zu einer Zahl ausgewertet werden kann und beispielsweise eine Addition oder eine Multiplikation beschreibt. Zur Beschreibung des den ST-Ausdruck umfassenden G-Code-Wortes umfasst die Kombinierte Grammatik die zweite Einbettungsregel, nach der eine Ableitung des Nichtterminalsymbols "G-Code-Wort" anstelle des Grundsymbols "Dezimalzahl" auch ein der zweiten Programmiersprache zugeordnetes Nichtterminalsymbol "ST-Ausdruck" umfassen kann. Das Nichtterminalsymbol "ST-Ausdruck" wird nach den Regeln der zweiten Grammatik von *Strukturierter Text* durch Zeichensequenzen des Eingangsprogrammcodes 300 repräsentiert, die Grundsymbole der Sprache *Strukturierter Text* repräsentieren und in der zweiten Programmcodekomponente enthalten sind.

Die Zahl, zu der der ST-Ausdruck ausgewertet werden kann, kann dabei alle in *Strukturierter Text* gültigen Zahlentypen aufweisen, also beispielsweise "Real", "LReal", "Int" oder "USInt" und Datentypen, die in solche Zahlentypen nach den Regeln der Sprache *Strukturierter Text* konvertierbar sind, also zum Beispiel Aufzählungstypen oder Wertebereichstypen (subrange). Das Übersetzungsmodul 210 ist dazu ausgebildet, den Zahlentyp der Zahl gegebenenfalls in ein in *G-Code* gültiges Format, beispielsweise "LReal" umwandeln zu lassen, wobei hierfür beispielsweise die entsprechenden Regeln der Sprache *Strukturierter Text* angewendet werden können.

Der ST-Ausdruck kann gemäß der zweiten Grammatik von *Strukturierter Text* neben Zahlen, benannten Variablen und Operatoren auch Klammerausdrücke umfassen. Des weiteren kann der ST-Ausdruck auch Feldvariablen (array), Verbundvariablen (struct), oder Aufrufe benannter Funktionen mit formalen Parametern umfassen. Das Übersetzungsmodul 210 kann dazu ausgebildet sein, bei der Verarbeitung des Eingangsprogrammcodes 300 auch Zeichensequenzen vom Typ ST-Ausdruck zu verarbeiten, welche vordefinierte und in dem Speicher 120 abzulegende Variablen umfassen.

Die zweite Einbettungsregel beschreibt also eine Einbettung von *Strukturierter Text* in *G-Code.* Der Eingangsprogrammcode 300 kann in der Zeichensequenz des G-Code-Worts an einer Stelle, an der gemäß der ersten Grammatik eine das der ersten Programmiersprache zugeordnete Grundsymbol "G-Dezimalzahl" repräsentierende Zeichensequenz steht, gemäß der zweiten Grammatik gebildete Zeichensequenzen umfassen, die das der zweiten Programmiersprache zugeordnete Nichtterminalsymbol "ST-Ausdruck" repräsentieren.

Die Kombinierte Grammatik der aus *G-Code* und *Strukturierter Text* gebildeten Kombinationssprache legt fest, dass in einem G-Code-Ausdruck, der den Wert eines G-Code-Wortes bildet, anstelle einer Dezimalzahl auch eine ST-Variable verwendet werden kann. Die ST-Variable ist dabei eine nach den Regeln der zweiten Grammatik der zweiten Programmiersprache *Strukturierter Text* gültige benannte Variable, die einen Zahlenwert repräsentiert. Die Variableneinbettungsregel der Kombinierten Grammatik legt daher fest, dass eine Ableitung des Nichtterminalsymbols "G-Ausdruck" an den Stellen, an denen das Grundsymbol "G-Dezimalzahl" stehen kann, auch ein Nichtterminalsymbol "ST-Variable" umfassen kann. Das Nichtterminalsymbol "ST-Variable" kann zu einem Grundsymbol "G-Bezeichner" abgeleitet werden, welches ein gemäß der Grundsymbolspezifikation von *Strukturierter Text* gebildetes Literal repräsentiert, wobei das Literal den Namen der Variablen darstellt. Das Grundsymbol "G-Bezeichner" ist der ersten Programmiersprache zugeordnet, wird also von der ersten Programmcodekomponente des Eingangsprogrammcodes 300 umfasst.

Die ST-Variable kann sowohl eine lokale Variable, eine globale Variable oder ein Funktionsparameter einer Funktion sein. Die Deklaration der Variablen oder die Definition der Funktion ist in der zweiten Programmcodekomponente des Eingangsprogrammcodes 300 enthalten, welche in der Sprache *Strukturierter Text,* also in der zweiten Programmiersprache, abgefasst ist.

Die Variablen, die in den ST-Ausdrücken und den G-Code-Ausdrücken verwendet werden, und die Funktionen, die in den ST-Ausdrücken verwendet werden, können an jeder Stelle der zweiten Programmcodekomponente des Eingangsprogrammcodes 300 deklariert bzw. definiert werden. Insbesondere müssen die Variablen oder Funktionen nicht innerhalb der zusammenhängenden Zeichensequenz des ST-Ausdrucks definiert sein, in welcher sie verwendet werden. Das Übersetzungsmodul 210 ist dazu ausgebildet, die Variablen und Funktionen bei der Verarbeitung des Eingangsprogrammcodes 300 gemäß einer zweiten Semantik der zweiten Programmiersprache *Strukturierter Text* zu binden.

Anstelle einer Anweisung kann der Eingangsprogrammcode 300 auch Deklarationen enthalten. Dies schließt Deklarationen von Datentypen, Variablen und Funktionen ein. Die Deklaration einer Variablen oder einer Funktion kann selbst wiederum eine Anweisung oder mehrere Anweisungen enthalten.

Zur Verarbeitung des Eingangsprogrammcodes 300 umfasst das Übersetzungsmodul 210 ein Zerlegungsmodul 212. Das Zerlegungsmodul 212 ist dazu ausgebildet, den Eingangsprogrammcode 300 einzulesen und in einen Datenstrom von Grundsymbolen 308 umzusetzen, also die lexikalische Analyse des Eingangsprogrammcodes 300 auszuführen. Die Grundsymbole 308 können auch als "Token" und das Zerlegungsmodul 308 als "Scanner" bezeichnet werden. Die Grundsymbole 308 repräsentieren jeweils die kleinsten sinngebenden Einheiten des Eingangsprogrammcodes 300, beispielsweise Zahlen, Schlüsselwörter, Variablenbezeichner, Operatoren und Konstanten.

Das Zerlegungsmodul 212 ist dazu ausgebildet, die Zeichensequenzen der in der ersten Programmiersprache abgefassten ersten Programmcodekomponente in Grundsymbole der ersten Programmiersprache und die Zeichensequenzen der in der zweiten Programmiersprache abgefassten zweiten Programmcodekomponente in Grundsymbole der zweiten Programmiersprache umzusetzen.

Das Zerlegungsmodul 212 liest den Eingangsprogrammcode 300 Zeichen für Zeichen ein und erzeugt für jede Zeichensequenz, die einem der Grundsymbole entspricht, eine Instanz des jeweiligen Grundsymbols zur Weiterleitung über den Datenstrom der Grundsymbole 308. Bei der Umsetzung des Eingangsprogrammcodes 300 in die Grundsymbole 308 nimmt das Zerlegungsmodul 212 jeweils genau einen Zustand aus einer endlichen Menge von Zuständen ein. Insbesondere ist das Zerlegungsmodul 212 dazu ausgebildet, einen ersten Zustand und einen zweiten Zustand einzunehmen. Das Zerlegungsmodul 212 kann beispielsweise als ein endlicher, deterministischer Automat ausgebildet sein.

Die Zustände des Zerlegungsmoduls 212 bestimmen dabei unter anderem, ob das Zerlegungsmodul 212 eine eingelesene Zeichensequenz des Eingangsprogrammcodes 300 einem Grundsymbol der ersten Programmiersprache oder einem Grundsymbol der zweiten Programmiersprache zuordnet. Insbesondere setzt das Zerlegungsmodul 212 den Eingangsprogrammcode 300 in dem ersten Zustand in Grundsymbole der ersten Programmiersprache und in dem zweiten Zustand in Grundsymbole der zweiten Programmiersprache um.

Der Eingangsprogrammcode 300 kann eine mehrdeutige Zeichensequenz umfassen, welche sowohl gemäß der ersten Grundsymbolspezifikation einem Grundsymbol der ersten Programmiersprache, als auch gemäß der zweiten Grundsymbolspezifikation einem Grundsymbol der zweiten Programmiersprache entspricht. Beispielsweise kann die mehrdeutige Zeichensequenz ein Zeichen umfassen, welches gemäß der ersten Programmiersprache einem Grundsymbol zugeordnet ist, welches einen Kommentar einleitet, und gemäß der zweiten Grundsymbolspezifikation einem Grundsymbol zugeordnet ist, welches einen Klammerausdruck einleitet. Handelt es sich bei der ersten Programmiersprache um *G-Code* und bei der zweiten Programmiersprache um *Strukturierter Text,* so umfasst die mehrdeutige Zeichensequenz in solch einem Fall beispielsweise das Zeichen "(".

Eine weitere mehrdeutige Zeichensequenz, welche sowohl ein Grundsymbol der ersten Programmiersprache, als auch ein Grundsymbol der zweiten Programmiersprache repräsentieren kann, kann beispielsweise ein Literal sein, etwa eine aus einer Ziffernfolge gebildete Zahl oder ein String sein. Befindet sich das Zerlegungsmodul 212 beim Einlesen der mehrdeutigen Zeichensequenz in dem ersten Zustand, setzt es die mehrdeutige Zeichensequenz in ein entsprechendes Grundsymbol der ersten Programmiersprache um. Befindet es sich in dem zweiten Zustand, setzt es die mehrdeutige Zeichensequenz in ein entsprechendes Grundsymbol der zweiten Programmiersprache um.

Die Grundsymbole 308 der ersten und der zweiten Programmiersprache umfassen eine Information darüber, welcher Programmiersprache sie jeweils zugeordnet sind. Dadurch können Module des Übersetzungsmoduls 210, welche den Datenstrom aus Grundsymbolen 308 weiterverarbeiten, diese Information berücksichtigen.

Das Zerlegungsmodul 212 ist dazu ausgebildet, bei einem Einlesen von Steuersequenzen aus dem Eingangsprogrammcode 300 Zustandsübergänge zwischen den Zuständen auszuführen, also von einem Zustand in einen anderen Zustand zu wechseln. Die Steuersequenzen sind Zeichensequenzen, welche ein Zeichen oder mehrere Zeichen umfassen können. Veranlasst eine Steuersequenz einen Zustandsübergang aus einem Zustand, in dem der Eingangsprogrammcode 300 in Grundsymbole 308 der ersten Programmiersprache umgesetzt wird, in einen anderen Zustand, so kann die betreffende Steuersequenz aus einer Zeichensequenz bestehen, der gemäß der ersten Grundsymbolspezifikation kein Grundsymbol der ersten Programmiersprache zugeordnet ist. Analog kann eine Steuersequenz, welche einen Zustandsübergang aus einem Zustand, in dem der Eingangsprogrammcode 300 in Grundsymbole 308 der zweiten Programmiersprache umgesetzt wird, in einen anderen Zustand veranlasst, aus einer Zeichensequenz bestehen, der gemäß der zweiten Grundsymbolspezifikation kein Grundsymbol der zweiten Programmiersprache zugeordnet ist.

Beispielsweise kann eine der Steuersequenzen jeweils aus einem einzelnen Sonderzeichen bestehen, welchem weder in der ersten, noch in der zweiten Programmiersprache ein Grundsymbol zugeordnet ist. Dabei ist nicht ausgeschlossen, dass einer Zeichensequenz aus mehreren Zeichen, die das als Steuersequenz verwendete Sonderzeichen umfasst, ein Grundsymbol zugeordnet ist. Beispielsweise kann das als Steuersequenz verwendete Sonderzeichen Bestandteil eines Literals aus mehreren Zeichen, beispielsweise Bestandteil eines Strings sein, wobei in diesem Fall bei Einlesen des Literals kein Zustandsübergang ausgelöst wird.

Eine Steuersequenz kann auch aus einer Zeichensequenz bestehen, der in der Programmiersprache, aus der heraus sie einen Zustandsübergang auslöst, ein Grundsymbol zugeordnet ist. In diesem Fall erzeugt das Zerlegungsmodul 212 bei einem Einlesen der Steuersequenz das entsprechende Grundsymbol und führt den Zustandsübergang aus.

Das Zerlegungsmodul 212 kann beispielsweise dazu ausgebildet sein, den Zustand, in den es nach Einlesen einer Steuersequenz gewechselt ist, bis zum Ende der Zeile, in der die Steuersequenz stand, beizubehalten. Es kann auch dazu ausgebildet sein, den Zustand beizubehalten, bis eine weitere Steuersequenz eingelesen wurde. Bei der weiteren Steuersequenz kann es sich um die gleiche wie die zuvor eingelesene Steuersequenz oder um eine sich von der zuvor eingelesenen Steuersequenz unterscheidenden Steuersequenz handeln.

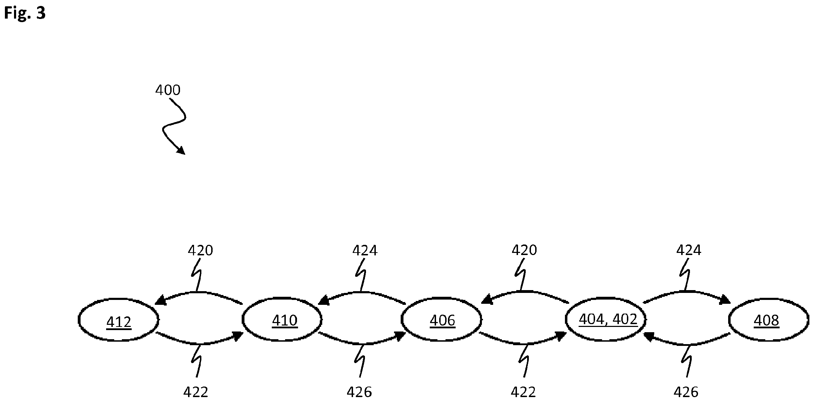

**Figur 3** zeigt ein Zustandsübergangsdiagramm 400, welches mögliche Zustände des Zerlegungsmoduls 212, sowie Übergänge zwischen diesen Zuständen beschreibt. Das Zerlegungsmodul 212 kann einen ersten Zustand 404, einen zweiten Zustand 406, einen dritten Zustand 408, einen vierten Zustand 410 und einen fünften Zustand 412 einnehmen. In dem ersten Zustand 404 und dem vierten Zustand 410 setzt das Zerlegungsmodul 212 die Zeichensequenzen des Eingangsprogrammcodes 300 in Grundsymbole 308 der ersten Programmiersprache um, in dem zweiten Zustand 406, dem dritten Zustand 408 und dem fünften Zustand 412 in Grundsymbole 308 der zweiten Programmiersprache.

Zu Beginn des Einlesens des Eingangsprogrammcodes 300 befindet sich das Zerlegungsmodul 212 in dem ersten Zustand 404, welcher einen Anfangszustand 402 darstellt. In dem ersten Zustand 404 setzt das Zerlegungsmodul den Eingangsprogrammcode 300 in Grundsymbole 308 der ersten Programmiersprache um. Der Eingangsprogrammcode 300 hat daher mit einer in der ersten Programmiersprache abgefassten ersten Zeichensequenz der ersten Programmcodekomponente zu beginnen. Die erste Zeichensequenz kann auch leer sein. Nach der ersten Zeichensequenz kann der Eingangsprogrammcode 300 eine erste Steuersequenz 420, gefolgt von einer in der zweiten Programmiersprache verfassten zweiten Zeichensequenz der zweiten Programmcodekomponente umfassen.

Nach Einlesen der ersten Steuersequenz 420 wechselt das Zerlegungsmodul 212 von dem ersten Zustand 404 in den zweiten Zustand 406. Eine auf die erste Steuersequenz 420 folgende zweite Zeichensequenz der zweiten Programmcodekomponente des Eingangsprogrammcodes 300 wird folglich in Grundsymbole 308 der zweiten Programmiersprache umgesetzt. Das Zerlegungsmodul 212 bleibt so lange in dem zweiten Zustand 406, bis es eine auf die zweite Zeichensequenz folgende zweite Steuersequenz 422 einliest. Nach Einlesen der zweiten Steuersequenz 422 wechselt das Zerlegungsmodul 212 von dem zweiten Zustand 406 zurück in den ersten Zustand 404.

Anstelle der ersten Steuersequenz 420 kann der Eingangsprogrammcode 300 auch eine dritte Steuersequenz 424 zwischen der ersten Zeichensequenz und der zweiten Zeichensequenz enthalten. Das Zerlegungsmodul 212 ist dazu ausgebildet, in den dritten Zustand 408 zu wechseln, wenn es die dritte Steuersequenz 424 einliest, während es sich in dem ersten Zustand 404 befindet. Ein Wechsel des Zerlegungsmoduls 212 zurück in den ersten Zustand 404 findet nach dem Einlesen einer vierten Steuersequenz 426 statt, welche durch das Zeilenende der die dritte Steuersequenz 424 umfassenden Zeile des Eingangsprogrammcodes 300 gebildet wird.

Der Eingangsprogrammcode 300 kann zwischen der ersten Steuersequenz 420 und der zweiten Steuersequenz 422 auch noch die dritte Steuersequenz 424 enthalten. Befindet sich das Zerlegungsmodul 212 nach dem Einlesen der ersten Steuersequenz 420 in dem zweiten Zustand 406 und liest es in dem zweiten Zustand 406 die dritte Steuersequenz 424 ein, so wechselt das Zerlegungsmodul 212 für den Rest der gerade eingelesenen Zeile des Eingangsprogrammcodes 300 in den vierten Zustand 410, setzt also eine eingelesene Zeichensequenz in Grundsymbole 308 der ersten Programmiersprache um. Nach Einlesen der vierten Steuersequenz 426, gebildet durch das Zeilenende der die dritte Steuersequenz 424 enthaltenden Zeile, erfolgt wiederum eine Rückkehr in den dritten Zustand 406.

Zwischen der auf die erste Steuersequenz 420 folgenden dritte Steuersequenz 424 und der vierten Steuersequenz 426 kann der Eingangsprogrammcode 300 auch noch die erste Steuersequenz 420 und die zweite Steuersequenz 422 umfassen. Während sich das Zerlegungsmodul in dem vierten Zustand 410 befindet, führt das Zerlegungsmodul 212 bei Einlesen der ersten Steuersequenz 420 einen Zustandsübergang in den fünften Zustand 412 aus und setzt den eingelesenen Eingangsprogrammcode 300 so lange in Grundsymbole 308 der zweiten Programmiersprache um, bis es wiederum die zweite Steuersequenz 422 einliest und in den vierten Zustand 410 zurückwechselt.

Weist der Eingangsprogrammcode 300 zwischen der auf die erste Steuersequenz 420 und die dritte Steuersequenz 424 folgenden ersten Steuersequenz 420 und der darauffolgenden zweiten Steuersequenz 422 ein Zeilenende auf und liest das Zerlegungsmodul 212 in dem fünften Zustand 412 das Zeilenende ein, ehe es die zweite Steuersequenz 422 eingelesen hat, so bricht das Zerlegungsmodul 212 das Einlesen des Eingangsprogrammcodes 300 ab und gibt eine Fehlermeldung aus. Von dem Zerlegungsmodul 212 oder von anderen Modulen der Maschinensteuerung 200 ausgegebene Fehlermeldungen können beispielsweise an das Serversteuerungsmodul 110 und von diesem an das SPS-Modul 30 übertragen werden.

Das Zerlegungsmodul 212 kann auch dazu ausgebildet sein, den Übergang aus dem zweiten Zustand 406 in den dritten Zustand 410 nach dem Einlesen einer von der dritten Steuersequenz 424 verschiedenen Steuersequenz auszuführen. Ebenso kann es dazu ausgebildet sein, die Übergänge von dem vierten Zustand 410 in den fünften Zustand 412 und zurück in den vierten Zustand 410 nach dem Einlesen von jeweils von der ersten Steuersequenz 420 bzw. der zweiten Steuersequenz 422 verschiedenen Steuersequenzen auszuführen.

Das Zerlegungsmodul 212 kann auch dazu ausgebildet sein, neben den dargestellten Zuständen 404, 406, 408, 410, 412 weitere Zustände einzunehmen. Beispielsweise kann das Zerlegungsmodul 212 dazu ausgebildet sein, aus dem zweiten Zustand 406 nach einem erneuten Einlesen der ersten Steuersequenz 420 in einen weiteren Zustand zu wechseln, in welchem es eingelesene Zeichensequenzen des Eingangsprogrammcodes 300 in Grundsymbole 308 der ersten Programmiersprache umsetzt und aus welchem es nach Einlesen der zweiten Steuersequenz 422 zurück in den zweiten Zustand 406 wechselt.

Handelt es sich bei der ersten Programmiersprache um die Sprache *G-Code* und bei der zweiten Programmiersprache um die Sprache *Strukturierter Text,* kann die erste Steuersequenz 420 beispielsweise aus dem Sonderzeichen "{", die zweite Steuersequenz 422 aus dem Sonderzeichen "}", die dritte Steuersequenz 424 aus dem Sonderzeichen "!" und die vierte Steuersequenz 426 aus dem Zeilenende bestehen. In diesem Fall repräsentieren weder die erste Steuersequenz 420, noch die zweite Steuersequenz 422 oder die dritte Steuersequenz 424 für sich alleine genommen Grundsymbole der Sprache *G-Code* oder der Sprache *Strukturierter Text.* Allerdings können die erste, zweite oder die dritte Steuersequenz 420, 422, 424 jeweils in einem String der zweiten Programmiersprache *Strukturierter Text* enthalten sein. In diesem Fall löst das Einlesen der ersten, zweiten oder dritten Steuersequenz 420, 422, 424 keinen Zustandsübergang des Übersetzungsmoduls 210 aus.

Die vierte Steuersequenz 426, welche durch das Zeilenende gegeben ist, repräsentiert in der zweiten Programmiersprache *Strukturierter Text* kein Grundsymbol, sondern wird beim Einlesen des Eingangsprogrammcodes 300 als Leerraum behandelt. Insofern löst ein Einlesen der vierten Steuersequenz 426 in dem dritten Zustand 408 einen Zustandsübergang zurück in den ersten Zustand 404 aus, wobei jedoch durch das Zerlegungsmodul 212 kein Grundsymbol erzeugt wird.

In der ersten Programmiersprache *G-Code* repräsentiert das Zeilenende dagegen dem Grundsymbol "G-Newline". Das Grundsymbol "G-Newline" zeigt das Ende eines G-Code-Satzes und gegebenenfalls den Beginn eines darauffolgenden G-Code-Satzes an. Liest daher das Zerlegungsmodul 212 in dem vierten Zustand 410, in welchem es eingelesene Zeichensequenzen in Grundsymbole der ersten Programmiersprache *G-Code* umsetzt, die durch das Zeilenende gebildete vierte Steuersequenz 426 ein, erzeugt es das Grundsymbol "G-Newline" und führt einen Zustandsübergang zurück in den zweiten Zustand 406 aus. Liest das Zerlegungsmodul 212 dagegen in dem ersten Zustand 404, in welchem es ebenfalls Grundsymbole der ersten Programmiersprache *G-Code* erzeugt, das Zeilenende ein, erzeugt es lediglich das Grundsymbol "G-Newline", führt aber keinen Zustandsübergang aus.

Das Übersetzungsmodul 210 umfasst ein Parsermodul 214, welches dazu ausgebildet ist, den Datenstrom aus Grundsymbolen 308 zu verarbeiten und aus den Grundsymbolen 308 einen einheitlichen Strukturbaum 314 zu erstellen. Der einheitliche Strukturbaum 314 wird dabei nach den Regeln der Kombinierten Grammatik erzeugt, welche die Kombination der ersten Programmiersprache mit der zweiten Programmiersprache beschreibt. Er umfasst alle von dem Zerlegungsmodul 212 erzeugten Grundsymbole 308. Der einheitliche Strukturbaum 314 kann auch als Parsebaum oder Ableitungsbaum bezeichnet werden.

Ein Knoten des einheitlichen Strukturbaumes 314, der ein Nichtterminalsymbol der zweiten Programmiersprache repräsentiert, kann mit einem Kindknoten des Strukturbaumes 314 verbunden sein, welcher ein Grundsymbol oder ein Nichtterminalsymbol der ersten Programmiersprache repräsentiert. Analog kann ein weiterer Knoten des Strukturbaumes 314, der ein Nichtterminalsymbol der ersten Programmiersprache repräsentiert, mit einem weiteren Kindknoten verbunden sein, welcher ein Grundsymbol oder ein Nichtterminalsymbol der zweiten Programmiersprache repräsentiert. Dies ist insbesondere bei den Teilen des einheitlichen Strukturbaums 314 der Fall, welche durch die erste Einbettungsregel, die zweite Einbettungsregel oder die Variableneinbettungsregel beschreiben werden.

Allgemein kann der einheitliche Strukturbaum 314 einen ersten Teilbaum und einen zweiten Teilbaum umfassen. Dabei weist der erste Teilbaum Knoten auf, die Symbole, also Nichtterminalsymbole oder Grundsymbole, der ersten Programmiersprache repräsentieren. Ein Knoten des ersten Teilbaums ist mit einem zweiten Teilbaum verbunden, welcher Knoten aufweist, die Symbole der zweiten Programmiersprache repräsentieren. Anders ausgedrückt ist der erste Teilbaum der ersten Programmiersprache zugeordnet und umfasst einen zweiten Teilbaum, der der zweiten Programmiersprache zugeordnet ist. Analog hierzu kann der einheitliche Strukturbaum 314 auch einen der zweiten Programmiersprache zugeordneten Teilbaum umfassen, der einen der ersten Programmiersprache zugeordneten Teilbaum umfasst.

Ein nach der ersten Einbettungsregel zur Vereinigung der Programmiersprachen *G-Code* und *Strukturierter Text* erzeugte Teil des einheitlichen Strukturbaums 314 umfasst einen Knoten, welcher das Nichtterminalsymbol "Anweisungen" repräsentiert. In einem Unterbaum dieses Knotens kann sowohl ein Knoten enthalten sein, welcher ein nach den Regeln der zweiten Grammatik gebildetes Nichtterminalsymbol "ST-Anweisung" repräsentiert, als auch ein Knoten, welcher ein nach den Regeln der ersten Grammatik gebildetes Nichtterminalsymbol "G-Code-Satz" repräsentiert.

Ein nach der zweiten Einbettungsregel zur Vereinigung der Programmiersprachen *G-Code* und *Strukturierter Text* erzeugter Teil des einheitlichen Strukturbaums 314 umfasst einen Knoten, welcher das Nichtterminalsymbol "G-Code-Satz" repräsentiert. Dieser Knoten ist zum einen mit einem Knoten verbunden, welcher das Grundsymbol "Adressbuchstabe" repräsentiert, zum anderen mit einem Knoten, welcher ein nach den Regeln der zweiten Grammatik gebildetes Nichtterminalsymbol "ST-Ausdruck" repräsentiert. Der Knoten zu "G-Code-Satz" kann dabei mit dem Knoten zu "ST-Ausdruck" entweder direkt oder über einen oder mehrere weitere Knoten verbunden sein.

Ein nach der Variableneinbettungsregel zur Vereinigung der Programmiersprachen *G-Code* und *Strukturierter Text* erzeugter Teil des einheitlichen Strukturbaums 314 umfasst einen Knoten, welcher das der ersten Programmiersprache zugeordnete Nichtterminalsymbol "G-Code-Wort" repräsentiert. Legt die Variableneinbettungsregel fest, dass das Nichtterminalsymbol "G-Code-Wort" das der ersten Programmiersprache zugeordnete Nichtterminalsymbol "ST-Variable" umfasst, so ist dieser Knoten einerseits mit einem Knoten verbunden, welcher das der ersten Programmiersprache zugeordnete Grundsymbol "Adressbuchstabe" repräsentiert, und andererseits mit einem Knoten, welcher das der ersten Programmiersprache zugeordnete Nichtterminalsymbol "ST-Variable" repräsentiert. Das Nichtterminalsymbol "ST-Variable" ist mit einem Knoten verbunden, der das Grundsymbol "G-Bezeichner" repräsentiert, welches den Namen der ST-Variablen darstellt.

Legt die Variableneinbettungsregel fest, dass eine Ableitung des der ersten Programmiersprache zugeordneten Nichtterminalsymbols "G-Ausdruck" das der ersten Programmiersprache zugeordnete Nichtterminalsymbol "ST-Variable" umfassen kann, so kann ein Knoten, der das Nichtterminalsymbol "G-Ausdruck" repräsentiert, einerseits mit einem Knoten verbunden sein, der das der ersten Programmiersprache zugeordnete Grundsymbol "Dezimalzahl" oder ein weiteres nach den Regeln der ersten Grammatik gebildetes Nichtterminalsymbol "G-Ausdruck" repräsentiert, und andererseits mit einem Knoten, der das der ersten Programmiersprache zugeordnete Nichtterminalsymbol "ST-Variable" repräsentiert. Das Nichtterminalsymbol "ST-Variable" ist mit einem Knoten verbunden, der das Grundsymbol "G-Bezeichner" repräsentiert, welches den Namen der ST-Variablen darstellt.

Das Parsermodul 214 ist dazu ausgebildet, im Zusammenhang mit der Erstellung des einheitlichen Strukturbaums 314 eine syntaktische Analyse des Eingangsprogrammcodes 300 anhand der Kombinierten Grammatik auszuführen. Insbesondere wird dabei die in der ersten Programmiersprache abgefasste erste Programmcodekomponente auf Konformität mit der ersten Grammatik und die in der zweiten Programmiersprache abgefasste zweite Programmcodekomponente auf Konformität mit der zweiten Grammatik überprüft. Zusätzlich ist das Parsermodul dazu ausgebildet, den Eingangsprogrammcode 300 auf Konformität mit den Regeln, welche die Vereinigung der ersten Programmiersprache mit der zweiten Programmiersprache beschreiben, also insbesondere mit der ersten Einbettungsregel, mit der zweiten Einbettungsregel und mit der Variableneinbettungsregel, zu überprüfen. Das Parsermodul 214 des Übersetzungsmoduls 210 kann beispielsweise bereits zur Ladezeit des Steuerprogramms ausgeführt werden, so dass eine vollständige syntaktische Überprüfung des Eingangsprogrammcodes 300 bereits vor der Ausführung des Zwischencodes 320 durch das Verarbeitungsmodul 230 abgeschlossen ist.

Das Übersetzungsmodul 210 umfasst ein Analysemodul 216. Das Analysemodul 216 ist dazu ausgebildet, eine semantische Überprüfung bzw. eine semantische Analyse des Eingangsprogrammcodes 300 durchzuführen, indem es den von dem Parsermodul 214 erzeugten einheitlichen Strukturbaum 314 semantisch analysiert. Das Analysemodul 216 ist weiterhin dazu ausgebildet, den einheitlichen Strukturbaum 314 zusammen mit bei der semantischen Analyse gewonnenen semantischen Informationen 316 an ein Speicherzuweisungsmodul 218 weiterzuleiten. Insofern gibt das Analysemodul 216 einen dekorierten oder attributierten Strukturbaum aus.

Das Analysemodul 216 ist dazu ausgebildet, die semantische Analyse anhand einer kombinierten Semantik durchzuführen, welche Vorgaben einer ersten Semantik der ersten Programmiersprache und Vorgaben einer zweiten Semantik der zweiten Programmiersprache umfasst. Bei der semantischen Analyse werden von dem Analysemodul 216 beispielsweise die Datentypen aller von dem einheitlichen Strukturbaum 314 umfassten Datenobjekte festgestellt und die entsprechenden Knoten um den Datentyp erweitert. Bei Zahlen kann es sich dabei beispielsweise um die Datentypen "Int", "LReal" handeln. Nach der semantischen Analyse umfasst der einheitliche Strukturbaum 314 also auch Informationen über die Datentypen der enthaltenen Datenobjekte.

Außerdem überprüft das Analysemodul 216 unter anderem den von dem einheitlichen Strukturbaum 314 repräsentierten Eingangsprogrammcode 300 auf Typenreinheit. Dabei überprüft es Teile des einheitlichen Strukturbaums 314, welche auf der ersten Programmcodekomponente des Eingangsprogrammcodes 300 basieren, anhand von Vorgaben der ersten Semantik auf Typenreinheit. Analog überprüft es Teile des einheitlichen Strukturbaums, welche auf der zweiten Programmcodekomponente des Eingangsprogrammcodes 300 basieren, anhand von Vorgaben der zweiten Semantik auf Typenreinheit. Für Teile des Strukturbaums, welche auf der ersten Einbettungsregel, der zweiten Einbettungsregel oder der Variableneinbettungsregel basieren, kann die kombinierte Semantik zusätzliche Vorgaben enthalten, welche mögliche Kombinationen von Datentypen der ersten Programmiersprache und der zweiten Programmiersprache beschreiben.

Neben der Typprüfung führt das Analysemodul 216 eine Namensbindung von verwendeten Variablen und benannten Funktionen, sowie von deren Parametern durch. Umfasst lediglich die zweite Programmiersprache benannte Variablen oder Funktionen, kann diese Namensbindung beispielsweise gemäß der zweiten Semantik der zweiten Programmiersprache erfolgen. Die kombinierte Semantik legt unter anderem fest, dass alle in dem Eingangsprogrammcode 300 verwendeten Variablen und Funktionen von einem einheitlichen Namensraum umfasst werden. Dadurch kann der Eingangsprogrammcode 300 beispielswiese in einem Codeabschnitt eine benannte Variable umfassen, welche in einem von diesem Codeabschnitt getrennten anderen Codeabschnitt deklariert wurde. Die beiden Codeabschnitte können beispielsweise in der zweiten Programmiersprache verfasst sein und voneinander durch einen in der ersten Programmiersprache verfassten und durch Steuersequenzen markierten Codeabschnitt getrennt sein.

Das Übersetzungsmodul 210 ist dazu ausgebildet, die semantische Analyse des Eingangsprogrammcodes 300 zur Ladezeit des Steuerprogramms auszuführen, es erfolgt also eine statische semantische Analyse des Eingangsprogrammcodes 300.

Das Speicherzuweisungsmodul 218 des Übersetzungsmoduls 210 ist dazu ausgebildet, den in dem Eingangsprogrammcode 300 verwendeten Variablen und Parametern von Funktionen Speicheradressen des Speichers 120 des Steuerungssystems 1 zuzuweisen. Bei der Speicheradresse kann es sich um eine ab-solute Speicheradresse des Speichers 120 handeln, beispielsweise wenn die Speicheradresse einer globalen Variable zugeordnet ist. Bei der Speicheradresse kann es sich auch um eine relative Speicheradresse handeln, welche in Abhängigkeit einer anderen Speicheradresse einer übergeordneten Datenstruktur definiert ist. Eine relative Speicheradresse kann beispielsweise für eine lokale Variable verwendet werden und die relative Speicheradresse kann beispielsweise in Abhängigkeit eines Speicherorts eines Funktionsaufrufs einer Funktion, die die Variable enthält, definiert sein. Die relative Speicheradresse kann auch für einen Parameter einer Funktion verwendet werden, wobei die relative Speicheradresse ebenfalls in Abhängigkeit eines Speicherorts eines Funktionsaufrufs der Funktion definiert wird.

Die Zuweisung der Speicheradressen des Speichers 120 findet dabei für alle in dem Eingangsprogrammcode 300 bzw. dem einheitlichen Strukturbaum 314 enthaltenen Variablen statt. Der von dem Übersetzermodul 210 erzeugte Zwischencode 320 weist dadurch keine Variablenbezeichner, sondern nur noch Speicheradressen auf. Die Zuweisung der Speicheradressen erfolgt also vor Ausführung des Zwischencodes 320 des Steuerprogramms, beispielsweise kann sie zur Ladezeit des Steuerprogramms erfolgen.

Das Speicherzuweisungsmodul 218 übermittelt nach der Zuweisung der Speicheradressen den einheitlichen Strukturbaum 314 mit den Informationen über die Speicheradressen und den semantischen Informationen 316 an ein Zwischencodeerzeugungsmodul 219. Das Zwischencodeerzeugungsmodul 219 ist dazu ausgebildet, aus dem einheitlichen Strukturbaum und dem Strukturbaum 314, den semantischen Informationen 316 und den Informationen über die Speicheradressen den einheitlichen Zwischencode 320 zu erzeugen. Die Erzeugung des Zwischencodes 320 kann dabei vor einer Ausführung des Zwischencodes 320 durch das Verarbeitungsmodul 230 der Maschinensteuerung 200 abgeschlossen sein.

Der Zwischencode 320 umfasst das durch den Eingangsprogrammcode 300 dargestellte Steuerprogramm als eine Folge von Arbeitsanweisungen, welche von dem Verarbeitungsmodul 230 sequentiell ausgeführt werden. Dabei umfassen die Arbeitsanweisungen jeweils Informationen darüber, auf welchen Datentypen sie operieren. Beispielsweise kann eine Arbeitsanweisung, welche eine Zahl manipuliert, Informationen darüber enthalten, ob es sich dabei um eine Zahl vom Typ "Int", "LReal", oder "Real" handelt. Folglich gibt es für eine Operation, beispielsweise für eine Addition, jeweils einen eigenen Typ von Arbeitsanweisungen für jeden möglichen Datentyp der beteiligten Zahlen.

Zur Ausführung des Zwischencodes 320 und für die Erzeugung des Datenstroms von kernspezifischen Steuerbefehlen 338 umfasst das Verarbeitungsmodul 230 ein Ausführungsmodul 232, einen NC-Prozessor 234, ein Sortiermodul 236 und ein NC-Kern-Adaptermodul 238.

Das Ausführungsmodul 232 ist dazu ausgebildet, auf Grundlage der Arbeitsanweisungen des Zwischencodes 320 einen Datenstrom von NC-Anweisungen 330 zu erzeugen und an den NC-Prozessor 234 zu übertragen. Der NC-Prozessor 234 wiederum ist dazu ausgebildet, auf Grundlage der NC-Anweisungen 330 einen Datenstrom von Steuerbefehlen 334 zu erzeugen.

Die Steuerbefehle 334 können unter anderem die Bewegungsanweisungen enthalten, die die von der Maschine 2 auszuführenden Maschinenbewegungen beschreiben. Bei den Maschinenbewegungen kann es sich beispielsweise um Werkzeugbahnen handeln, entlang denen ein Bearbeitungswerkzeug der Maschine 2 verfahren wird. Wie im Zusammenhang mit Figur 1 beschrieben werden die Bewegungsanweisungen der Steuerbefehle 334 durch Geometrieelemente beschrieben, wobei die Geometrieelemente durch einen Satz Geometrieparameter definiert werden.

Die von dem Ausführungsmodul 232 erzeugten NC-Anweisungen 330 lassen sich vollständig in einer der beiden für die Abfassung des Eingangsprogrammcodes 300 verwendeten Programmiersprachen, nämlich in der ersten Programmiersprache, ausdrücken. Handelt es sich bei der zweiten Programmiersprache um eine Programmiersprache mit Hochsprachelementen, wie Variablen, benannten Funktionen mit formalen Parametern oder Kontrollflussanweisungen, führt das Ausführungsmodul 232 bei der Verarbeitung des Zwischencodes 320 Arbeitsanweisungen, welche auf diesen Hochsprachelementen basieren, vollständig aus. Das Ausführen einer Arbeitsanweisung, welche auf einer Kontrollflussanweisung basiert, kann zur Folge haben, dass das Ausführungsmodul 232 nicht die auf die betreffende Arbeitsanweisung folgende nächste Arbeitsanweisung ausführt, sondern innerhalb des Zwischencodes 320 zu einer anderen Arbeitsanweisung springt und die Ausführung der Arbeitsanweisungen ausgehend von dieser anderen Arbeitsanweisung fortsetzt.

Zur Ausführung von Arbeitsanweisungen, die aus Codeabschnitten mit Variablen erstellt wurden, greift das Ausführungsmodul 232 auf eine Speicheradresse des Speichers 120 zu, welche der entsprechenden Variable zugeordnet ist. Der Zugriff auf den Speicher 120 kann sowohl auf den gemeinsamen Speicherbereich 122, als auch auf den lokalen Speicherbereich 124 erfolgen. Bei dem Speicherzugriff kann das Ausführungsmodul 232 Daten in den Speicher 120 schreiben oder Daten aus dem Speicher 120 lesen.

Die von dem Ausführungsmodul 232 erzeugten NC-Anweisungen 330 werden als Datenstruktur an den NC-Prozessor 234 übertragen, beispielsweise können die NC-Anweisungen 330 als binär codierte Datenstrukturen übertragen werden. Die aus den Arbeitsanweisungen des Zwischencodes 320 erstellten NC-Anweisungen 330 werden durch den NC-Prozessor 234 ohne Speicherzugriffe auf den Speicher 120 oder Variablenauswertungen in die Steuerbefehle 334 umgesetzt. Dabei werden die NC-Anweisungen 330 durch den NC-Prozessor 234 rein sequentiell abgearbeitet, es werden also insbesondere keine Kontrollflussanweisungen ausgewertet oder Programmsprünge ausgeführt.

Der NC-Prozessor 234 kann auch dazu ausgebildet sein, bei der Abarbeitung der NC-Anweisungen 330 und der Erzeugung der Steuerbefehle 334, also während der Laufzeit des durch den Eingangsprogrammcode 300 repräsentierten Steuerprogramms, unterschiedliche Zustände einzunehmen. Der Zustand des NC-Prozessors 234 kann beispielsweise Koordinatensysteme, in denen der NC-Prozessor 234 Bewegungsanweisungen der NC-Anweisungen 330 auswertet, Koordinatentransformationen, welche auf die Bewegungsanweisungen der NC-Anweisungen 330 angewendet werden, Vorschubgeschwindigkeiten, mit denen Bewegungsanweisungen der NC-Anweisungen 330 ausgeführt werden sollen, Definitionen von Werkzeugsätzen, Art und Kennzahlen eines gerade verwendeten Werkzeugs oder eine aktuelle Werkzeugposition repräsentieren. Der Zustand des NC-Prozessors 234 kann auch eine auf die Bewegungsanweisungen anzuwendende Nullpunktverschiebung umfassen.

Das Ausführungsmodul 232 ist dazu ausgebildet, den Zustand des NC-Prozessors 234 während der Laufzeit des Steuerprogramms zu verändern. Die Zustandsänderung kann durch eine einzelne oder eine Folge der an den NC-Prozessor übertragenen NC-Anweisungen 330 ausgelöst werden. Kann die Zustandsänderung nicht in der ersten Programmiersprache ausgedrückt werden, so kann die Zustandsänderung von dem Ausführungsmodul 232 auch dadurch ausgelöst werden, dass eine zusätzliche Anweisung an den NC-Prozessor 234 übertragen wird, welche nicht konform ist mit der ersten Programmiersprache. Die Zustandsänderung kann sowohl durch Arbeitsanweisungen ausgelöst werden, die auf einer in der ersten Programmcodekomponente des Eingangsprogrammcodes 300 enthaltene Zeichensequenz der ersten Programmiersprache, als auch auf einer in der zweiten Programmcodekomponente des Eingangsprogrammcodes 300 enthaltene Zeichensequenz der zweiten Programmiersprache basieren.

Zusätzlich zu dem Ausführungsmodul 232 kann auch die Serversteuerung 110 dazu ausgebildet sein, den Zustand des NC-Prozessors 234 zu ändern. Über die Serversteuerung 110 und den Serversteuerkanal 58 kann damit auch das SPS-Modul 30 den Zustand des NC-Prozessors 234 verändern.

Das Ausführungsmodul 232 ist dazu ausgebildet, Statusinformationen 332 von dem NC-Prozessor 234 zu empfangen. Die Statusinformationen 332 umfassen Informationen über den momentanen Zustand des NC-Prozessors 234 und können beispielsweise auch Informationen über die Anzahl von noch in Steuerbefehle 334 umzusetzenden NC-Anweisungen 330 enthalten. Das Ausführungsmodul 232 ist damit dazu ausgebildet, Arbeitsanweisungen des Zwischencodes 320 abzuarbeiten, welche den Status berücksichtigen, den der NC-Prozessor 234 zur Ausführungszeit der betreffenden Arbeitsanweisungen jeweils einnimmt.

Handelt es sich bei der ersten Programmiersprache um die Sprache *G-Code,* kann das Ausführungsmodul 232 beispielsweise dazu ausgebildet sein, die NC-Anweisungen 330 als Datenstrukturen an den NC-Prozessor 234 zu übertragen, welche durch *G-Code* ausgedrückt werden können. Dabei kann es sich um standardkonformen *G-Code* nach ISO 6983 oder um standardkonformen *G*-Code, welcher um zusätzliche Sprachelemente erweitert wurde, handeln. Der NC-Prozessor 234 kann in solch einem Fall beispielsweise als G-Code-Übersetzer bzw. G-Code-Interpreter ausgebildet sein, welcher dazu ausgebildet ist, *G*-Code zu verarbeiten und sich bis auf die beschriebenen Unterschiede wie eine herkömmliche G-Code-Steuerung verhält.

*G-Code* besteht aus einer Folge von G-code-Worten mit jeweils einem Adressbuchstaben und einem Wert. Die NC-Anweisungen 330 können daher jeweils als ein Element eines Datenarrays codiert sein, wobei jedes Element des Datenarrays jeweils ein Datenpaar enthält, welches aus dem Adressbuchstaben des G-Code-Wortes und dem Zahlenwert des Werts des G-Code-Wortes besteht. Das Datenarray kann beispielsweise binär codiert sein. Das Datenarray einer NC-Anweisung 330 kann beispielsweise jeweils einen G-Code-Satz darstellen, also eine Folge aus einem G-Code-Wort oder aus mehreren G-Code-Worten.

Beispielsweise beschreibt eine Zeichensequenz "G01 X100 Y40 F42" einen G-Code-Satz, welcher eine Folge aus vier Zeichensequenzen umfasst, die jeweils Nichtterminalsymbole "G-Code-Wort" mit den Adressbuchstaben "G", "X", "Y" und "F", sowie den Werten "01", "100", "40" und "42" repräsentieren. Der G-Code-Satz beschreibt eine lineare Bewegung mit einem definierten Vorschub von 42 an eine Position mit Koordinaten X=100 und Y=40. Sie kann durch eine NC-Anweisung 330 mit den Datenpaaren "G, 01", "X, 100", "Y, 40" und "F, 42" beschrieben werden.

Zur Erzeugung einer der NC-Anweisungen 330, die eine Folge von G-Code-Worten repräsentiert, umfasst der Zwischencode 320 Arbeitsanweisungen, nach denen das Ausführungsmodul 232 zunächst alle Werte der Folge berechnet. Außerdem umfasst der Zwischencode 320 abschließende Arbeitsanweisungen, nach denen das Ausführungsmodul 232 sequentiell alle Datenpaare, welche jeweils aus dem Adressbuchstaben und dem für den jeweiligen Adressbuchstaben errechneten Zahlenwert bestehen, in die die NC-Anweisung 330 repräsentierende Datenstruktur schreibt und die Datenstruktur an den NC-Prozessor 234 überträgt. Dabei kann beispielsweise für jeden G-Code-Satz, den der Eingangsprogrammcode 300 umfasst, jeweils eine der NC-Anweisungen 330 erzeugt und an den NC-Prozessor übermittelt werden.

Der NC-Prozessor 234 interpretiert den *G-Code,* der durch die NC-Anweisungen 330 repräsentiert wird, und setzt die NC-Anweisungen 330 in die Steuerbefehle 334 um. Die Zustände des NC-Prozessors 234 definieren dabei unter anderem, auf welche Weise die NC-Anweisungen 330 in Bewegungsanweisungen bzw. Fertigungsanweisungen umgesetzt werden. In einem ersten Prozessorzustand des NC-Prozessors 234, werden beispielsweise die NC-Anweisungen 330 in Steuerbefehle 334 umgesetzt, die eine linear zu interpolierende Gerade darstellen. In einem zweiten Prozessorzustand des NC-Prozessors 234, werden die NC-Anweisungen 330 in Steuerbefehle 334 umgesetzt, die im Uhrzeigersinn zu interpolierende Kreisbögen darstellen. In einem dritten Prozessorzustand des NC-Prozessors 234, werden die NC-Anweisungen 330 in Steuerbefehle 334 umgesetzt, die entgegen dem Uhrzeigersinn zu interpolierende Kreisbögen darstellen.

Der NC-Prozessor 234 wird in den ersten Prozessorzustand durch eine NC-Anweisung 330 versetzt, welche das Datenpaar "G, 1" umfasst. In den zweiten Prozessorzustand wird der NC-Prozessor 234 durch eine NC-Anweisung 330 versetzt, welche das Datenpaar "G, 2" umfasst, und in den dritten Prozessorzustand durch eine NC-Anweisung 330 mit dem Datenpaar "G, 3". Nach dem Empfang der jeweiligen NC-Anweisung interpretiert der NC-Prozessor 234 alle folgenden NC-Anweisungen, welche Koordinaten, etwa "X" oder "Y", darstellen, als Koordinatenwerte der dem jeweiligen Geometrieelement zugeordneten Geometrieparameter.

Des Weiteren kann der Zustand des NC-Prozessors 234 beispielsweise eine auf die NC-Anweisungen 330 anzuwendende Koordinatentransformation umfassen. Die von dem NC-Prozessor 234 ausgegebenen Steuerbefehle 334 können ausgewertet werden, ohne die in der Programmiersprache *G-Code* vorgesehenen Zustände des NC-Prozessors 234 zu berücksichtigen. So umfassen die Steuerbefehle 334 beispielsweise jeweils für jede Bewegungsanweisung sowohl Informationen über das die Bewegung repräsentierende Geometrieelement, als auch in einem festgelegten Koordinatensystem dargestellte Koordinatenwerte der Geometrieparameter des Geometrieelements.

Bei einer alternativen Ausgestaltung des Verarbeitungsmoduls 230 kann das Ausführungsmodul 232 auch dazu ausgebildet sein, die NC-Anweisungen 330 derart zu erzeugen, dass sie in einer anderen als der ersten Programmiersprache ausgedrückt werden können. Beispielsweise können die NC-Anweisungen 330 vollständig in der zweiten Programmiersprache oder in einer von der ersten und der zweiten Programmiersprache unterschiedlichen dritten Programmiersprache ausgedrückt werden. Bei der dritten Programmiersprache kann es sich beispielsweise um eine Programmiersprache zur Programmierung von Robotern, wie VAL, Rapid oder KRL handeln. Auch in diesen Fällen kann der NC-Prozessor 234 auf eine Art und Weise ausgebildet sein, welche für die Verarbeitung von in der betreffenden Programmiersprache verfassten Anweisungen optimiert ist.

Das Ausführungsmodul 232 ist weiterhin dazu ausgebildet, einen Datenstrom weiterer Steuerbefehle 335 zu erzeugen. Die weiteren Steuerbefehle 335 sind, soweit keine Unterschiede beschrieben werden, ausgebildet wie die Steuerbefehle 334. Die weiteren Steuerbefehle 335 können beispielsweise Bewegungsanweisungen umfassen, welche in der ersten Programmiersprache nicht ausgedrückt werden können. Beispielsweise können derartige Bewegungsanweisungen auf nicht-standardkonformen Geometrieelementen basieren, die die erste Programmiersprache nicht umfasst. Handelt es sich bei der ersten Programmiersprache um die Sprache *G-Code,* so kann ein nichtstandardkonformes Geometrieelement beispielsweise eine dreidimensionale Schraubenlinie sein, also eine Überlagerung einer Rotation um eine Rotationsachse mit einer linearen Bewegung entlang der Rotationsachse. Die Schraubenlinie kann dabei auch mehrere Umdrehungen umfassen. Die Rotationsachse muss dabei nicht senkrecht auf einer Hauptebene eines zur Steuerung der Maschine 2 verwendeten Koordinatensystems sein.

Die Erzeugung der weiteren Steuerbefehle 335 kann aufgrund von Arbeitsanweisungen erfolgen, welche aus der in der zweiten Programmiersprache verfassten zweiten Programmcodekomponente des Eingangsprogrammcodes 300 erstellt wurden. Dabei können beispielsweise zur Erzeugung der weiteren Steuerbefehle 335 vorgesehene Funktionen aufgerufen werden.

Der Datenstrom von Steuerbefehlen 334 und der Datenstrom von weiteren Steuerbefehlen 335 werden von dem NC-Prozessor 234 bzw. dem Ausführungsmodul 232 an das Sortiermodul 236 übertragen. Das Sortiermodul 236 ist dazu ausgebildet, die Steuerbefehle 334 und die weiteren Steuerbefehle 335 als einen Datenstrom von in einer Ansteuerreihenfolge geordneten Steuerbefehlen 336 an ein NC-Kern-Adaptermodul 238 zu übertragen. Die Ansteuerreihenfolge ist dabei die Reihenfolge, in der die Steuerbefehle 334 und die weiteren Steuerbefehle 335 sequentiell durch das NC-Kanal-Modul 22 abgearbeitet und in Sollwerte und Zusatzkommandos für die Maschine 2 umgesetzt werden.

Beispielsweise kann die Ansteuerreihenfolge diejenige Reihenfolge sein, in welcher die den Steuerbefehlen 334 und den weiteren Steuerbefehlen 335 zugrundeliegenden Arbeitsanweisungen des Zwischencodes 320 durch das Ausführungsmodul 232 abgearbeitet werden. Durch die nebenläufige Erzeugung der Steuerbefehle 334 und der weiteren Steuerbefehle 335 durch den NC-Prozessor 234 bzw. das Ausführungsmodul 232 kann es aufgrund von unterschiedlichen Bearbeitungszeiten in dem NC-Prozessor 234 und dem Ausführungsmodul 232 dazu kommen, dass ein durch das NC-Kanal-Modul 22 später auszuführender Steuerbefehl vor einem durch das NC-Kanal-Modul 22 früher auszuführenden Steuerbefehl erzeugt und an das Sortiermodul 236 übertragen wird. Das Sortiermodul 236 hält in solch einem Falle den später auszuführenden Steuerbefehl bis zum Empfang des früher auszuführenden Steuerbefehls zurück und übermittelt zunächst den früher auszuführenden Steuerbefehl und dann erst den später auszuführenden Steuerbefehl als geordnete Steuerbefehle 336 an das NC-Kern Adaptermodul 238.

Das NC-Kern-Adaptermodul 238 ist dazu ausgebildet, die geordneten Steuerbefehle 336 in die kernspezifischen Steuerbefehle 338 umzusetzen. Die kernspezifischen Steuerbefehle 338 sind, soweit keine Unterschiede beschrieben werden, ausgebildet wie die Steuerbefehle 334 oder die weiteren Steuerbefehle 335. Die kernspezifischen Steuerbefehle 338 werden von dem NC-Kern-Adaptermodul 238 in einem Datenformat erzeugt, welches an die Datenschnittstelle, über welche der NC-Kern 20 die kernspezifischen Steuerbefehle 338 empfängt, angepasst ist. Beispielsweise können die kernspezifischen Steuerbefehle 338 dazu ausgebildet sein, mittels Datentelegrammen, insbesondere mittels ADS-Datentelegrammen eines TwinCAT-Steuerungssystems, übertragen zu werden.

Das NC-Kern-Adaptermodul 238 ist außerdem dazu ausgebildet, mehrere Steuerbefehle des Datenstroms geordneter Steuerbefehle 336 in einem der kernspezifischen Steuerbefehle 338 zusammenzufassen. Ebenso ist das NC-Kern-Adaptermodul 238 dazu ausgebildet, redundante oder überzählige Steuerbefehle des Datenstroms geordneter Steuerbefehle 336 aus dem Datenstrom zu entfernen, so dass diese nicht in kernspezifische Steuerbefehle 338 umgesetzt werden. Ein Steuerbefehl des Datenstroms geordneter Steuerbefehle 336 kann auch in mehrere der kernspezifischen Steuerbefehle 338 überführt werden.

Die von dem Ausführungsmodul 232 erzeugten weiteren Steuerbefehle 335 können auch einen NC-Synchronisations-Steuerbefehl umfassen, mittels dessen das Verarbeitungsmodul 230 und der NC-Kern 20 bzw. das NC-Kanal-Modul 22 miteinander synchronisiert werden. Über den NC-Synchronisations-Steuerbefehl wird eine Anforderung an den NC-Kern 20 übertragen, den Abschluss der Bearbeitung aller bis zu diesem Zeitpunkt übertragenen kernspezifischen Steuerbefehle 338 zu melden. Zugleich erfolgt eine Blockierung der Abarbeitung des Zwischencodes 320 durch das Ausführungsmodul 232. Nach Abarbeitung aller vorliegenden kernspezifischen Steuerbefehle 338 durch den NC-Kern 20, sendet der NC-Kern 20 eine entsprechende Meldung bzw. ein Signal über den NC-Kern-Statusmeldungskanal 56 an das Serversteuerungsmodul 110. Das Serversteuerungsmodul 110 veranlasst anschließend eine Aufhebung der Blockade des Ausführungsmoduls 232.

Analog zur Synchronisation zwischen Verarbeitungsmodul 230 und NC-Kern 20, kann mittels der weiteren Steuerbefehle 335 auch eine Synchronisation zwischen dem Verarbeitungsmodul 230 und dem SPS-Modul 30 erfolgen. Dabei wird von dem Ausführungsmodul 232 eine Meldung bzw. ein Signal über den Steuerbefehlkanal 52, den NC-Kern 20 und den Austauschkanal 40 von dem SPS-Modul 30 angefordert und die Abarbeitung des Zwischencodes 320 durch das Ausführungsmodul 232 blockiert. Die Meldung kann beispielsweise auf Grundlage einer Arbeitsanweisung des Zwischencodes angefordert werden. Das SPS-Modul 30 sendet die angeforderte Meldung über den Serversteuerkanal 58 an das Serversteuerungsmodul 110. Das Serversteuerungsmodul 110 veranlasst nach Empfang der Meldung eine Aufhebung der Blockade des Ausführungsmoduls 232. Das Senden der durch das Ausführungsmodul 232 angeforderten Meldung kann dabei beispielsweise von einem durch das SPS-Modul 30 erfassten Ereignis abhängen.

Alternativ kann die Blockade des Ausführungsmoduls 232 auch durch das SPS-Modul 30 über das Serversteuerungsmodul 110 ausgelöst werden und nach Empfang der von dem SPS-Modul 30 gesendeten Meldung durch das Serversteuerungsmodul 110 wieder aufgehoben werden. Zur Blockierung des Ausführungsmoduls 232 kann beispielsweise ein Semaphor verwendet werden, auf welches das Ausführungsmodul 232 und das Serversteuerungsmodul 110 zugreifen. Die Meldungen bzw. Signale des SPS-Moduls 30 und des NC-Kerns 20 verändern dabei den Zähler des Semaphors, um die Ausführung zu blockieren bzw. eine blockierte Ausführung wieder freizugeben.

Das Ausführungsmodul 232 des Verarbeitungsmoduls 230 kann beispielsweise als sogenannte Stack-Maschine ausgebildet sein. In solch einem Fall repräsentieren die Arbeitsanweisungen des Zwischencodes 320 sequentiell abzuarbeitende Anweisungen, welche Datenelemente eines Laufzeitkellers (engl. "run-time stack") manipulieren. Der Laufzeitkeller kann dabei in dem Speicher 120, insbesondere in dem lokalen Speicherbereich 124 realisiert sein. Der Laufzeitkeller stellt einen "last-in-first-out" (LIFO) Speicher dar, bei welchem die in dem Laufzeitkeller abgelegten Datenelemente in umgekehrter Reihenfolge wieder entnommen werden und das Ausführungsmodul 232 jeweils auf das oberste, das heißt das jüngste noch in dem Speicher vorhandene Datenelement zugreifen kann.

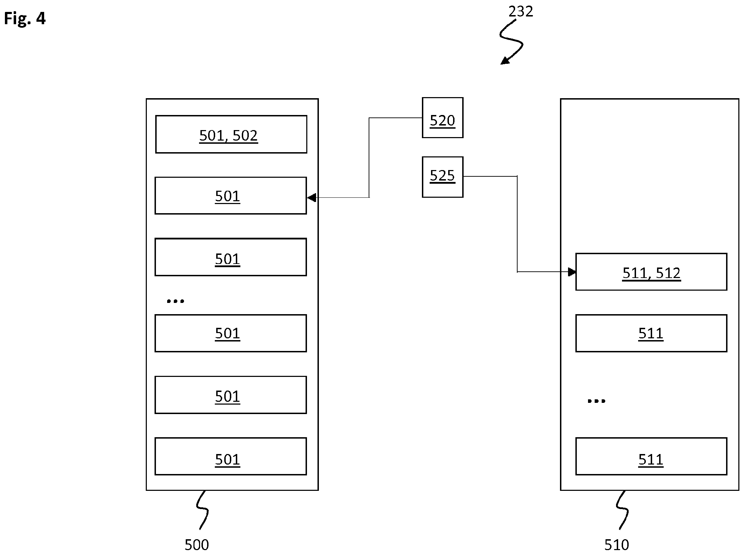

**Figur 4** zeigt eine schematische Darstellung des als Stack-Maschine ausgebildeten Ausführungsmoduls 232, welches einen Programmspeicher 500 und einen Laufzeitkeller 510 umfasst.

Der Programmspeicher 500 enthält eine Folge von Arbeitsanweisungen 501 des Zwischencodes 320, welche beim Laden des Eingangsprogrammcodes 300 durch das Übersetzungsmodul 210 erzeugt wird. Ein Programmzähler 520 des Ausführungsmoduls 232 zeigt jeweils auf die als nächstes abzuarbeitende Arbeitsanweisung 501. Zu Beginn der Ausführung des Zwischencodes 320 zeigt der Programmzähler 520 auf eine erste Arbeitsanweisung 502. Nach Abarbeitung einer der Arbeitsanweisungen 501 wird der Programmzähler 520 auf die als nächstes abzuarbeitende Arbeitsanweisung gesetzt. In der Regel ist dies die in der Folge als nächstes folgende Arbeitsanweisung. Bei einem Programmsprung, beispielsweise aufgrund einer Kontrollflussanweisung, kann die als nächstes abzuarbeitende Arbeitsanweisung auch eine andere als die nächstfolgende Arbeitsanweisung sein. Dabei kann die andere Arbeitsanweisung in der Folge von Arbeitsanweisungen 501 vor oder nach der den Programmsprung auslösenden Arbeitsanweisung enthalten sein.

Der Laufzeitkeller 510 enthält eine Folge von Datenelementen 511. Die Arbeitsanweisungen 501 geben jeweils vor, auf welche Weise die in dem Laufzeitkeller 510 abgelegten Datenelemente 511 manipuliert werden sollen. Insofern stellen die Arbeitsanweisungen 501 jeweils Stackanweisungen dar, welche auf dem Laufzeitkeller 510 operieren. Zu Beginn der Ausführung des Zwischenprogrammcodes 320 ist der Laufzeitkeller 510 leer und es befindet sich keines der Datenelemente 511 in dem Laufzeitkeller 510. Die Ausführung der Arbeitsanweisungen 501 kann zu Folge haben, dass durch das Ausführungsmodul 232 auf den Laufzeitkeller 510 zugegriffen wird und eines der Datenelemente 511 in dem Laufzeitkeller 510 abgelegt wird oder aus dem Laufzeitkeller 510 entnommen wird.

Der Zugriff erfolgt dabei immer auf ein als letztes eingefügtes und noch nicht wieder entferntes oberstes Datenelement 512 Ein Stackzeiger 525 des Ausführungsmoduls 232 zeigt dazu jeweils auf das oberste Datenelement 512. Bei einem Lesezugriff auf den Laufzeitkeller 510 wird das oberste Datenelement 512 eingelesen und der Stackzeiger 525 auf das darunter liegende, also das nächstjüngere der in dem Laufzeitkeller 510 vorhandenen Datenelemente gesetzt. Soll ein weiteres Datenelement in dem Laufzeitkeller 510 abgelegt werden, so wird das betreffende Datenelement in den Laufzeitkeller 510 geschrieben und der Stackzeiger 525 auf das neu geschriebene Datenelement gesetzt.

Bei der Ausführung der Arbeitsanweisungen 501 werden durch das Ausführungsmodul 232 nacheinander mehrere Verfahrensschritte ausgeführt. Zunächst kann ein Datenzugriff auf den Laufzeitkeller 510 erfolgen und es können eines oder mehrere der Datenelemente 511 aus dem Laufzeitkeller 510 gelesen werden. Anschließend können Berechnungen durchgeführt werden, bei welchen die entfernten Datenelemente verwendet werden und die ein oder mehrere neue Datenelemente als Ergebnisse erzeugt werden. Zusätzlich können Seiteneffekte, die nicht mit einer Manipulation des Laufzeitkellers 510 verbunden sind, ausgelöst werden. Die Seiteneffekte umfassen beispielsweise eine Erzeugung einer NC-Anweisung 330 oder eines der weiteren Steuerbefehle 335. Danach können die ein oder mehreren Ergebnisse der Berechnung in dem Laufzeitkeller 510 abgelegt werden. Schließlich kann der Programmzähler 520 neu gesetzt werden und es kann die Ausführung weiterer Arbeitsanweisungen 501 durch das Ausführungsmodul 232 gegebenenfalls blockiert werden. Bei der Ausführung der Arbeitsanweisungen 501 kann auch ein dem Laufzeitkeller 510 entnommenes Datenelement in den Speicher 120 geschrieben oder ein in dem Speicher 120 enthaltenes Datenelement in dem Laufzeitkeller 510 abgelegt werden.

Das Verarbeitungsmodul 230 kann objektorientiert aufgebaut sein und arbeiten. Der Zwischencode 320 enthält die Arbeitsanweisungen 501 in solch einem Fall als eine Liste von Zeigern auf Anweisungsobjekte. Die Zeiger werden in dem Programmspeicher 500 als Arbeitsanweisungen abgelegt. Die Klassen der Anweisungsobjekte definieren jeweils Methoden, welche Verfahrensschritte zur Ausführung der Arbeitsanweisungen des Zwischencodes 320 implementieren. Die Methoden können dabei als Maschinencode eines das Steuerungssystem 1 ausführenden Computersystems vorliegen. Die Anweisungsobjekte können außerdem Attribute aufweisen, welche beispielsweise eine in den Laufzeitkeller 510 zu ladende Konstante umfassen und bei der Erzeugung des Zwischencodes 320 gesetzt werden. Die Attribute können auch die Adressbuchstaben des G-Code-Wortes einer zu erzeugenden NC-Anweisung 330 umfassen. Die Attribute können beispielsweise von den Methoden bei deren Ausführung gelesen werden.

Bei einer objektorientierten Ausführung des Verarbeitungsmoduls 230 sind auch die NC-Anweisungen 330, die Steuerbefehle 334, die weiteren Steuerbefehle 335 und die geordneten Steuerbefehle 336 als Datenobjekte realisiert. Diese Datenobjekte werden jeweils zwischen dem Ausführungsmodul 232, dem NC-Prozessor 234, dem Sortiermodul 236 und dem NC-Kern-Adaptermodul 238 übertragen, indem Zeiger auf die jeweiligen Datenobjekte übergeben werden. Das NC-Kern-Adaptermodul 238 zerstört jeweils die Datenobjekte, die die geordneten Steuerbefehle 336 repräsentieren, und erzeugt die kernspezifischen Steuerbefehle 338 zur Übertragung über den Datenübertragungskanal 50.

Im Folgenden wird die Umsetzung des Eingangsprogrammcodes 300 in die Arbeitsanweisungen 501 des Zwischencode 320 und die Ausführung des Zwischencodes 320 durch das Ausführungsmodul 234 anhand von zwei Programmcodeteilen des Eingangsprogrammcodes 300 beschrieben. Dabei ist die erste Programmiersprache *G-Code* und die zweite Programmiersprache *Strukturierter Text.* Der Eingangsprogrammcode 300 weist G-Zeichensequenzen auf, welche jeweils in der Programmiersprache *G-Code* verfasst sind, sowie ST-Zeichensequenzen, welche jeweils in der Programmiersprache *Strukturierter Text* verfasst sind. Die G-Zeichensequenzen sind in der ersten Programmcodekomponente des Eingangsprogrammcodes 300 und die ST-Zeichensequenzen von der zweiten Programmcodekomponente des Eingangsprogrammcodes 300 enthalten. Die erste Steuersequenz 420 zur Abgrenzung zwischen den Programmcodekomponenten ist das Sonderzeichen "{", die zweite Steuersequenz 422 das Sonderzeichen "}", die dritte Steuersequenz 424 das Sonderzeichen "!" und die vierte Steuersequenz 426 das Zeilenende.

Ein erster Programmcodeteil des Eingangsprogrammcodes 300 lautet:
"!foo := 555;
G1 X=111+foo Y{bar(222)} M333 M444".

Der erste Programmcodeteil umfasst eine erste Codezeile, die mit der dritten Steuersequenz 424, gebildet durch das Sonderzeichen "!", beginnt. Die dritte Steuersequenz 424 wird gefolgt von einer ersten ST-Zeichensequenz "foo := 555", welche von der vierten Steuersequenz 426, nämlich dem Zeilenende, gefolgt wird. Der erste Programmcodeteil umfasst außerdem eine auf die erste Codezeile folgende zweite Codezeile mit einer ersten G-Zeichensequenz "G1 X=111+foo Y", gefolgt von der ersten Steuersequenz 424, nämlich dem Sonderzeichen "{", gefolgt von einer zweiten ST-Zeichensequenz "bar(222)", gefolgt von der zweiten Steuersequenz 422, nämlich dem Sonderzeichen "}", gefolgt von einer zweiten G-Zeichensequenz "M333 M444".

Die erste ST-Zeichensequenz stellt eine Zuweisung des Zahlenwertes 555 an die ST-Variable "foo" dar. Die ST-Variable "foo" wird an anderer Stelle des Eingangsprogrammcodes 300 als eine Variable vom Typ "Int" deklariert, der zugewiesene Zahlenwert ist also vom Datentyp "Int". Die erste G-Zeichensequenz, die zweite ST-Zeichensequenz und die zweite G-Zeichensequenz repräsentieren zusammen eine Ableitung des Nichtterminalsymbols "G-Code-Satz", welche eine Folge aus fünf Nichtterminalsymbolen "G-Code-Wort" umfasst. Das an zweiter Stelle stehende G-Code-Wort "X=100+foo" wird repräsentiert durch den Adressbuchstaben "X" und einen Wert, der durch den G-Ausdruck "100+foo" gegeben ist. Die Zeichensequenz "foo" repräsentiert eine ST-Variable und ist gemäß der Variableneinbettungsregel in den G-Ausdruck "100+foo" eingebettet. Die Zeichensequenz "100+foo" repräsentiert also eine Ableitung des Nichtterminalsymbols "G-Ausdruck" der ersten Programmiersprache, welche ein durch die Zahl 100 repräsentierte Grundsymbol "G-Dezimalzahl", ein durch das Pluszeichen repräsentiertes Grundsymbol "Plusoperator" und das durch "foo" repräsentierte Nichtterminalsymbol "ST-Variable" umfasst.

Das G-Code-Wort "Y{bar(222)}", welches das an dritter Stelle stehende G-Code-Wort des aus der ersten G-Zeichensequenz, der zweiten ST-Zeichensequenz und der zweiten G-Zeichensequenz gebildeten G-Code-Satzes darstellt, wird repräsentiert durch den Adressbuchstaben "Y" und einen Wert, der gegeben ist durch die zweite ST-Zeichensequenz "bar(222)", welche einen ST-Ausdruck darstellt. Die zweite ST-Zeichensequenz "bar(222)" stellt einen Aufruf einer benannten Funktion mit dem Namen "bar" und mit einem Parameter, der durch den konstanten Zahlenwert 222 gegeben ist, dar. Die Funktion "bar" gibt bei einem Aufruf einen Zahlenwert vom Datentyp "LReal" zurück. Die zweite ST-Zeichensequenz "bar(222)" ist gemäß der zweiten Einbettungsregel in das an dritter Stelle stehende G-Code-Wort des G-Code-Satzes eingebettet. Entsprechend repräsentiert die Zeichensequenz "Y{bar(222)}" eine Ableitung des Nichtterminalsymbols "G-Code-Wort", welche das durch "Y" repräsentierte Grundsymbol "Adressbuchstabe" und das durch "bar(222)" repräsentierte Nichtterminalsymbol "ST-Ausdruck" umfasst.

Das Zerlegungsmodul 212 befindet sich während des Einlesens des ersten Programmcodeteils zunächst in dem ersten Zustand 404, würde also eingelesene Zeichensequenzen gemäß der ersten Grundsymbolspezifikation in Grundsymbole der ersten Programmiersprache *G-Code* umsetzen. Beim Einlesen der dritten Steuersequenz 424, gebildet durch das Zeichen "!", wechselt das Zerlegungsmodul 212 in den dritten Zustand 408 und setzt die erste ST-Zeichensequenz "foo := 555" gemäß der zweiten Grundsymbolspezifikation in Grundsymbole der zweiten Programmiersprache *Strukturierter Text* um. Folglich wird die erste ST-Zeichensequenz in ein Grundsymbol "ST-Bezeichner" mit dem Inhalt "foo", in ein Grundsymbol "Zuweisungsoperator" mit dem Inhalt ":=" und in ein Grundsymbol "ST-Integer-Zahl" mit dem Inhalt 555 zerlegt.

Nach Einlesen der vierten Steuersequenz 426, dargestellt durch das Zeilenende, wechselt das Zerlegungsmodul zurück in den ersten Zustand 404. Die erste G-Zeichensequenz wird folglich in Grundsymbole der ersten Programmiersprache *G-Code* umgesetzt. Dabei wird zunächst das Grundsymbol "Adressbuchstabe" mit dem Inhalt "G", dann das Grundsymbol "G-Dezimalzahl" mit dem Inhalt 1, dann das Grundsymbol "Adressbuchstabe" mit dem Inhalt "X", dann ein Grundsymbol "G-Zuweisung" mit dem Inhalt "=", dann das Grundsymbol "G-Dezimalzahl" mit dem Inhalt "111", dann ein Grundsymbol "G-Plusoperator" mit dem Inhalt "+", dann das Grundsymbol "G-Bezeichner" mit dem Inhalt "foo" und schließlich das Grundsymbol "Adressbuchstabe" mit dem Inhalt "Y" erzeugt.

Bei dem darauffolgenden Einlesen der ersten Steuersequenz 420 wechselt das Zerlegungsmodul 212 aus dem ersten Zustand 404 in den zweiten Zustand 406 und setzt die folgende zweite ST-Zeichensequenz in Grundsymbole der zweiten Programmiersprache *Strukturierter Text* um. Dabei wird das Grundsymbol "ST-Bezeichner" mit dem Inhalt "bar", gefolgt von einem Grundsymbol "ST-Klammerauf" mit dem Inhalt "(", gefolgt von einem Grundsymbol "ST-Integer-Zahl" mit dem Inhalt 222, gefolgt von dem Grundsymbol "ST-Klammerzu" mit dem Inhalt ")" erzeugt.

Bei dem darauffolgenden Einlesen der zweiten Steuersequenz 422 wechselt das Zerlegungsmodul 212 aus dem zweiten Zustand 406 zurück in den ersten Zustand 404 und setzt die folgende zweite G-Zeichensequenz in Grundsymbole der ersten Programmiersprache *G-Code* um. Dabei wird das Grundsymbol "Adressbuchstabe" mit dem Inhalt "M", gefolgt von dem Grundsymbol "G-Dezimalzahl" mit dem Inhalt "333", gefolgt von dem Grundsymbol "Adressbuchstabe" mit dem Inhalt "M", gefolgt von dem Grundsymbol "G-Dezimalzahl" mit dem Inhalt "444" erzeugt. Die erste Steuersequenz 420, die zweite Steuersequenz 422, die dritte Steuersequenz 424 und die vierte Steuersequenz 426 werden jeweils nicht in Grundsymbole umgesetzt.

Die Grundsymbole "Adressbuchstabe", "G-Bezeichner", "G-Dezimalzahl" und "G-Plusoperator" sind jeweils Grundsymbole der ersten Programmiersprache *G-Code.* Die Grundsymbole "ST-Bezeichner", "ST-Integer-Zahl", "Zuweisungsoperator", "ST-Klammerauf" und "ST-Klammerzu" sind jeweils Grundsymbole der zweiten Programmiersprache *Strukturierter Text.*

Ein aus dem ersten Programmcodeteil erzeugter erster Zwischencodeteil weist eine erste Folge von Arbeitsanweisungen auf. Die erste Folge von Arbeitsanweisungen umfasst als eine erste Arbeitsanweisung eine Anweisung, die aus der ersten ST-Zeichensequenz der ersten Programmcodekomponente erzeugt wurde, eine erste Konstante mit dem Zahlenwert 555 als Attribut umfasst und die erste Konstante auf dem Laufzeitkeller 510 ablegt. Als eine weitere Anweisung umfasst die erste Folge von Anweisungen eine Anweisung, welche den Zahlenwert der ersten Konstante von dem Laufzeitkeller 510 entfernt und in dem Speicher 120 an der Speicheradresse "Adresse von foo" speichert, wobei "Adresse von Foo" durch das Speicherzuweisungsmodul 218 festgelegt wird und ein Attribut des die Anweisung repräsentierenden Anweisungsobjekts ist.

Als eine auf die erste Arbeitsanweisung folgende zweite Arbeitsanweisung umfasst die erste Folge eine Anweisung, welche auf Grundlage der ersten G-Zeichensequenz der ersten Programmcodekomponente erzeugt wurde, eine zweite Konstante mit dem Zahlenwert 1 als Attribut umfasst und die zweite Konstante in dem Laufzeitkeller 510 ablegt. Als eine auf die zweite Arbeitsanweisung folgende dritte Arbeitsanweisung umfasst die erste Folge eine Anweisung, die eine dritte Konstante mit dem Zahlenwert 111 als Attribut umfasst und die dritte Konstante in dem Laufzeitkeller 510 ablegt.

Als eine auf die dritte Arbeitsanweisung folgende vierte Arbeitsanweisung umfasst die erste Folge eine Anweisung, die den an der Adresse "Adresse von foo" gespeicherten Zahlenwert 555 aus dem Speicher 120 lädt und in dem Laufzeitkeller 510 ablegt. Als eine auf die vierte Arbeitsanweisung folgende fünfte Arbeitsanweisung umfasst die erste Folge eine Anweisung, die das oberste Datenelement in dem Laufzeitkeller 510, nämlich die Integer-Zahl 555, vom Datentyp "Int" in den Datentyp "LReal" konvertiert. Als eine auf die fünfte Arbeitsanweisung folgende sechste Arbeitsanweisung umfasst die erste Folge eine Anweisung, die das oberste Datenelement und das unter diesem liegende nächstuntere Datenelement aus dem Laufzeitkeller 510 einliest, die beiden Datenelemente addiert und das Ergebnis der Addition wieder als oberstes Datenelement in den Laufzeitkeller schreibt.

Als eine auf die sechste Arbeitsanweisung folgende siebte Arbeitsanweisung umfasst die erste Folge eine Anweisung, die eine vierte Konstante mit dem Zahlenwert 222 als Attribut umfasst und in dem Laufzeitkeller 510 ablegt. Als eine auf die siebte Arbeitsanweisung folgende achte Arbeitsanweisung umfasst die erste Folge eine Anweisung, die die Funktion an der Speicheradresse "Adresse von bar" mit dem obersten Datenelement des Laufzeitkellers 510 als Parameter aufruft und den Rückgabewert als oberstes Datenelement in dem Laufzeitkeller 510 ablegt. Die Speicheradresse "Adresse von bar" wird während der Übersetzung durch das Speicherzuweisungsmodul 218 festgelegt und ist ein Attribut der achten Anweisung. Als eine auf die achte Arbeitsanweisung folgende neunte Arbeitsanweisung umfasst die erste Folge eine Anweisung, die eine fünfte Konstante mit dem Zahlenwert 333 als Attribut umfasst und in dem Laufzeitkeller 510 ablegt. Als eine auf die neunte Arbeitsanweisung folgende zehnte Arbeitsanweisung umfasst die erste Folge eine Anweisung, die eine sechste Konstante mit dem Zahlenwert 444 als Attribut umfasst und in dem Laufzeitkeller 510 ablegt.

Die erste Arbeitsanweisung, die siebte Arbeitsanweisung und die achte Arbeitsanweisung wurden jeweils auf Grundlage der in der zweiten Programmiersprache *Strukturierter* Text verfassten zweiten Programmcodekomponente des Eingangsprogrammcodes 300 erstellt. Die zweite bis sechste Arbeitsanweisung, die neunte Arbeitsanweisung und die zehnte Arbeitsanweisung wurden jeweils auf Grundlage der in der ersten Programmiersprache *G-Code* verfassten ersten Programmcodekomponente erzeugt.

Als eine auf die zehnte Arbeitsanweisung folgende elfte Arbeitsanweisung umfasst die Folge eine Arbeitsanweisung, welche die Folge der Adressbuchstaben "G", "X", "Y", "M" und "M" als Attribut umfasst. Die elfte Arbeitsanweisung lädt das oberste Datenelement und die nächstunteren vier Datenelemente aus dem Laufzeitkeller 510 und bildet jeweils aus dem Adressbuchstaben "M" und dem obersten Datenelement mit dem Zahlenwert 444, dem Adressbuchstaben "M" und dem nächstunteren Datenelement mit dem Zahlenwert 333, dem Adressbuchstaben "Y" und dem wiederum nächstunteren Datenelement mit dem Rückgabewert des Funktionsaufrufs "bar (222)", dem Adressbuchstaben "X" und dem wiederum nächstunteren Datenelement mit dem Zahlenwert 111 und dem Adressbuchstaben "G" und dem wiederum nächstunteren Datenelement mit dem Zahlenwert 1 Datenpaare für die NC-Anweisungen 330 und schreibt die Datenpaare in der Reihenfolge "G, 1", "X, 111", "Y, [Rückgabewert von bar(222)]", "M, 333", "M, 444" in die Datenstruktur der NC-Anweisungen 330. Schließlich umfasst die elfte Arbeitsanweisung einen Befehl, die erzeugte Datenstruktur der NC-Anweisungen 330 an den NC-Prozessor 234 zu übertragen.

Ein zweiter Programmcodeteil des Eingangsprogrammcodes 300 lautet:

```
 "{
 FOR index := 0 TO 3.1 BY 0.1 DO
     ! G01 X=index Y{SIN(index)+offset_y} F42
     END_FOR
 }"
```

Der zweite Programmcodeteil beginnt mit der ersten Steuersequenz 420. gebildet durch "{" und umfasst eine darauffolgende dritte ST-Zeichensequenz "FOR index := 0 TO 3.1 BY 0.1 DO". Auf die dritte ST-Zeichensequenz folgt in einer neuen Codezeile die dritte Steuersequenz 426, gebildet durch "!", gefolgt von einer dritten G-Zeichensequenz "G01 X=index Y". Nach der dritten G-Zeichensequenz umfasst der zweite Programmcodeteil die erste Steuersequenz 420, gebildet durch "{", eine vierte ST-Zeichensequenz "SIN(index)+offset_y", die zweite Steuersequenz 422, gebildet durch "}", eine vierte G-Zeichensequenz "F42" und die vierte Steuersequenz 426, gebildet durch das Zeilenende. Anschließend umfasst der zweite Programmcodeteil in einer neuen Programmcodezeile eine fünfte ST-Zeichensequenz "END_FOR", in einer neuen Codezeile gefolgt von der zweiten Steuersequenz 422, gebildet durch "}".

Der zweite Programmcodeteil stellt eine FOR-Schleife in der Sprache *Strukturierter Text* dar. Gemäß dem Parameter der FOR-Schleife wird die ST-Variable "index" mit jedem Durchlauf der Schleife vom Wert 0 bis zum Wert 3,1 um jeweils 0,1 inkrementiert. Bei jedem Durchlauf der Schleife wird jeweils eine durch die dritte G-Zeichensequenz, die vierte ST-Zeichensequenz und die vierte G-Zeichensequenz gebildete Anweisung ausgeführt, wobei es sich bei dieser Anweisung gemäß der ersten Einbettungsregel um einen G-Code-Satz handelt. Bei der Ausführung wird jeweils der aktuelle Wert der ST-Variablen "index" herangezogen.

Ein an zweiter Stelle des G-Code-Satzes stehendes G-Code-Wort "X=index" umfasst im Wert gemäß der Variableneinbettungsregel die ST-Variable "index", welche eine Zahl repräsentiert. Ein an dritter Stelle des G-Code Satzes stehendes G-Code-Wort "Y{SIN(index)+offset_y}" umfasst als Wert gemäß der zweiten Einbettungsregel den ST-Ausdruck "SIN(index)+offset_y", welcher zu einer Zahl ausgewertet werden kann.

Entsprechend repräsentiert der zweite Programmteil eine Ableitung des Nichtterminalsymbols "Anweisung". Die Ableitung umfasst das durch "FOR" repräsentierte Grundsymbol "ST-Schlüsselwort-For", eine durch "index := 0" repräsentierte Ableitung des Nichtterminalsymbols "ST-Zuweisung", ein durch "TO" repräsentiertes Grundsymbol "ST-Schlüsselwort-To", eine Ableitung "3.1" des Nichtterminalsymbols "ST-Ausdruck", ein durch "BY" repräsentiertes Grundsymbol "ST-Schlüsselwort-By", eine durch "0.1" repräsentierte Ableitung des Nichtterminalsymbols "ST-Ausdruck", ein durch "DO" repräsentiertes Grundsymbol "ST-Schlüsselwort-Do", eine durch "G01 X=index Y{SIN(index)+offset_y} F42" repräsentierte Ableitung des Nichtterminalsymbols "Anweisung" und ein durch "END_FOR" repräsentiertes Grundsymbol "ST-Schlüsselwort-End-For".

Die Ableitung des Nichtterminalsymbols "Anweisung" umfasst dabei gemäß der ersten Einbettungsregel eine Ableitung des Nichtterminalsymbols "G-Code-Satz". Diese Ableitung des Nichtterminalsymbols "G-Code-Satz" besteht aus einer Folge von vier Ableitungen des Nichtterminalsymbols "G-Code-Wort". Die dritte dieser Ableitungen des Nichtterminalsymbols "G-Code-Wort" umfasst gemäß der zweiten Einbettungsregel eine durch "SIN(index)+offset_y" repräsentierte Ableitung des Nichtterminalsymbols "ST-Ausdruck".

Das Zerlegungsmodul 212 beginnt das Einlesen des zweiten Programmcodeteils im ersten Zustand 404 und wechselt mit Einlesen der ersten Steuersequenz 420, gebildet durch das Zeichen "{", in den zweiten Zustand 406. In dem zweiten Zustand setzt das Zerlegungsmodul 212 die Zeichensequenz "FOR index := 0 TO 3 BY 0.1 DO" in Grundsymbole der zweiten Programmiersprache *Strukturierter Text* um. Nach Einlesen der dritten Steuersequenz 424, gebildet durch das Zeichen "!", wechselt das Zerlegungsmodul 212 in den vierten Zustand 410 und setzt die Zeichensequenz "G01 X=index Y" in Grundsymbole der ersten Programmiersprache *G-Code* um.

Nach Einlesen der ersten Steuersequenz 420, gebildet durch das Zeichen "{", und bis zum Einlesen der zweiten Steuersequenz 422, gebildet durch das Zeichen "}", wechselt das Zerlegungsmodul 212 in den fünften Zustand 412 und setzt die vierte ST-Zeichensequenz "SIN(index)+offset_y" in Grundsymbole der zweiten Programmiersprache *Strukturierter Text* um. Die folgende Zeichensequenz "F42" setzt das Zerlegungsmodul 212 wiederum im vierten Zustand 410 in Grundsymbole der ersten Programmiersprache *G-Code* um. Bei Einlesen der vierten Steuersequenz 426, gebildet durch das Zeilenende nach "F42", gibt das Zerlegungsmodul 212 das Grundsymbol "G-Newline" aus und wechselt zurück in den zweiten Zustand 406. In dem zweiten Zustand 406 setzt das Zerlegungsmodul 212 die Zeichensequenz "END_FOR" in Grundsymbole der zweiten Programmiersprache *Strukturierter Text* um. Mit Einlesen der zweiten Steuersequenz 422 wechselt das Zerlegungsmodul 212 schließlich zurück in den ersten Zustand 404.

Ein aus dem zweiten Programmcodeteil erzeugter zweiter Zwischencodeteil weist eine zweite Folge von Arbeitsanweisungen auf. Die zweite Folge von Arbeitsanweisungen umfasst einen Block von Arbeitsanweisungen, welcher bei jedem Durchlauf der FOR-Schleife abgearbeitet wird. Der Block von Arbeitsanweisungen umfasst eine Arbeitsanweisung, welche bei jedem Durchlauf auf den aktuellen, in dem Speicher 120 abgelegten Wert der ST-Variable "index" zugreift und einen inkrementierten Wert der ST-Variable "index" in den Speicher 120 schreibt. Am Ende des Blocks der Arbeitsanweisungen der FOR-Schleife steht eine als Sprunganweisung ausgebildete Arbeitsanweisung, die einen Sprung zu einer ersten Arbeitsanweisung am Anfang des Blocks auslöst. Die Sprunganweisung setzt den Programmzähler 520 des Ausführungsmoduls 212 zurück auf die erste Arbeitsanweisung des Blocks.

Außerdem umfasst der Block der Arbeitsanweisungen der FOR-Schleife Arbeitsanweisungen, welche den Zahlenwert des Wertes des an dritter Stelle der G-Code-Satzes stehenden G-Code-Wortes mit dem Adressbuchstaben "Y" berechnen, indem der durch die vierte ST-Zeichensequenz dargestellte ST-Ausdruck ausgewertet wird. Dabei findet ein Speicherzugriff auf die Speicheradressen der ST-Variable "index" und der ST-Variable "offset_y" statt

Zur Auswertung der vierten ST-Zeichensequenz umfasst der Block der Arbeitsanweisungen eine Arbeitsanweisung, nach der der Zahlenwert der ST-Variablen "index" aus der dieser Variablen zugeordneten Speicheradresse des Speichers 120 geladen wird. Außerdem umfasst der Block Arbeitsanweisungen, die den Sinus des Zahlenwerts der ST-Variablen "index" mittels der Funktion "SIN" berechnen und die den Zahlenwert der Variable "offset_y" von der entsprechenden Speicheradresse des Speicher 120 laden und zu dem Sinus addieren.

Schließlich umfasst der Block der Arbeitsanweisungen der FOR-Schleife Arbeitsanweisungen, welche den Adressbuschstaben "G" und den Wert "01" den Adressbuchstaben "X" und den für die ST-Variable "index" aus dem Speicher 120 geladenen Zahlenwert, den Adressbuchstaben Y und den bei der Auswertung der vierten ST-Zeichensequenz erhaltenen Zahlenwert, sowie den Adressbuchstaben "F" und den Wert "42" in das die NC-Anweisungen 330 repräsentierende Datenarray schreiben. Die Arbeitsanweisungen zum Berechnen der Werte der G-Code-Wörter und zum Beschreiben des Datenarrays der NC-Anweisungen 330 werden bei jedem Durchlauf der FOR-Schleife widerholt.

Das Steuerungssystem 1 mit den Maschinensteuerungen 200, 201 erlaubt es, zur Steuerung der Maschinen 2, 3 ein Steuerprogramm zu verwenden, dessen Eingangsprogrammcode, wie der Eingangsprogrammcode 300, sowohl in der ersten Programmiersprache, als auch in der zweiten Programmiersprache verfasste Programmcodekomponenten umfasst. Dadurch können bei der Erstellung des Steuerprogramms Sprachelemente der ersten Programmiersprache und Sprachelemente der zweiten Programmiersprache miteinander gemischt werden.

Die Erzeugung des einheitlichen Zwischencodes durch das Übersetzungsmodul 210 der Maschinensteuerung 200 erlaubt eine vollständige syntaktische und statisch-semantische Analyse des gesamten Eingangsprogrammcodes 300 bereits zur Ladezeit des Steuerprogramms. Dadurch können sowohl Fehler in der ersten Programmcodekomponente, als auch Fehler in der zweiten Programmcodekomponente oder Fehler bei der Verbindung der ersten mit der zweiten Programmcodekomponente vor Ausführung des Steuerprogramms durch das Verarbeitungsmodul 230 erkannt werden.

Ein Großteil der Arbeitsanweisungen des aus dem Eingangsprogrammcode 300 erzeugten einheitlichen Zwischencode 230 wird von dem Ausführungsmodul 232 in NC-Anweisungen 330 umgesetzt, welche sich wiederum durch die erste Programmiersprache ausdrücken lassen. Damit kann als NC-Prozessor zur Umsetzung der NC-Anweisungen 230 in die Steuerbefehle 334 ein auf der ersten Programmiersprache basierender Übersetzer eingesetzt werden. Die nebenläufige Erzeugung der weiteren Steuerbefehle 335 durch das Ausführungsmodul 232 ermöglicht es außerdem, zur Steuerung der Maschinen 2, 3 zusätzlich Bewegungsanweisungen und Zusatzkommandos zu verwenden, die nach dem Standard der ersten Programmiersprache nicht durch die NC-Anweisungen 330 darstellbar sind.

Insbesondere kann die erste Programmcodekomponente des Eingangsprogrammcodes 300 in der Programmiersprache *G-Code* und die zweite Programmcodekomponente in der Programmiersprache *Strukturierter Text* verfasst sein. Dadurch kann *G-Code* mit in dieser Sprache nicht verfügbaren Sprachelementen wie benannten Variablen, benannten Funktionen mit formalen Parametern oder Kontrollflussanweisungen aus *Strukturierter Text* erweitert werden. Der gemeinsame Speicher 120 und der gemeinsame Namensraum für die in der ersten und der zweiten Programmcodekomponente verwendeten Variablen ermöglicht die sprachübergreifende Verwendung der Variablen im gesamten Eingangsprogrammcode 300.

Die Kombination von *G-Code* mit *Strukturierter Text* erlaubt es zudem, neben den in *G*-Code zulässigen Datentypen alle in *Strukturierter Text* zulässigen Datentypen zu verwenden. So können für Zahlen neben dem in *G-Code* vorgesehenen Datentyp "LReal" auch die Datentypen "Int", "Real" oder benutzerdefinierte, eingeschränkte Datentypen aus *Strukturierter Text* verwendet werden. Außerdem können in *Strukturierter Text* zulässige Zeichenketten, mehrdimensionale Arrays, Strukturen, Klassen, Schnittstellen (Interfaces) und Zeiger verwendet werden.

### Bezugszeichenliste

- 1: Steuerungssystem
- 2: Maschine
- 3: weitere Maschine
- 10: Benutzerprogrammumgebung
- 15: Echtzeitumgebung
- 20: NC-Kern
- 22: NC-Kanal-Modul
- 24: weiteres NC-Kanal-Modul
- 30: SPS-Modul
- 40: Austauschkanal
- 50: Datenübertragungskanal
- 52: Steuerbefehlkanal
- 54: weiterer Steuerbefehlkanal
- 56: Statusmeldungskanal
- 58: Serversteuerkanal
- 60: Sollwertkanal
- 62: weiterer Sollwertkanal

- 100: Servermodul
- 110: Serversteuerungsmodul
- 112: Speicherzugriffskanal
- 113: Serverdatenkanal
- 114: Kontrollkanal
- 115: weiterer Kontrollkanal
- 120: Speicher
- 122: gemeinsamer Speicherbereich
- 124: lokaler Speicherbereich
- 126: weiterer lokaler Speicherbereich

- 200: Maschinensteuerung
- 201: weitere Maschinensteuerung
- 210: Übersetzungsmodul
- 212: Zerlegungsmodul
- 214: Parsermodul
- 216: Analysemodul
- 218: Zwischencodeerzeugungsmodul
- 219: Speicherzuweisungsmodul
- 230: Verarbeitungsmodul
- 232: Ausführungsmodul
- 234: NC-Prozessor
- 236: Sortiermodul
- 238: NC-Kern-Adaptermodul

- 300: Eingangsprogrammcode
- 308: Grundsymbole
- 314: einheitlicher Strukturbaum
- 320: Zwischencode
- 330: NC-Anweisung
- 332: Statusinformation
- 334: Steuerbefehl
- 335: weiterer Steuerbefehl
- 336: geordnete Steuerbefehle
- 338: kernspezifische Steuerbefehle

- 400: Zustandsübergangsdiagramm
- 402: Startzustand
- 404: erster Zustand
- 406: zweiter Zustand
- 408: dritter Zustand
- 410: vierter Zustand
- 412: fünfter Zustand
- 420: erste Steuersequenz
- 422: zweite Steuersequenz
- 424: dritte Steuersequenz
- 426: vierte Steuersequenz

- 500: Programmspeicher
- 501: Arbeitsanweisung
- 502: erste Arbeitsanweisung
- 510: Laufzeitkeller
- 511: Datenelement
- 512: oberstes Datenelement
- 520: Programmzähler
- 525: Stackzeiger

## Patentansprüche

1. Übersetzungsmodul (210) für eine Maschinensteuerung (200),
wobei das Übersetzungsmodul (210) dazu ausgebildet ist, einen Eingangsprogrammcode (300) eines Steuerprogramms zu verarbeiten und aus diesem einen einheitlichen Zwischencode (320) mit Arbeitsanweisungen zur Ausführung durch die Maschinensteuerung (200) zu erzeugen,
wobei der Eingangsprogrammcode (300) eine erste Programmcodekomponente und eine zweite Programmcodekomponente umfasst,
wobei die erste Programmcodekomponente in einer ersten Programmiersprache und die zweite Programmcodekomponente in einer zweiten Programmiersprache abgefasst ist,
wobei die Arbeitsanweisungen des einheitlichen Zwischencodes (320) eine erste Arbeitsanweisung und eine zweite Arbeitsanweisung umfassen, und
wobei die erste Arbeitsanweisung auf Grundlage der ersten Programmcodekomponente und die zweite Arbeitsanweisung auf Grundlage der zweiten Programmcodekomponente erzeugt wird,
**dadurch gekennzeichnet, dass** das Übersetzungsmodul (210) ein Zerlegungsmodul (212) umfasst, welches dazu ausgebildet ist, den Eingangsprogrammcode (300) einzulesen und in einen Datenstrom von Grundsymbolen (308) umzusetzen,
wobei das Übersetzungsmodul (210) ein Parsermodul (214) umfasst, welches dazu ausgebildet ist, aus Grundsymbolen (308) des Eingangsprogrammcodes (300) einen einheitlichen Strukturbaum (314) des Steuerprogramms zu erstellen,
wobei das Parsermodul (214) dazu ausgebildet ist, eine syntaktische Überprüfung des Eingangsprogrammcodes (300) anhand einer Kombinierten Grammatik auszuführen,
wobei die Kombinierte Grammatik Regeln einer ersten Grammatik der ersten Programmiersprache und Regeln einer zweiten Grammatik der zweiten Programmiersprache umfasst,
wobei die Kombinierte Grammatik eine Einbettungsregel oder mehrere Einbettungsregeln umfasst,
wobei die Einbettungsregeln beschreiben, auf welche Art Grundsymbole oder Nichtterminalsymbole der ersten Programmiersprache und Grundsymbole oder Nichtterminalsymbole der zweiten Programmiersprache miteinander kombiniert werden können.

2. Übersetzungsmodul (210) gemäß Anspruch 1,
wobei die erste Programmiersprache G-Code und die zweite Programmiersprache Strukturierter Text ist.

3. Übersetzungsmodul (210) gemäß einem der vorhergehenden Ansprüche,
wobei eine Einbettungsregel eine Ableitung eines Symbols der zweiten Programmiersprache beschreibt, in der ein Symbol der ersten Programmiersprache verwendet wird.

4. Übersetzungsmodul (210) gemäß Anspruch 2 und 3,
wobei die Einbettungsregel festlegt, dass ein Nichtterminalsymbol "Anweisung" der zweiten Grammatik durch ein nach den Regeln der ersten Grammatik gebildetes Nichtterminalsymbol "G-Code-Satz" ersetzt werden kann.

5. Übersetzungsmodul (210) gemäß einem der vorhergehenden Ansprüche,
wobei eine weitere Einbettungsregel eine Ableitung eines Symbols der ersten Programmiersprache beschreibt, in der ein Symbol der zweiten Programmiersprache verwendet wird.

6. Übersetzungsmodul (210) gemäß Anspruch 2 und 5,
wobei die weitere Einbettungsregel festlegt, dass eine Ableitung des Nichtterminalsymbols "G-Code-Wort" aus einem Grundsymbol "Adressbuchstabe" der ersten Programmiersprache und einem der zweiten Programmiersprache zugeordneten Nichtterminalsymbol "ST-Ausdruck" besteht.

7. Übersetzungsmodul (210) gemäß Anspruch 2,
wobei der Eingangsprogrammcode (300) ein G-Code-Wort mit einem Adressbuchstaben und einem Wert umfasst,
wobei die erste Programmcodekomponente den Adressbuchstaben und den Wert umfasst, und
wobei der Wert eine ST-Variable umfasst.

8. Übersetzungsmodul (210) gemäß einem der vorhergehenden Ansprüche,
wobei das Übersetzungsmodul (210) ein Zerlegungsmodul (212) umfasst,
wobei das Zerlegungsmodul (212) dazu ausgebildet ist, die erste Programmcodekomponente und die zweite Programmcodekomponente aus dem Eingangsprogrammcode (300) einzulesen und in die Grundsymbole (308) umzusetzen,
wobei das Zerlegungsmodul (212) dazu ausgebildet ist, einen ersten Zustand (404) und einen zweiten Zustand (406) einzunehmen,
wobei das Zerlegungsmodul (212) in dem ersten Zustand (404) die erste Programmcodekomponente in Grundsymbole der ersten Programmiersprache umsetzt,
wobei das Zerlegungsmodul (212) in dem zweiten Zustand (406) die zweite Programmcodekomponente in Grundsymbole der zweiten Programmiersprache umsetzt.

9. Übersetzungsmodul (210) nach einem der vorhergehenden Ansprüche,
wobei das Übersetzungsmodul (210) ein Analysemodul (216) umfasst,
wobei das Analysemodul (216) dazu ausgebildet ist, eine semantische Überprüfung des Eingangsprogrammcodes (300) anhand einer Kombinierten Semantik auszuführen,
wobei die Kombinierte Semantik Vorgaben einer ersten Semantik der ersten Programmiersprache und Vorgaben einer zweiten Semantik der zweiten Programmiersprache umfasst.

10. Übersetzungsmodul (210) nach einem der vorhergehenden Ansprüche,
wobei das Übersetzungsmodul (210) ein Speicherzuweisungsmodul (218) umfasst,
wobei das Speicherzuweisungsmodul (218) dazu ausgebildet ist, einer in dem Eingangsprogrammcode (300) enthaltenen Variablen eine Speicheradresse eines Speichers (120) eines die Maschinensteuerung (200) umfassenden Steuerungssystems (1) zuzuweisen.

11. Steuerungssystem (1) zur Steuerung einer Maschine (2) mit einer Maschinensteuerung (200),
wobei die Maschinensteuerung (200) ein Übersetzungsmodul (210) gemäß einem der Ansprüche 1 bis 10 und ein Verarbeitungsmodul (230) umfasst,
wobei das Verarbeitungsmodul (230) dazu ausgebildet ist, den einheitlichen Zwischencode (320) mit den Arbeitsanweisungen zu verarbeiten und auf Grundlage einer der Arbeitsanweisungen einen Steuerbefehl (334) zur Steuerung einer an die Maschinensteuerung (200) angeschlossenen Maschine (2) zu erzeugen,
wobei das Verarbeitungsmodul (230) ein Ausführungsmodul (232) und einen NC-Prozessor (234) umfasst,
wobei das Ausführungsmodul (232) dazu ausgebildet ist, auf Grundlage der Arbeitsanweisung des einheitlichen Zwischencodes (320) eine NC-Anweisung (330) zu erzeugen und an den NC-Prozessor (234) zu übertragen,
wobei der NC-Prozessor (234) dazu ausgebildet ist, auf Grundlage der NC-Anweisung (330) den Steuerbefehl (334) zu erzeugen.

12. Steuerungssystem (1) nach Anspruch 11,
wobei das Ausführungsmodul (232) dazu ausgebildet ist, einen weiteren Steuerbefehl (335) zur Steuerung der Maschine (2) zu erzeugen,
wobei das Verarbeitungsmodul (230) ein Sortiermodul (236) umfasst, welches dazu ausgebildet ist, den Steuerbefehl (334) und den weiteren Steuerbefehl (335) zu empfangen,
wobei das Sortiermodul (236) dazu ausgebildet ist, den Steuerbefehl (334) und den weiteren Steuerbefehl (335) als in einer Ansteuerreihenfolge geordnete Steuerbefehle (336) auszugeben.

13. Steuerungssystem (1) nach einem der Ansprüche 11 bis 12,
wobei das Ausführungsmodul (232) dazu ausgebildet ist, eine Statusinformation (332) über einen Status des NC-Prozessors (234) von dem NC-Prozessor (234) zu empfangen.

14. Steuerungssystem (1) nach einem der Ansprüche 11 bis 13,
wobei das Steuerungssystem (1) einen NC-Kern (20) und einen Sollwertkanal (60) umfasst,
wobei der NC-Kern (20) dazu ausgebildet ist, die Steuerbefehle (338) des Verarbeitungsmoduls (230) zu empfangen, auf Grundlage der Steuerbefehle (338) Sollwerte für die Maschine (2) zu erzeugen und die Sollwerte über den Sollwertkanal (60) an die Maschine (2) zu übertragen,
wobei die Maschinensteuerung (200) einen Teil einer Benutzerprogrammumgebung (10) des Steuerungssystems (1) und der NC-Kern (20) einen Teil einer Echtzeitumgebung (15) des Steuerungssystems (1) bildet.

15. Steuerungssystem (1) nach einem der Ansprüche 11 bis 14,
wobei das Steuerungssystem (1) einen Speicher (120) und ein SPS-Modul (30) umfasst,
wobei die Maschinensteuerung (200) dazu ausgebildet ist, Daten in den Speicher (120) zu schreiben und/oder aus dem Speicher (120) auszulesen,
wobei das SPS-Modul (30) dazu ausgebildet ist, die Verarbeitung des Eingangsprogrammcodes (300) des Steuerprogramms durch die Maschinensteuerung (200) zu steuern,
wobei das SPS-Modul (30) dazu ausgebildet ist, Daten mit dem Speicher (120) auszutauschen.

## Claims

1. Translation module (210) for a machine control (200),
wherein the translation module (210) is configured to process an input program code (300) of a control program and to produce therefrom a uniform intermediate code (320) having work instructions for execution by the machine control (200),
wherein the input program code (300) comprises a first program code component and a second program code component,
wherein the first program code component is written in a first programming language and the second program code component is written in a second programming language, wherein the work instructions of the uniform intermediate code (320) comprise a first work instruction and a second work instruction, and
wherein the first work instruction is produced on the basis of the first program code component and the second work instruction is produced on the basis of the second program code component,
**characterized in that** the translation module (210) comprises a resolution module (212) that is configured to read in the input program code (300) and to convert it into a data stream of basic symbols (308),
wherein the translation module (210) comprises a parser module (214) that is configured to create a uniform structure tree (314) of the control program from basic symbols (308) of the input program code (300),
wherein the parser module (214) is configured to execute a syntactic check on the input program code (300) on the basis of a combined grammar, wherein the combined grammar comprises rules of a first grammar of the first programming language and rules of a second grammar of the second programming language,
wherein the combined grammar comprises one embedding rule or a plurality of embedding rules,
wherein the embedding rules describe the manner in which basic symbols or nonterminal symbols of the first programming language and basic symbols or nonterminal symbols of the second programming language can be combined with one another.

2. Translation module (210) according to Claim 1,
wherein the first programming language is G code and the second programming language is structured text.

3. Translation module (210) according to either of the preceding claims, wherein an embedding rule describes a derivation of a symbol of the second programming language in which a symbol of the first programming language is used.

4. Translation module (210) according to Claims 2 and 3, wherein the embedding rule stipulates that a nonterminal symbol "instruction" of the second grammar can be replaced by a nonterminal symbol "G code sentence" that is formed according to the rules of the first grammar.

5. Translation module (210) according to one of the preceding claims, wherein a further embedding rule describes a derivation of a symbol of the first programming language in which a symbol of the second programming language is used.

6. Translation module (210) according to Claims 2 and 5, wherein the further embedding rule stipulates that a derivation of the nonterminal symbol "G code word" consists of a basic symbol "address letter" of the first programming language and of a nonterminal symbol "ST expression" that is associated with the second programming language.

7. Translation module (210) according to Claim 2,
wherein the input program code (300) comprises a G code word having an address letter and a value,
wherein the first program code component comprises the address letter and the value, and
wherein the value comprises an ST variable.

8. Translation module (210) according to any one of the preceding claims,
wherein the translation module (210) comprises a resolution module (212),
wherein the resolution module (212) is configured to read in the first program code component and the second program code component from the input program code (300) and to convert them into the basic symbols (308),
wherein the resolution module (212) is configured to adopt a first state (404) and a second state (406),
wherein the resolution module (212) in the first state (404) converts the first program code component into basic symbols of the first programming language,
wherein the resolution module (212) in the second state (406) converts the second program code component into basic symbols of the second programming language.

9. Translation module (210) according to any one of the preceding claims,
wherein the translation module (210) comprises an analysis module (216),
wherein the analysis module (216) is configured to execute a semantic check on the input program code (300) on the basis of a combined semantic system,
wherein the combined semantic system comprises stipulations of a first semantic system of the first programming language and stipulations of a second semantic system of the second programming language.

10. Translation module (210) according to any one of the preceding claims,
wherein the translation module (210) comprises a memory allocation module (218),
wherein the memory allocation module (218) is configured to allocate a memory address of a memory (120) of a control system (1) comprising the machine control (200) to a variable included in the input program code (300).

11. Control system (1) for controlling a machine (2) having a machine control (200),
wherein the machine control (200) comprises a translation module (210) according to any one of Claims 1 to 10 and a processing module (230),
wherein the processing module (230) is configured to process the uniform intermediate code (320) having the work instructions and to take one of the work instructions as a basis for producing a control command (334) for controlling a machine (2) connected to the machine control (200),
wherein the processing module (230) comprises an execution module (232) and an NC processor (234),
wherein the execution module (232) is configured to take the work instruction of the uniform intermediate code (320) as a basis for producing an NC instruction (330) and to transfer the latter to the NC processor (234), wherein the NC processor (234) is configured to take the NC instruction (330) as a basis for producing the control command (334).

12. Control system (1) according to Claim 11,
wherein the execution module (232) is configured to produce a further control command (335) for controlling the machine (2),
wherein the processing module (230) comprises a sorting module (236) that is configured to receive the control command (334) and the further control command (335),
wherein the sorting module (236) is configured to output the control command (334) and the further control command (335) as control commands (336) organized in an order of actuation.

13. Control system (1) according to either one of Claims 11 and 12,
wherein the execution module (232) is configured to receive a piece of status information (332) about a status of the NC processor (234) from the NC processor (234) .

14. Control system (1) according to any one of Claims 11 to 13,
wherein the control system (1) comprises an NC core (20) and a setpoint value channel (60),
wherein the NC core (20) is configured to receive the control commands (338) of the processing module (230), to take the control commands (338) as a basis for producing setpoint values for the machine (2) and to transfer the setpoint values to the machine (2) via the setpoint value channel (60),
wherein the machine control (200) forms part of a user program environment (10) of the control system (1) and the NC core (20) forms part of a realtime environment (15) of the control system (1).

15. Control system (1) according to any one of Claims 11 to 14,
wherein the control system (1) comprises a memory (120) and a PLC module (30),
wherein the machine control (200) is configured to write data to the memory (120) and/or to read data from the memory (120),
wherein the PLC module (30) is configured to control the processing of the input program code (300) of the control program by the machine control (200),
wherein the PLC module (30) is configured to interchange data with the memory (120).

## Revendications

1. Module de traduction (210) destiné à une commande de machine (200),
dans lequel le module de traduction (210) est conçu pour traiter un code de programme d'entrée (300) d'un programme de commande et pour générer à partir de celui-ci un code intermédiaire uniforme (320) comportant des instructions de travail destinées à être exécutées par la commande de machine (200),
dans lequel le code de programme d'entrée (300) comprend un premier composant de code de programme et un second composant de code de programme,
dans lequel le premier composant de code de programme est écrit dans un premier langage de programmation et le second composant de code de programme est écrit dans un second langage de programmation,
dans lequel les instructions de travail du code intermédiaire uniforme (320) comprennent une première instruction de travail et une seconde instruction de travail, et
dans lequel la première instruction de travail est générée sur la base du premier composant de code de programme et la seconde instruction de travail est générée sur la base du second composant de code de programme,
**caractérisé en ce que**
le module de traduction (210) comprend un module de décomposition (212) conçu pour lire le code de programme d'entrée (300) et le convertir en un flux de données de symboles de base (308),
dans lequel le module de traduction (210) comprend un module analyseur syntaxique (214) qui est conçu pour créer une arborescence de structure uniforme (314) du programme de commande à partir de symboles de base (308) du code de programme d'entrée (300),
dans lequel le module analyseur syntaxique (214) est conçu pour effectuer une vérification syntaxique du code de programme d'entrée (300) sur la base d'une grammaire combinée,
dans lequel la grammaire combinée comprend des règles d'une première grammaire du premier langage de programmation et des règles d'une seconde grammaire du second langage de programmation,
dans lequel la grammaire combinée comprend une ou plusieurs règles d'incorporation,
dans lequel les règles d'incorporation décrivent la manière dont des symboles de base ou des symboles non terminaux du premier langage de programmation et des symboles de base ou des symboles non terminaux du second langage de programmation peuvent être combinés entre eux.

2. Module de traduction (210) selon la revendication 1, dans lequel le premier langage de programmation est le code G et le second langage de programmation est un texte structuré.

3. Module de traduction (210) selon l'une des revendications précédentes,
dans lequel une règle d'incorporation décrit une dérivation d'un symbole du second langage de programmation dans lequel un symbole du premier langage de programmation est utilisé.

4. Module de traduction (210) selon les revendications 2 et 3, dans lequel la règle d'incorporation spécifie qu'un symbole non terminal "instruction" de la seconde grammaire peut être remplacé par un symbole non terminal "phrase en code G" créé selon les règles de la première grammaire.

5. Module de traduction (210) selon l'une des revendications précédentes,
dans lequel une autre règle d'incorporation décrit une dérivation d'un symbole du premier langage de programmation dans lequel un symbole du second langage de programmation est utilisé.

6. Module de traduction (210) selon les revendications 2 et 5, dans lequel l'autre règle d'incorporation établit qu'une dérivation du symbole non terminal "mot de code G" est constituée d'un symbole de base "lettre d'adresse" du premier langage de programmation et d'un symbole non terminal "expression ST" associé au second langage de programmation.

7. Module de traduction (210) selon la revendication 2,
dans lequel le code de programme d'entrée (300) comprend un mot de code G ayant une lettre d'adresse et une valeur,
dans lequel le premier composant de code de programme comprend la lettre d'adresse et la valeur, et
dans lequel la valeur comprend une variable ST.

8. Module de traduction (210) selon l'une des revendications précédentes,
dans lequel le module de traduction (210) comprend un module de décomposition (212),
dans lequel le module de décomposition (212) est conçu pour lire le premier composant de code de programme et le second composant de code de programme depuis le code de programme d'entrée (300) et les convertir en les symboles de base (308),
dans lequel le module de décomposition (212) est conçu pour passer dans un premier état (404) et dans un second état (406),
dans lequel, dans le premier état (404), le module de décomposition (212) convertit le premier composant de code de programme en des symboles de base du premier langage de programmation,
dans lequel, dans le second état (406), le module de décomposition (212) convertit le second composant de code de programme en des symboles de base du second langage de programmation.

9. Module de traduction (210) selon l'une des revendications précédentes,
dans lequel le module de traduction (210) comprend un module d'analyse (216),
dans lequel le module d'analyse (216) est conçu pour effectuer une vérification sémantique du code de programme d'entrée (300) sur la base d'une sémantique combinée,
dans lequel la sémantique combinée comprend des définitions d'une première sémantique du premier langage de programmation et des définitions d'une seconde sémantique du second langage de programmation.

10. Module de traduction (210) selon l'une des revendications précédentes,
dans lequel le module de traduction (210) comprend un module d'allocation de mémoire (218),
dans lequel le module d'allocation de mémoire (218) est conçu pour allouer à une variable contenue dans le code de programme d'entrée (300) une adresse mémoire d'une mémoire (120) d'un système de commande (1) comprenant la commande de machine (200).

11. Système de commande (1) destiné à commander une machine (2) au moyen d'une commande de machine (200), dans lequel la commande de machine (200) comprend un module de traduction (210) selon l'une des revendications 1 à 10 et un module de traitement (230),
dans lequel le module de traitement (230) est conçu pour traiter le code intermédiaire uniforme (320) au moyen des instructions de travail et pour générer un ordre de commande (334) sur la base de l'une des instructions de travail pour commander une machine (2) reliée à la commande de machine (200),
dans lequel le module de traitement (230) comprend un module d'exécution (232) et un processeur NC (234),
dans lequel le module d'exécution (232) est conçu pour générer et transmettre au processeur NC (234) une instruction NC (330) sur la base de l'instruction de travail du code intermédiaire uniforme (320),
dans lequel le processeur NC (234) est conçu pour générer l'ordre de commande (334) sur la base de l'instruction NC (330).

12. Système de commande (1) selon la revendication 11,
dans lequel le module d'exécution (232) est conçu pour générer une autre instruction de commande (335) destinée à la commande de machine (2),
dans lequel le module de traitement (230) comprend un module de tri (236) conçu pour recevoir l'ordre de commande (334) et l'autre ordre de commande (335),
dans lequel le module de tri (236) est conçu pour délivrer l'ordre de commande (334) et l'autre ordre de commande (335) en tant qu'ordres de commande (336) ordonnés selon une séquence de commande.

13. Système de commande (1) selon l'une des revendications 11 à 12,
dans lequel le module d'exécution (232) est conçu pour recevoir en provenance du processeur NC (234) des informations d'état (332) concernant un état du processeur NC (234).

14. Système de commande (1) selon l'une des revendications 11 à 13,
dans lequel le système de commande (1) comprend un noyau NC (20) et un canal de valeurs de consigne (60),
dans lequel le noyau NC (20) est conçu pour recevoir les ordres de commande (338) du module de traitement (230), pour générer des valeurs de consigne destinées à la machine (2) sur la base des ordres de commande (338) et pour transmettre les valeurs de consigne par l'intermédiaire du canal de valeurs de consigne (60) à la machine (2),
dans lequel la commande de machine (200) fait partie d'un environnement de programmation d'utilisateur (10) du système de commande (1) et le noyau NC (20) fait partie d'un environnement temps réel (15) du système de commande (1) .

15. Système de commande (1) selon l'une des revendications 11 à 14,
dans lequel le système de commande (1) comprend une mémoire (120) et un module SPS (30),
dans lequel la commande de machine (200) est conçue pour écrire des données dans la mémoire (120) et/ou pour lire des données depuis la mémoire (120),
dans lequel le module SPS (30) est conçu pour commander le traitement du code de programme d'entrée (300) du programme de commande par l'intermédiaire de la commande de machine (200),
dans lequel le module SPS (30) est conçu pour échanger des données avec la mémoire (120).
